(19)

Europäisches
Patentamt

European
Patent Office

Office européen
des brevets

(11) **EP 4 726 456 A1**

(12) **EUROPEAN PATENT APPLICATION**
published in accordance with Art. 153(4) EPC

(43) Date of publication:
**15.04.2026 Bulletin 2026/16**

(21) Application number: **24926683.4**

(22) Date of filing: **30.08.2024**

(51) International Patent Classification (IPC):
*G02B 13/16* (2006.01)    *G02B 17/00* (2006.01)
*G02B 15/00* (2006.01)    *H04N 23/00* (2023.01)

(86) International application number:
**PCT/CN2024/116140**

(87) International publication number:
**WO 2025/179816 (04.09.2025 Gazette 2025/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2024   CN 202410224770
28.06.2024   CN 202410875013**

(71) Applicant: **Huawei Technologies Co., Ltd.
Shenzhen, Guangdong 518129 (CN)**

(72) Inventors:
• YE, Haishui
  **Shenzhen, Guangdong 518129 (CN)**
• WANG, Wei
  **Shenzhen, Guangdong 518129 (CN)**
• WANG, Heng
  **Shenzhen, Guangdong 518129 (CN)**
• TANG, Wei
  **Shenzhen, Guangdong 518129 (CN)**

(74) Representative: **Grünecker Patent- und
Rechtsanwälte
PartG mbB
Leopoldstraße 4
80802 München (DE)**

(54) **OPTICAL LENS, CAMERA MODULE AND ELECTRONIC DEVICE**

(57)    This application relates to the field of optical lens technologies, and provides an optical lens, a camera module, and an electronic device, to resolve a problem in a conventional technology that a thickness of an electronic device is relatively large because a camera module occupies large space. The optical lens includes a front lens group, a first turning element, a first rear lens group, and a second rear lens group. The front lens group includes a first front lens group and a second front lens group. When the first turning element is at a first position, the first turning element is located on an image side of the first front lens group, and is configured to reflect an emergent light beam of the first front lens group to the first rear lens group; and the optical lens has a first effective focal length. When the first turning element is at a second position, the first turning element is located on an image side of the second front lens group, and is configured to reflect an emergent light beam of the second front lens group to the first rear lens group; and the optical lens has a second effective focal length $F_2$, and the second effective focal length is greater than the first effective focal length $F_1$. This application may be applied to an electronic device such as a mobile phone.

FIG. 6

## Description

This application claims priorities to Chinese Patent Application No. 202410224770.8, filed with the China National Intellectual Property Administration on February 28, 2024 and entitled "MOTOR, CAMERA MODULE, AND ELECTRONIC DEVICE", and to Chinese Patent Application No. 202410875013.7, filed with the China National Intellectual Property Administration on June 28, 2024 and entitled "OPTICAL LENS, CAMERA MODULE, AND ELECTRONIC DEVICE", both of which are incorporated herein by reference in their entireties.

## TECHNICAL FIELD

This application relates to the field of optical lens technologies, and in particular, to an optical lens, a camera module, and an electronic device.

## BACKGROUND

Currently, a camera module has become one of important components of an electronic device such as a mobile phone or a tablet computer. A required photo can be easily obtained by using the camera module of the electronic device, to satisfy a photographing requirement of people. As the electronic device tends to be lighter and thinner, space inside the electronic device needs to be saved while high imaging performance of the camera module is implemented. Therefore, how to design a camera module to reduce occupation of internal space of an electronic device has become an important topic in the industry.

## SUMMARY

Embodiments of this application provide an optical lens, a camera module, and an electronic device, to resolve a problem in a conventional technology that a thickness of an electronic device is relatively large because a camera module occupies large space.

To achieve the foregoing objectives, the following technical solutions are used in embodiments of this application.

According to a first aspect, an embodiment of this application provides an optical lens, including a front lens group G0, a first turning element, a first rear lens group G1, and a second rear lens group G2 that are arranged in a direction from an object side to an image side. The front lens group G0 includes a first front lens group G01 and a second front lens group G02 that are arranged in a first direction, the first direction is parallel to an optical axis of the first rear lens group G1, and the first turning element is capable of moving between a first position and a second position in the first direction. When the first turning element is at the first position, the first turning element is located on an image side of the first front lens group G01, the first turning element is configured to reflect an emergent light beam of the first front lens group G01 to the first rear lens group G1, and the optical lens has a first effective focal length $F_1$. When the first turning element is at the second position, the first turning element is located on an image side of the second front lens group G02, the first turning element is configured to reflect an emergent light beam of the second front lens group G02 to the first rear lens group G1, the optical lens has a second effective focal length $F_2$, and the second effective focal length $F_2$ is greater than the first effective focal length $F_1$.

According to the optical lens in this embodiment of this application, the first turning element moves in the first direction, and the first turning element may separately move to the image sides of the first front lens group G01 and the second front lens group G02, so that optical systems having different effective focal lengths can be formed, thereby implementing zooming of the optical lens. In a process in which the first turning element moves in the first direction, space occupied in a light entry direction of the optical lens is not additionally increased, thereby reducing space occupied by a camera module in a thickness direction of an electronic device, and further implementing lightening and thinning of the electronic device.

In some embodiments of the first aspect, a moving stroke L of the first turning element between the first position and the second position satisfies: $L \leq 23$ mm. In this way, the moving stroke L of the first turning element can be prevented from being excessively large, so that an actuator of the first turning element can be designed to be more compact, thereby making a structure of the camera module more compact.

In some embodiments of the first aspect, when the first turning element is at the first position, the first front lens group G01, the first turning element, the first rear lens group G1, and the second rear lens group G2 form a first optical system, and a total track length of the first optical system is $TTL_1$. When the first turning element is at the second position, the second front lens group G02, the first turning element, the first rear lens group G1, and the second rear lens group G2 form a second optical system, and a total track length of the second optical system is $TTL_2$. When the first turning element moves between the first position and the second position, an image plane position of the optical lens remains unchanged. $TTL_1$ and $TTL_2$ satisfy: $TTL_2 - TTL_1 \leq 23$ mm. By properly setting a difference between the total track lengths of the first optical system and the second optical system, the moving stroke L of the first turning element can be prevented from being excessively large, so that an actuator of the first turning element can be designed to be more compact, thereby making a structure of the camera module more compact.

In some embodiments of the first aspect, an effective focal length $f_{g01}$ of the first front lens group G01, an effective focal length $f_{g02}$ of the second front lens group G02, and an effective focal length $f_{g1}$ of the first rear lens group G1 satisfy: $TTL_2-TTL_1=|f_{g02}-f_{g01}+k\cdot f_{g1}|$, where k satisfies: $0\leq|k|<1$. In this way, the moving stroke L of the first turning element can be prevented from being excessively large, thereby making a structure of the camera module more compact, and reducing space occupied by the camera module.

In some embodiments of the first aspect, the effective focal length $f_{g01}$ of the first front lens group G01, the effective focal length $f_{g02}$ of the second front lens group G02, a combined focal length $f_{g011}$ of the first front lens group G01 and the first rear lens group G1, and a combined focal length $f_{g021}$ of the second front lens group G02 and the first rear lens group G1 satisfy: $k=[(\beta_1-1)^2/\beta_1]-[(\beta_2-1)^2/\beta_2]$; $\beta_1=f_{g011}/f_{g01}$; and $\beta_2=f_{g021}/f_{g02}$. In this way, a value of the coefficient k can be controlled by properly setting values of the first focal length allocation ratio β1 and the second focal length allocation ratio β2, so that a value of the moving stroke L of the first turning element can be controlled.

In some embodiments of the first aspect, k satisfies: $0.28\leq k\leq0.46$. In this way, space occupied by the camera module can be reduced, and costs of the camera module can be reduced.

In some embodiments of the first aspect, k=0. In this way, a value of the moving stroke L of the first turning element can be controlled by properly setting a difference between the effective focal length $f_{g01}$ of the first front lens group G01 and the effective focal length $f_{g02}$ of the second front lens group G02.

In some embodiments of the first aspect, k is approximately equal to 0, that is, $0<k\leq0.005$. In this way, a value of the moving stroke L of the first turning element can be controlled by properly setting a difference between the effective focal length $f_{g01}$ of the first front lens group G01 and the effective focal length $f_{g02}$ of the second front lens group G02.

In some embodiments of the first aspect, the effective focal length $f_{g01}$ of the first front lens group G01 and the effective focal length $f_{g02}$ of the second front lens group G02 satisfy: $4.5\ mm\leq|f_{g02}-f_{g01}|\leq12.9\ mm$. In this way, space occupied by the camera module can be reduced, and costs of the camera module can be reduced.

In some embodiments of the first aspect, $TTL_1$ and $TTL_2$ satisfy: $TTL_2-TTL_1\geq8.1\ mm$. In this way, a difference between effective focal lengths of the first optical system and the second optical system can be prevented from being excessively small, thereby improving a zoom ratio (or a zoom range) of the optical lens.

In some embodiments of the first aspect, the effective focal length $f_{g02}$ of the second front lens group G02 is greater than the effective focal length $f_{g01}$ of the first front lens group G01. In this way, the optical lens can obtain a relatively large zoom range, thereby improving zoom performance of the optical lens.

In some embodiments of the first aspect, a light shielding apparatus is disposed on an object side of the first turning element; when the first turning element is at the first position, the light shielding apparatus is configured to shield a light beam emitted to the image side of the second front lens group G02; and when the first turning element is at the second position, the light shielding apparatus is configured to shield a light beam emitted to the image side of the first front lens group G01. In this way, stray light can be prevented from being generated to affect imaging quality of the optical lens.

In some embodiments of the first aspect, the light shielding apparatus includes a first variable aperture stop and a second variable aperture stop, the first variable aperture stop is disposed on an object side or the image side of the first front lens group G01, and the second variable aperture stop is disposed on an object side or the image side of the second front lens group G02. In this way, when the first turning element is at the first position or the second position, the light shielding apparatus can accurately control luminous flux of the optical lens, thereby improving imaging quality of the optical lens.

In some embodiments of the first aspect, the light shielding apparatus includes a first variable aperture stop and a second variable aperture stop, the first variable aperture stop is disposed between lenses of the first front lens group G01, and the second variable aperture stop is disposed between lenses of the second front lens group G02. In this way, when the first turning element is at the first position or the second position, the light shielding apparatus can accurately control luminous flux of the optical lens, thereby improving imaging quality of the optical lens.

In some embodiments of the first aspect, the light shielding apparatus includes a shielding plate; the shielding plate is disposed on an image side of the front lens group G0 and is capable of moving relative to the front lens group G0; when the first turning element is at the first position, the shielding plate moves to the image side of the second front lens group G02; and when the first turning element is at the second position, the shielding plate moves to the image side of the first front lens group G01. In this way, a structure of the light shielding apparatus is simplified, thereby reducing costs of the optical lens.

In some embodiments of the first aspect, the light shielding apparatus includes a shielding plate; the shielding plate is disposed on an object side of the front lens group G0 and is capable of moving relative to the front lens group G0; when the first turning element is at the first position, the shielding plate moves to an object side of the second front lens group G02; and when the first turning element is at the second position, the shielding plate moves to an object side of the first front lens group G01. In this way, a structure of the light shielding apparatus is simplified, thereby reducing costs of the optical lens.

In some embodiments of the first aspect, the first rear lens group G1 is a movable lens group and is capable of moving relative to the front lens group G0 in the first direction, and the second rear lens group G2 is a fixed lens group and is fixed relative to the front lens group G0 in the first direction. In this way, when the first turning element is at the first position or the second position, the first rear lens group G1 may move in the first direction, to implement precise focusing on an image plane IMA.

In some embodiments of the first aspect, when the first turning element is at the first position, the effective focal length $f_{g01}$ of the first front lens group G01, the combined focal length $f_{g011}$ of the first front lens group G01 and the first rear lens group G1, and the first effective focal length $F_1$ satisfy: $\xi_1=[1-\beta_1^2]\alpha_1^2$, $\beta_1=f_{g011}/f_{g01}$, $\alpha_1=F_1/f_{g011}$, and $0<\xi_1\leq3$. This can reduce a focusing stroke of the first rear lens group G1, thereby reducing a volume of a focus motor. This can also avoid an excessively short focusing stroke of the first rear lens group G1, thereby reducing a precision requirement for the focus motor.

In some embodiments of the first aspect, when the first turning element is at the second position, the effective focal length $f_{g02}$ of the second front lens group G02, the combined focal length $f_{g021}$ of the second front lens group G02 and the first rear lens group G1, and the second effective focal length $F_2$ satisfy: $\xi_2=[1-\beta_2^2]\alpha_2^2$, $\beta_2=f_{g021}/f_{g02}$, $\alpha_2=F_2/f_{g021}$, and $0<\xi_2\leq3$. This can reduce a focusing stroke of the first rear lens group G1, thereby reducing a volume of a focus motor. This can also avoid an excessively short focusing stroke of the first rear lens group G1, thereby reducing a precision requirement for the focus motor.

In some embodiments of the first aspect, the effective focal length $f_{g01}$ of the first front lens group G01 and the combined focal length $f_{g011}$ of the first front lens group G01 and the first rear lens group G1 satisfy: $0<\beta_1\leq0.5$, where $\beta_1=f_{g011}/f_{g01}$. In this way, an excessively small stroke compression ratio coefficient $\xi_1$ can be avoided, thereby reducing the focusing stroke of the first rear lens group G1.

In some embodiments of the first aspect, the effective focal length $f_{g02}$ of the second front lens group G02 and the combined focal length $f_{g021}$ of the second front lens group G02 and the first rear lens group G1 satisfy: $0<\beta_2\leq0.5$, where $\beta_2=f_{g021}/f_{g02}$. In this way, an excessively small stroke compression ratio coefficient $\xi_2$ can be avoided, thereby reducing the focusing stroke of the first rear lens group G1.

In some embodiments of the first aspect, the effective focal length $f_{g01}$ of the first front lens group G01 and the combined focal length $f_{g011}$ of the first front lens group G01 and the first rear lens group G1 satisfy: $0.75\leq1-\beta_1^2<1$, where $\beta_1=f_{g011}/f_{g01}$. This can reduce a focusing stroke of the first rear lens group G1, thereby reducing a volume of a focus motor. This can also avoid an excessively short focusing stroke of the first rear lens group G1, thereby reducing a precision requirement for the focus motor.

In some embodiments of the first aspect, the effective focal length $f_{g02}$ of the second front lens group G02 and the combined focal length $f_{g021}$ of the second front lens group G02 and the first rear lens group G1 satisfy: $0.75\leq1-\beta_2^2<1$, where $\beta_2=f_{go21}/f_{go2}$. This can reduce a focusing stroke of the first rear lens group G1, thereby reducing a volume of a focus motor. This can also avoid an excessively short focusing stroke of the first rear lens group G1, thereby reducing a precision requirement for the focus motor.

In some embodiments of the first aspect, the combined focal length $f_{g011}$ of the first front lens group G01 and the first rear lens group G1 and the first effective focal length $F_1$ satisfy: $0<\alpha_1\leq2$, where $\alpha_1=F_1/f_{g011}$. In this way, an excessively large stroke compression ratio coefficient $\xi_1$ can be avoided, thereby reducing a precision requirement for the focus motor.

In some embodiments of the first aspect, the combined focal length $f_{g021}$ of the second front lens group G02 and the first rear lens group G1 and the second effective focal length $F_2$ satisfy: $0<\alpha_2\leq2$, where $\alpha_2=F_2/f_{g021}$. In this way, an excessively large stroke compression ratio coefficient $\xi_2$ is avoided, thereby reducing a precision requirement for the focus motor.

In some embodiments of the first aspect, focal powers of the first front lens group G01, the second front lens group G02, and the first rear lens group G1 all are positive, and a focal power of the second rear lens group G2 is negative. In this way, some aberrations can be offset, thereby reducing an aberration of the optical lens.

In some embodiments of the first aspect, the first front lens group G01 and the second front lens group G02 each include at least one positive lens; the first rear lens group G1 includes a first lens L11, a second lens L12, and a third lens L13 in the direction from the object side to the image side, the first lens L11 and the third lens L13 have a positive focal power, the second lens L12 has a negative focal power, and there is a gap between adjacent two of the first lens L11, the second lens L12, and the third lens L13; and the second rear lens group G2 includes a fourth lens L21 and a fifth lens L22 in the direction from the object side to the image side, the fourth lens L21 has a negative focal power or a positive focal power, the fifth lens L22 has a negative focal power, and there is a gap between the fourth lens L21 and the fifth lens L22. This is conducive to aberration correction of the optical lens.

In some embodiments of the first aspect, the second lens L12 includes one positive lens and one negative lens that are spaced apart. This is conducive to aberration correction of the optical lens.

In some embodiments of the first aspect, the fifth lens L22 includes one positive lens and one negative lens that are spaced apart. This is conducive to aberration correction of the optical lens.

In some embodiments of the first aspect, the fifth lens L22 includes two negative lenses that are spaced apart.

This is conducive to aberration correction of the optical lens.

In some embodiments of the first aspect, the first turning element is a prism, the first turning element includes a first incident surface and a first emergent surface, the first incident surface is disposed facing a side on which the front lens group is located, and the first emergent surface is disposed facing a side on which the first rear lens group is located.

In some embodiments of the first aspect, the first turning element is a reflector.

In some embodiments of the first aspect, the optical lens further includes a second turning element disposed on an image side of the second rear lens group G2, the second turning element is a prism and has a prism incident surface and a prism emergent surface, the prism incident surface is disposed facing a side on which the second rear lens group G2 is located, the prism emergent surface is disposed facing a side of an image plane of the optical lens, and the prism emergent surface is obliquely disposed relative to an optical axis of the second rear lens group G2. In this way, a structure of the camera module can be more compact, thereby reducing a thickness of the electronic device.

In some embodiments of the first aspect, the optical lens further includes a second turning element disposed on an image side of the second rear lens group G2, the second turning element is a prism and has a prism incident surface and a prism emergent surface, the prism incident surface is disposed facing a side on which the second rear lens group G2 is located, the prism emergent surface is disposed facing a side of an image plane of the optical lens, an included angle between the prism incident surface and the prism emergent surface is a right angle, the prism emergent surface is parallel to an optical axis of the second rear lens group G2.

In some embodiments of the first aspect, the optical lens further includes a second turning element disposed on an image side of the second rear lens group G2, and the second turning element is a reflector.

According to a second aspect, an embodiment of this application provides a camera module, including a photosensitive element and the optical lens according to the first aspect. The photosensitive element is disposed on an image side of the optical lens.

Beneficial effects of the camera module in this embodiment of this application are the same as beneficial effects of the optical lens in the first aspect. Details are not described herein again.

According to a third aspect, an embodiment of this application provides an electronic device, including a housing and the camera module according to the second aspect. The camera module is mounted on the housing.

Beneficial effects of the electronic device in this embodiment of this application are the same as beneficial effects of the optical lens in the first aspect. Details are not described herein again.

## BRIEF DESCRIPTION OF DRAWINGS

FIG. 1a is a diagram of definitions of an image principal plane and an image principal point of an optical system;

FIG. 1b is a diagram of definitions of an object principal plane and an object principal point of an optical system;

FIG. 1c is a diagram of definitions of an object distance and an image distance of an optical system;

FIG. 2a is a diagram of a structure of an optical lens of a camera module installed in an electronic device, in a first state in a conventional technology;

FIG. 2b is a diagram of a structure of an optical lens of a camera module in a second state in a conventional technology;

FIG. 3 is a diagram of a back of an electronic device (mobile phone) according to some embodiments of this application;

FIG. 4 is an A-A sectional view of the electronic device in FIG. 3;

FIG. 5 is a diagram of a structure of the electronic device in FIG. 4 in another state;

FIG. 6 is a diagram of a structure of an optical lens in a short-focus state according to a first embodiment of this application;

FIG. 7 is a diagram of a structure of an optical lens in a long-focus state according to a first embodiment of this application;

FIG. 8 is a principle diagram of an optical lens in a short-focus state and a long-focus state according to a first embodiment of this application;

FIG. 9 is a principle diagram of focusing of an optical lens in a short-focus state according to a first embodiment of this application;

FIG. 10 is a diagram of a structure of an optical lens in a long-focus state according to a second embodiment of this application;

FIG. 11 is a diagram of a structure of an optical lens in a long-focus state according to a third embodiment of this application;

FIG. 12 is a diagram of a structure of an optical lens in a long-focus state according to a fourth embodiment of this application;

FIG. 13 is a diagram of a structure of an optical lens in a long-focus state according to a fourth embodiment of this application;

FIG. 14a is a diagram of a structure of an optical lens in a short-focus state according to a fifth embodiment of this application;

FIG. 14b is a diagram of a structure of an optical lens in a long-focus state according to a fifth embodiment of this application;

FIG. 14c is a diagram of a structure of an optical lens in a short-focus state according to a sixth embodiment of this application;

FIG. 14d is a diagram of a structure of an optical lens in a long-focus state according to a sixth embodiment of this application;

FIG. 15a is a diagram of a structure of an optical lens in a short-focus state according to a seventh embodiment of this application;

FIG. 15b is a diagram of a structure of an optical lens in a long-focus state according to a seventh embodiment of this application;

FIG. 15c shows an axial spherical aberration curve of an optical lens in a short-focus state according to a seventh embodiment of this application;

FIG. 15d shows a field curvature curve and a distortion curve of an optical lens in a short-focus state according to a seventh embodiment of this application;

FIG. 15e shows an axial spherical aberration curve of an optical lens in a long-focus state according to a seventh embodiment of this application;

FIG. 15f shows a field curvature curve and a distortion curve of an optical lens in a long-focus state according to a seventh embodiment of this application;

FIG. 16a is a diagram of a structure of an optical lens in a short-focus state according to an eighth embodiment of this application;

FIG. 16b is a diagram of a structure of an optical lens in a long-focus state according to an eighth embodiment of this application;

FIG. 16c shows an axial spherical aberration curve, a field curvature curve, and a distortion curve of an optical lens in a short-focus state according to an eighth embodiment of this application;

FIG. 16d shows an axial spherical aberration curve, a field curvature curve, and a distortion curve of an optical lens in a long-focus state according to an eighth embodiment of this application;

FIG. 17a is a diagram of a structure of an optical lens in a short-focus state according to a ninth embodiment of this application;

FIG. 17b is a diagram of a structure of an optical lens in a long-focus state according to a ninth embodiment of this application;

FIG. 17c shows an axial spherical aberration curve of an optical lens in a short-focus state according to a ninth embodiment of this application;

FIG. 17d shows a field curvature curve and a distortion curve of an optical lens in a short-focus state according to a ninth embodiment of this application;

FIG. 17e shows an axial spherical aberration curve of an optical lens in a long-focus state according to a ninth embodiment of this application;

FIG. 17f shows a field curvature curve and a distortion curve of an optical lens in a long-focus state according to a ninth embodiment of this application;

FIG. 18a is a diagram of a structure of an optical lens in a short-focus state according to a tenth embodiment of this application;

FIG. 18b is a diagram of a structure of an optical lens in a long-focus state according to a tenth embodiment of this application;

FIG. 18c shows an axial spherical aberration curve, a field curvature curve, and a distortion curve of an optical lens in a short-focus state according to a tenth embodiment of this application;

FIG. 18d shows an axial spherical aberration curve, a field curvature curve, and a distortion curve of an optical lens in a long-focus state according to a tenth embodiment of this application;

FIG. 19a is a diagram of a structure of an optical lens in a short-focus state according to an eleventh embodiment of this application;

FIG. 19b is a diagram of a structure of an optical lens in a long-focus state according to an eleventh embodiment of this application;

FIG. 19c shows an axial spherical aberration curve, a field curvature curve, and a distortion curve of an optical lens in a short-focus state according to an eleventh embodiment of this application; and

FIG. 19d shows an axial spherical aberration curve, a field curvature curve, and a distortion curve of an optical lens in a long-focus state according to an eleventh embodiment of this application.

**DESCRIPTION OF EMBODIMENTS**

The following explains and describes related technical terms in embodiments of this application.

A focal power (focal power) is represented as a reciprocal of an image focal length (it is approximately considered that a refractive index of air is 1), and represents a capability of an optical lens to refract light. A lens or a lens group with a positive focal power has a positive focal length, and is capable of converging light. A lens or a lens group with a negative focal power has a negative focal length, and is capable of diverging light.

A positive lens is also referred to as a convergent lens or a convex lens. The convex lens is capable of converging light. The convex lens is classified into a biconvex lens, a planoconvex lens, a concave-convex lens (or a positive meniscus lens), and the like.

A negative lens is also referred to as a divergent lens or a concave lens. The concave lens is capable of diverging light. The concave lens is classified into a biconcave lens, a planoconcave lens, a convex-concave lens, and the like.

An optical axis is an axis of symmetry of an optical system. For example, an optical axis of the optical lens is an axis passing through a center of each optical element of the optical lens. The optical axis is also a center line of a light beam (light column). The light beam rotates around the axis, and an optical characteristic does not change.

A focal length is a measurement manner for measuring light convergence or divergence in an optical system. The focal length is classified into an image focal length and an object focal length. The image focal length is a distance from an image principal plane to an image focus. Similarly, the object focal length is a distance from an object principal plane to an object focus. A focal length, an effective focal length (effective focal length, EFL), and a combined focal length described in embodiments of this application all are image focal lengths.

A principal plane of a lens (lens group) is also referred to as a principal plane, and includes an image principal plane and an object principal plane. Parallel light is irradiated on the lens (lens group), the light is refracted and then passes through an image focus, and after the refraction, the light is reversely extended and intersects incident light at a point. A plane that is perpendicular to an optical axis through this point is an image principal plane, and an intersection between the image principal plane and the optical axis of the optical lens is an image principal point. Similarly, light emitted from an object focus is refracted by the lens and then becomes parallel light, and incident light is extended and intersects the parallel light at a point. A plane that is perpendicular to an optical axis through this point is an object principal plane, and an intersection between the object principal plane and the optical axis of the optical lens is an object principal point.

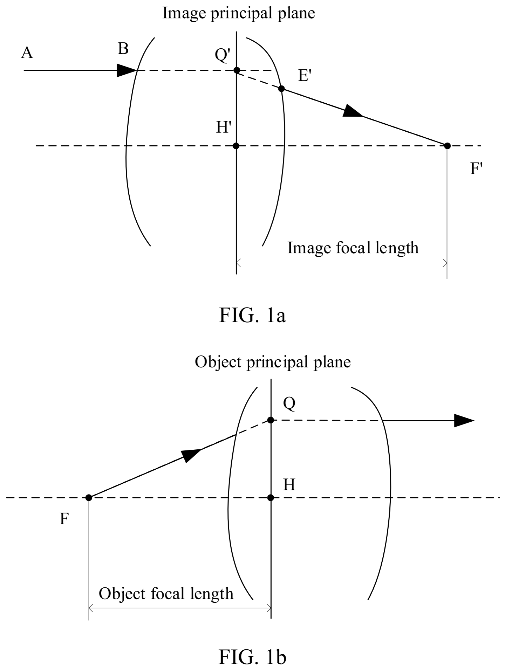

As shown in FIG. 1a, AB is an incident light ray parallel to an optical axis, and after the incident light ray passes through an optical system (the optical system may be a single lens, or may be a lens group including a plurality of lenses), an emergent light ray E'F' intersects the optical axis at F'. It can be learned from an imaging theory of an ideal optical system that F' is an image point of an object point on an infinite axis, and is referred to as an image focus. If the incident light ray AB and the emergent light ray E'F' are reversely extended, the two light rays intersect at a point. It is assumed that the point is Q. A plane that is perpendicular to the optical axis through Q' intersects the optical axis at a point H', H' is referred to as an image principal point, a plane Q'H' is referred to as an image principal plane, and a distance from the principal point H' to the focus F' is referred to as an image focal length.

As shown in FIG. 1b, F is referred to as an object focus. It is assumed that an extension line of an incident light ray emitted by the focus F intersects an extension line of a corresponding emergent light ray parallel to an optical axis at a point Q. A plane that is perpendicular to the optical axis through the point Q intersects the optical axis at a point H, the point H is referred to as an object principal point of an optical system, a plane QH is referred to as an object principal plane, and a distance from the object principal point H to the object focus F is referred to as an object focal length of the optical system.

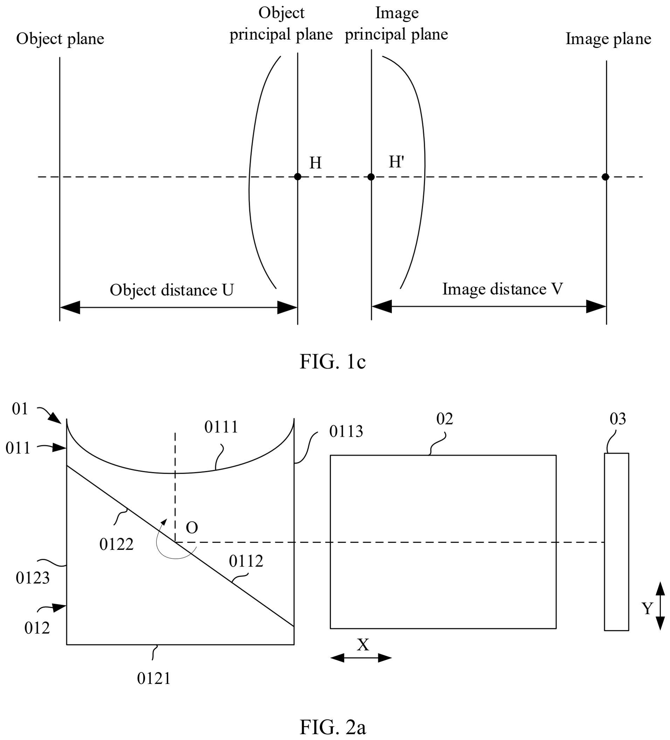

An object distance is, as shown in FIG. 1c, a distance from an object plane to an object principal plane of an optical system, and is represented by an English letter U. The optical system may be a single lens, or may be a lens group including a plurality of lenses.

An image distance is, as shown in FIG. 1c, a distance from an image plane of an optical system to an image principal plane, and is represented by an English letter V. The optical system may be a single lens, or may be a lens group including a plurality of lenses.

Focusing specifically means adjusting a position of a lens group (that is, a focusing lens group) in an optical lens to control an image distance, so that an image plane of the optical lens falls on a photosensitive element, making imaging of the optical lens clearest.

Internal focusing (Internal Focusing, IF for short) means that when an optical lens performs focusing, a focusing lens group inside the optical lens moves to complete focusing, and a total track length (TTL) of the optical lens remains unchanged during focusing.

A focusing stroke is a moving distance of a focusing lens group in a focusing process of an optical lens. For example, in a process in which the optical lens switches from focusing on a long shot to focusing on a close shot, a distance by which the focusing lens group moves in a direction of an optical axis is a focusing stroke.

An image plane is located on an image side of all lenses in an optical lens, and is a position at which an image is formed after light passes through the lenses in the optical lens in sequence.

A stop is an entity that limits a light beam in an optical system. The stop may be an edge of a lens, a frame, or a specially designed aperture screen. The stop may function in two aspects: limiting a light beam or limiting a field of view (an imaging range) size. In the optical system, a stop that limits a light beam the most is referred to as an aperture stop, and a stop that limits a field of view (size) the most is referred to as a field stop.

A variable aperture stop is a stop that can change a size of a light-passing aperture.

A pupil is an image of an aperture stop. A conjugate image of the aperture stop passing through an optical system in front of the aperture stop is referred to as an entrance pupil, which is referred to as an entrance pupil for short. An entrance pupil diameter is a diameter of the entrance pupil.

A relative aperture is a ratio of an entrance pupil diameter D to an image focal length $f'$, and is denoted as RA, that is, $RA=D/f'$.

An F number (Fno or F/#) is a reciprocal of a relative aperture, that is, $F=f'/D$. A smaller F number indicates a larger aperture and a smaller depth of field. On the contrary, a larger F number indicates a smaller aperture and a larger depth of field.

A total track length (total track length, TTL) is a distance from a surface that is of an optical lens (or an optical system) and that is closest to an object side to an image plane.

ImgH (Image Height) represents half of a diagonal length of an effective photosensitive area on a photosensitive element, that is, an image height.

An Abbe (Abbe) number is a dispersion coefficient, is a difference ratio of refractive indexes of an optical material at different wavelengths, and represents a degree of dispersion of the material.

An aberration (Aberration) is a deviation between an image formed by an uncorrected optical system and an image formed by an ideal optical system. The aberration includes a spherical aberration, a coma, a field curvature, astigmatism, a distortion, and a chromatic aberration.

The spherical aberration (Spherical aberration) is an aberration of a wide light beam. After passing through an optical system, a concentric light beam emitted from an on-axis point is no longer a concentric light beam. Light rays with different incident heights pass through the optical system and then intersect an optical axis at different positions, and deviate from a paraxial image point (ideal image point) to different degrees. This deviation is referred to as an axial spherical aberration, which is referred to as a spherical aberration for short. Due to the spherical aberration, an image point on a Gaussian image plane is no longer a point, but a circular dispersive spot. A radius of the dispersive spot is referred to as a transverse spherical aberration.

The coma (coma) is an aberration of a wide light beam at an off-axis point. In an optical system with a coma, an image point formed by an off-axis object point on an ideal image plane is similar to a comet-shaped light spot, a fine light beam close to a principal light ray intersects the principal light ray to form a bright spot, and image points formed by light beams with different apertures away from the principal light ray are different rings away from the principal light ray. Therefore, this imaging defect is referred to as a coma.

The chromatic aberration (Chromatic Aberration, CA for short) is as follows: An optical material has different refractive indexes for colors of light of different wavelengths. Therefore, light rays of different colors of light of a same aperture have different intersections with an optical axis after passing through an optical system. Light rays of different colors of light of different apertures also have different intersections with the optical axis. As a result, at any image plane position, an image of an object point is a colored dispersive spot. A difference between imaging positions and imaging sizes of various colors of light is referred to as a chromatic aberration. There are two types of chromatic aberrations: an axial chromatic aberration and a transverse chromatic aberration.

The axial chromatic aberration is as follows: A difference between imaging positions of two colors of light on an on-axial point is referred to as a position chromatic aberration, and is also referred to as an axial chromatic aberration. The transverse chromatic aberration is as follows: One medium has different refractive indexes for different colors of light. Therefore, for an off-axis object point, transverse magnifications of different colors of light are not equal. This difference is referred to as a transverse chromatic aberration, and is also referred to as a magnification chromatic aberration.

The distortion (distortion) is also referred to as an aberration. After principal light rays of different fields of view pass through an optical lens, a height of an intersection between the principal light rays and a Gaussian image plane is not equal to an ideal image height, and a difference between the two is a distortion.

The field curvature (field curvature) represents a difference in an optical axis direction between a position of a clearest image point in a non-central field of view after light passes through an optical lens group and a position of a clearest image point in a central field of view. When a field curvature exists, image points beyond a paraxial region on a Gaussian plane all become blurred, a plane object image becomes a rotational curved surface, and no perfect object plane image is obtained on an image plane.

The astigmatism (astigmatism) is an axial distance between a meridian image point and a sagittal image point of a fine light beam that do not overlap.

A meridian plane is a plane including a principal light ray emitted by an object point outside a principal axis of an optical system and the principal axis of the optical system. Light rays on the meridian plane are collectively referred to as a meridian light beam. A point formed by the meridian light beam is referred to as a meridian image point. An image plane on which the meridian image point is located is referred to as a meridian image plane.

A sagittal plane is a plane that passes through a principal light ray emitted by an object point outside a principal axis of an optical system and that is perpendicular to a meridian plane. Light rays on the sagittal plane are collectively referred to as a sagittal light beam. A point formed by the sagittal light beam is referred to as a sagittal image point. An image plane on which the sagittal image point is located is referred to as a sagittal image plane.

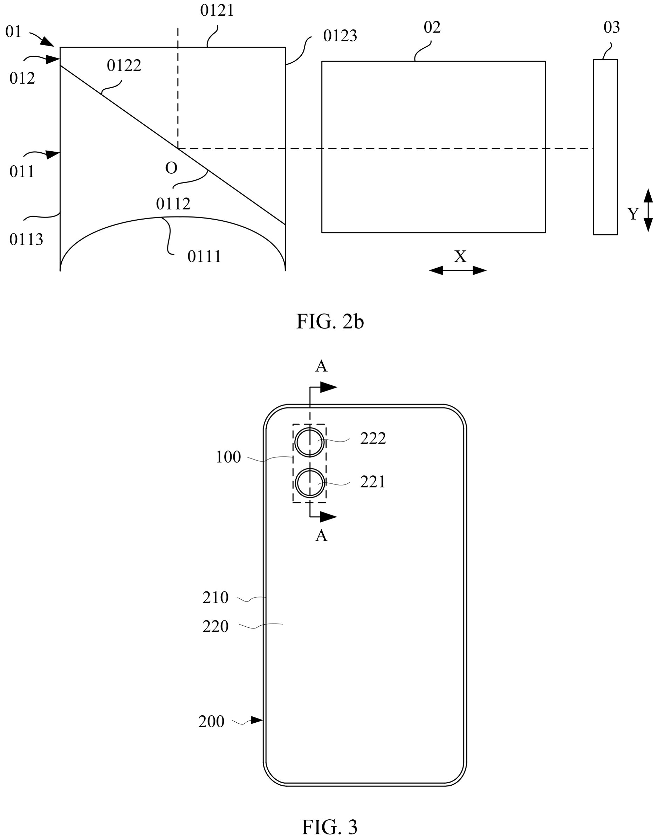

FIG. 2a is a diagram of a structure of an optical lens of a camera module, installed in an electronic device, in a first state in a conventional technology. FIG. 2b is a diagram of a structure of an optical lens of a camera module in a second state in a conventional technology. As shown in FIG. 2a and FIG. 2b, the optical lens includes a turning element 01 and a lens group 02 that are arranged in a direction from an object side to an image side. The turning element 01 includes a first prism 011 and a second prism 012. The first prism 011 includes a first incident surface 0111, a first reflective surface 0112, and a first emergent surface 0113. The second prism 012 includes a second incident surface 0121, a second reflective surface 0122, and a second emergent surface 0123. The first reflective surface 0112 is attached to the second reflective surface 0122. The first incident surface 0111 and the second incident surface 0121 have different curvatures.

The turning element 01 may rotate between a first position and a second position. As shown in FIG. 2a, when the turning element 01 is at the first position, the first incident surface 0111 faces the object side; and scene light enters the first prism 011 from the first incident surface 0111, and passes through the lens group 02 and is irradiated on a photosensitive surface of a photosensitive element 03 after being deflected by the first prism 011. In this case, the optical lens has a first focal length. As shown in FIG. 2b, when the turning element 01 is at the second position, the second incident surface 0121 faces the object side; and scene light enters the second prism 012 from the second incident surface 0121, and passes through the lens group 02 and is irradiated on the photosensitive surface of the photosensitive element 03 after being deflected by the second prism 012. In this case, the optical lens has a second focal length, and the second focal length is different from the first focal length.

In the optical lens in the conventional technology, the turning element 01 may be rotated to adjust incident surfaces of different prisms in the turning element 01 to face the object side. Because the incident surfaces of the different prisms have different curvatures, a focal length of the optical lens may be changed, thereby implementing zooming of the optical lens.

However, zooming of the optical lens requires rotation of the turning element 01. Therefore, larger space needs to be disposed inside the camera module to avoid movement of the first prism 011 and the second prism 012, causing a relatively large size of the camera module in a light entry direction (a Y direction in the figure) of the optical lens and a relatively large size of the electronic device in a thickness direction. This is not conducive to lightening and thinning of the electronic device.

This application provides an optical lens, a camera module, and an electronic device. The optical lens includes a movable turning element, and the turning element moves to image sides of different front-facing lens groups, so that different optical systems can be formed, to implement zooming. In a moving process of the turning element, space occupied in a light entry direction of the optical lens is not additionally increased, thereby reducing a thickness of the electronic device.

Technical solutions in some embodiments of this application are clearly and completely described below with reference to accompanying drawings.

The electronic device in embodiments of this application may be an electronic device having a camera module, such as a mobile phone, a tablet computer, a notebook computer, or a wearable device (for example, a smartwatch). The following specifically describes the electronic device in embodiments of this application by using a mobile phone as an example. For another type of electronic device, refer to a structure in an embodiment of the mobile phone. Details are not described herein.

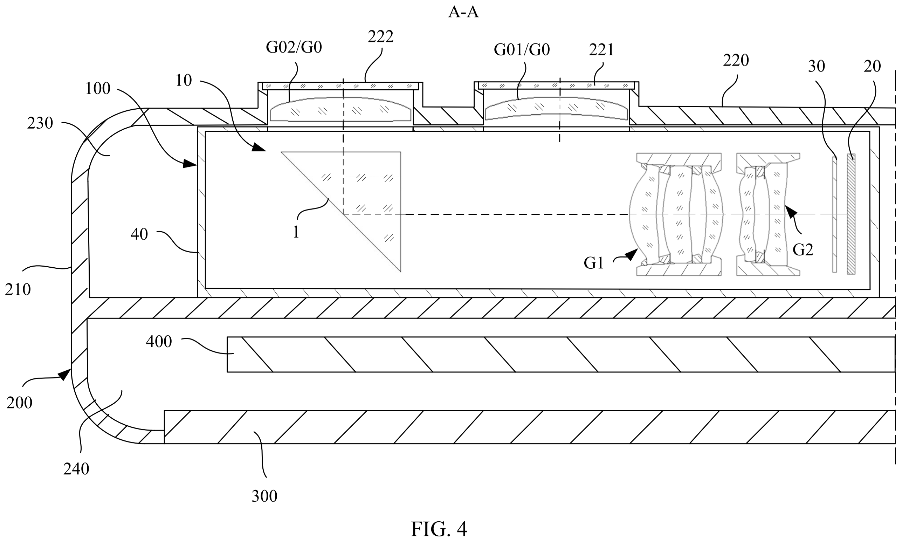

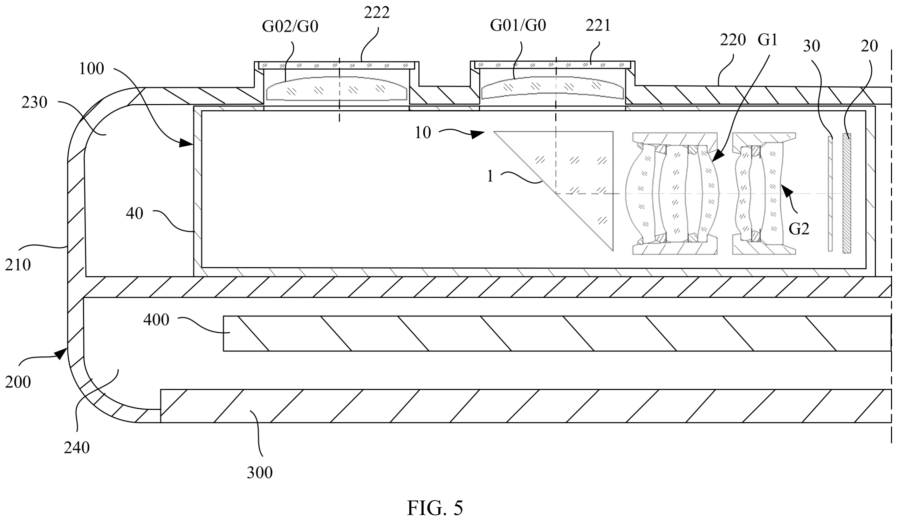

FIG. 3 is a diagram of a back of an electronic device (mobile phone) according to some embodiments of this application. FIG. 4 is an A-A sectional view of the electronic device in FIG. 3. FIG. 5 is a diagram of a structure of the electronic device in FIG. 4 in another state. As shown in FIG. 3 to FIG. 5, the electronic device includes a housing 200, a display 300, and a camera module 100, and the camera module 100 is mounted on the housing 200.

In some embodiments, as shown in FIG. 4 and FIG. 5, the housing 200 includes a middle frame 210 (also referred to as a front housing or a front frame) and a rear cover 220 (also referred to as a battery cover). The display 300 is disposed on one side of the middle frame 210. The rear cover 220 is disposed on another side of the middle frame 210. The rear cover 220 and the middle frame 210 enclose first accommodation space 230. The camera module 100 is disposed in the first accommodation space 230. The display 300 and the middle frame 210 enclose second accommodation space 240. An electronic component such as a mainboard 400 is disposed in the second accommodation space 240. The mainboard 400 is separately connected to the display 300 and the camera module 100 by using a flexible circuit board.

The display 300 may be a liquid crystal display, or may be an OLED (Organic Light-Emitting Diode, organic light-emitting diode) display. This is not specifically limited herein. In addition to being installed in the first accommodation space 230, the camera module 100 may alternatively be installed in the second accommodation space 240, to serve as a front-facing camera module of the electronic device.

In some embodiments, as shown in FIG. 4 and FIG. 5, the camera module 100 includes an optical lens 10, a photosensitive element 20, and a light filter 30. The photosensitive element 20 is located on an image side of the optical lens 10, and the light filter 30 is located between the optical lens 10 and the photosensitive element 20, so that light can pass through the optical lens 10 and be irradiated on a photosensitive surface of the photosensitive element 20.

The optical lens 10 mainly performs imaging by using a lens refraction principle. To be specific, light of a to-be-photographed scene passes through the optical lens 10 to form a clear image on a focal plane of the optical lens 10, the image of the scene is recorded by using the photosensitive element 20 located on the focal plane, the photosensitive element 20 converts an optical image into an electrical signal and transmits the electrical signal to a processor on the mainboard 400, and the processor transmits the electrical signal to the display 300, to display the image of the to-be-photographed scene on the display 300.

The photosensitive element 20 (also referred to as an image sensor) is a semiconductor chip, includes hundreds of thousands to millions of photodiodes on a surface, and generates a charge when exposed to light. The photosensitive element 20 may be a charge coupled device (charge coupled device, CCD), or may be a complementary metal-oxide-semiconductor (complementary metal-oxide semiconductor, CMOS). This is not specifically limited herein.

The light filter 30 is configured to: filter out an undesired wavelength in light, and prevent the photosensitive element 20 from generating a false color or a ripple, to improve effective resolution and color reproduction of the photosensitive element 20. In some embodiments, as shown in FIG. 3, the light filter 30 is an infrared light filter.

As shown in FIG. 3, the light filter 30 may be independently disposed, or the light filter 30 may be attached to a surface of a lens or a prism of the optical lens 10, to implement light filtering. This is not specifically limited herein.

In some embodiments, as shown in FIG. 3, the camera module 100 includes a camera housing 40, and a part of the optical lens 10, the photosensitive element 20, and the light filter 30 are disposed in the camera housing 40.

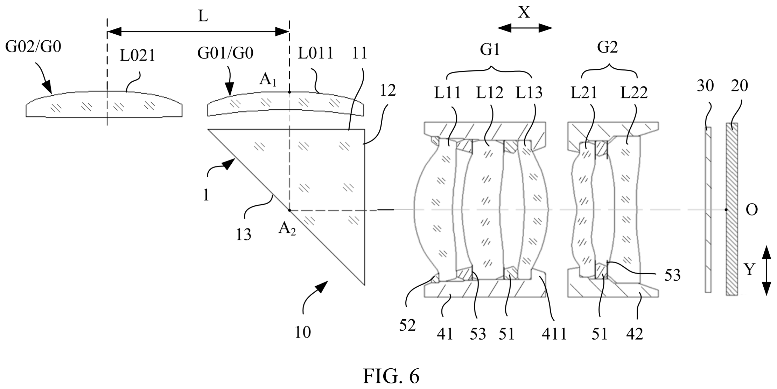

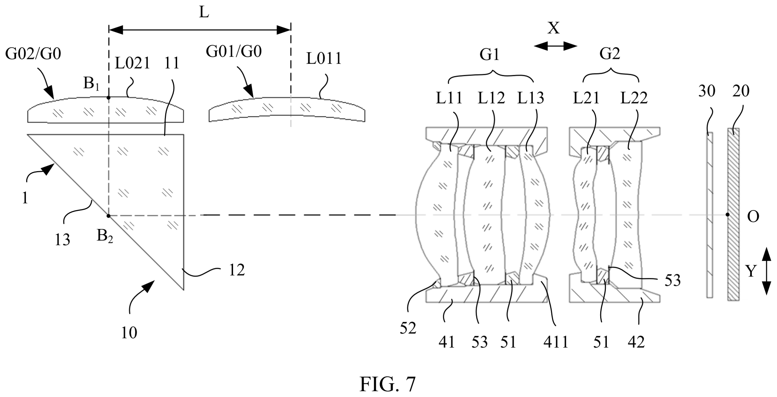

FIG. 6 is a diagram of a structure of an optical lens in a short-focus state according to a first embodiment of this application, and FIG. 7 is a diagram of a structure of the optical lens in a long-focus state according to the first embodiment of this application. As shown in FIG. 6 and FIG. 7, the optical lens 10 includes a front lens group G0, a first turning element 1, a first rear lens group G1, and a second rear lens group G2 that are arranged in a direction from an object side to an image side. The front lens group G0 includes a first front lens group G01 and a second front lens group G02 that are arranged in a first direction X, and the first direction X is parallel to an optical axis of the first rear lens group G1.

The first turning element 1 may move between a first position and a second position in the first direction X. As shown in FIG. 6, when the first turning element 1 is at the first position, the first turning element 1 is located on an image side of the first front lens group G01, and is configured to reflect an emergent light beam of the first front lens group G01 to the first rear lens group G1, and the optical lens 10 has a first effective focal length $F_1$.

As shown in FIG. 7, when the first turning element 1 is at the second position, the first turning element 1 is located on an image side of the second front lens group G02, and is configured to reflect an emergent light beam of the second front lens group G02 to the first rear lens group G1, the optical lens 10 has a second effective focal length $F_2$, and the second effective focal length $F_2$ is greater than the first effective focal length $F_1$. In other words, the optical lens 10 is in the short-focus state when the first turning element 1 is at the first position, and the optical lens 10 is in the long-focus state when the first turning element 1 is at the second position.

As shown in FIG. 3 and FIG. 4, a first photographing window 221 and a second photographing window 222 are disposed on the rear cover 220, and the first photographing window 221 and the second photographing window 222 are arranged in the first direction X; the first photographing window 221 is disposed opposite to the first front lens group G01, to ensure that the optical lens 10 can receive, in the short-focus state, light emitted by a to-be-photographed scene outside the housing 200; and the second photographing window 222 is disposed opposite to the second front lens group G02, to ensure that the optical lens 10 can receive, in the long-focus state, light emitted by a to-be-photographed scene outside the housing 200.

According to the optical lens 10 in this embodiment of this application, as shown in FIG. 6 and FIG. 7, the first turning element 1 moves in the first direction X, and the first turning element 1 may separately move to the image sides of the first front lens group G01 and the second front lens group G02, so that optical systems having different effective focal lengths can be formed, thereby implementing zooming of the optical lens 10. In a process in which the first turning element 1 moves in the first direction X, space occupied in a light entry direction Y (that is, a thickness direction of the electronic device) of the optical lens is not additionally increased, thereby reducing space occupied by the camera module 100 in the thickness direction of the electronic device, and further implementing lightening and thinning of the electronic device.

As shown in FIG. 6 and FIG. 7, a moving stroke L of the first turning element 1 between the first position and the second position satisfies: $L \leq 23$ mm. For example, the moving stroke L may be 8.218 mm, 8.956 mm, 12.906 mm, 13.719 mm, or 22.834 mm. In this way, the moving stroke L of the first turning element can be prevented from being excessively large, so that an actuator (for example, a drive motor) of the first turning element 1 can be designed to be more compact, thereby making a structure of the camera module more compact.

As shown in FIG. 6 and FIG. 7, the moving stroke L may be a distance between an optical axis of the first front lens group G01 and an optical axis of the second front lens group G02.

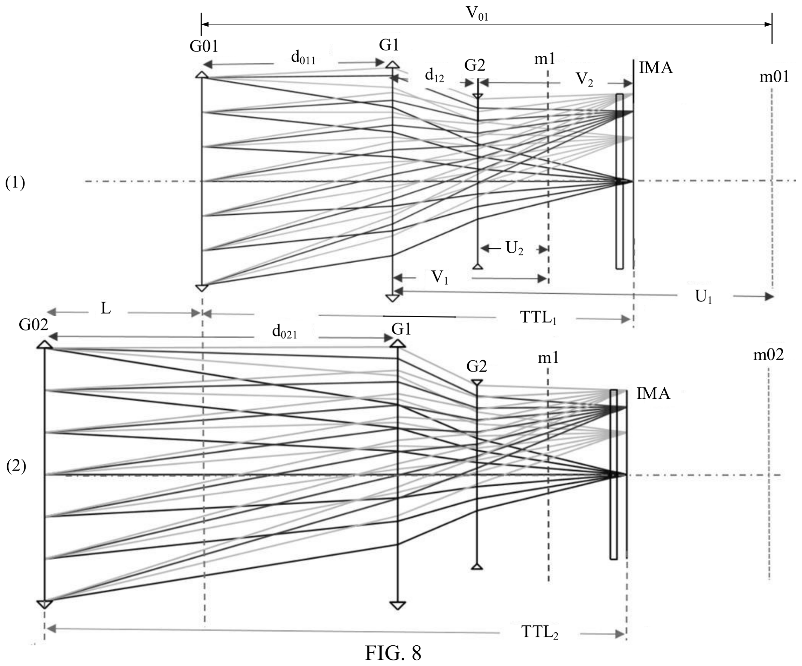

FIG. 8 is a principle diagram of the optical lens 10 in the short-focus state and the long-focus state according to the first embodiment of this application. As shown in FIG. 6 and (1) in FIG. 8, when the first turning element 1 is at the first position, the first front lens group G01, the first turning element 1, the first rear lens group G1, and the second rear lens group G2 form a first optical system, and a total track length of the first optical system is $TTL_1$. As shown in FIG. 7 and (2) in FIG. 8, when the first turning element 1 is at the second position, the second front lens group G02, the first turning element 1, the first rear lens group G1, and the second rear lens group G2 form a second optical system, and a total track length of the second optical system is $TTL_2$.

As shown in FIG. 6 and FIG. 7, $TTL_1 = A_1A_2 + A_2O$, that is, $TTL_1$ is a sum of lengths of a line segment $A_1A_2$ and a line segment $A_2O$; and $TTL_2 = B_1B_2 + B_2O$, that is, $TTL_2$ is a sum of lengths of a line segment $B_1B_2$ and a line segment $B_2O$. $A_1$ is an intersection between the optical axis of the first front lens group G01 and a lens surface that is of the first front lens group G01 and that is closest to the object side; $A_2$ is an intersection between the optical axis of the first front lens group G01 and a reflective surface of the first turning element 1; O is an intersection between the optical axis of the first rear lens group G1 and an image plane (that is, the photosensitive surface of the photosensitive element 20); $B_1$ is an intersection between the optical axis of the second front lens group G02 and a lens surface that is of the second front lens group G02 and that is closest to the object side; and $B_2$ is an intersection between the optical axis of the second front lens group G02 and the reflective surface of the first turning element 1.

As shown in (1) and (2) in FIG. 8, when the first turning element 1 moves between the first position and the second position, an image plane IMA position of the optical lens 10 remains unchanged; and $TTL_1$ and $TTL_2$ satisfy: $TTL_2 - TTL_1 \leq 23$ mm. For example, $TTL_2 - TTL_1$ may be 8.218 mm, 8.956 mm, 12.906 mm, 13.719 mm, or 22.834 mm.

As shown in (1) and (2) in FIG. 8, because the image plane IMA position of the optical lens 10 remains unchanged when the first turning element 1 moves between the first position and the second position, the moving stroke of the first turning element 1 between the first position and the second position is: $L = TTL_2 - TTL_1$. By limiting $TTL_2 - TTL_1 \leq 23$ mm, the moving stroke L of the first turning element 1 can be prevented from being excessively large, so that an actuator of the first turning element 1 can be designed to be more compact, thereby making a structure of the camera module 100 more compact, and reducing space occupied by the camera module 100.

In some embodiments, as shown in FIG. 6, FIG. 7, and FIG. 8, the first rear lens group G1 is a movable lens group and may move relative to the front lens group G0 in the first direction X, and the second rear lens group G2 is a fixed lens group and is fixed relative to the front lens group G0 in the first direction X.

Because the first rear lens group G1 is a movable lens group, and the second rear lens group G2 is a fixed lens group, as shown in FIG. 8, when the first turning element 1 moves between the first position and the second position, the first rear lens group G1 may move in the first direction X, to avoid a position drift of an image plane IMA of the optical lens 10, so that the image plane IMA position of the optical lens 10 remains unchanged. In addition, when the optical lens 10 switches between focusing on a long shot and focusing on a close shot at the first position or the second position, the first rear lens group G1 may move in the first direction X, to implement precise focusing on the image plane IMA of the optical lens 10.

As shown in FIG. 4 and FIG. 5, the front lens group G0 is a fixed lens group, and both the first front lens group G01 and the second front lens group G02 are fixed relative to the housing 200 of the electronic device. That the first rear lens group G1 may move relative to the front lens group G0 in the first direction X is specifically: The first rear lens group G1 may move relative to the first front lens group G01 or the second front lens group G02 in the first direction X. That the second rear lens group G2 is fixed relative to the front lens group G0 in the first direction X is specifically: The second rear lens group G2 is fixed relative to the first front lens group G01 or the second front lens group G02 in the first direction X.

In some embodiments, as shown in FIG. 8, an effective focal length $f_{g01}$ of the first front lens group G01, an effective focal length $f_{g02}$ of the second front lens group G02, and an effective focal length $f_{g1}$ of the first rear lens group G1 satisfy:

$$TTL_2 - TTL_1 = |f_{g02} - f_{g01} + k \cdot f_{g1}|.$$

The coefficient k satisfies: $0 \leq |k| < 1$.

It can be learned from the relational expression $TTL_2 - TTL_1 = |f_{g02} - f_{g01} + k \cdot f_{g1}|$ that the moving stroke L of the first turning element 1 is related to the effective focal length $f_{g01}$ of the first front lens group G01, the effective focal length $f_{g02}$ of the second front lens group G02, the effective focal length $f_{g1}$ of the first rear lens group G1, and the coefficient k. By limiting $0 \leq |k| < 1$, $|k|$ can be prevented from being excessively large, so that the moving stroke L of the first turning element 1 can be prevented from being excessively large, thereby making a structure of the camera module 100 more compact, and reducing space occupied by the camera module 100.

In some embodiments, as shown in FIG. 8, the effective focal length $f_{g01}$ of the first front lens group G01, the effective focal length $f_{g02}$ of the second front lens group G02, a combined focal length $f_{g011}$ of the first front lens group G01

and the first rear lens group G1, and a combined focal length $f_{g021}$ of the second front lens group G02 and the first rear lens group G1 satisfy:

$$\text{Coefficient } k=[(\beta_1-1)^2/\beta_1]-[(\beta_2-1)^2/\beta_2].$$

First focal length allocation ratio $\beta_1=f_{g011}/f_{g01}$, and second focal length allocation ratio $\beta_2=f_{g021}/f_{g02}$.

It can be learned from the relational expression $k=[(\beta_1-1)^2/\beta_1]-[(\beta_2-1)^2/\beta_2]$ that the coefficient k is related to the first focal length allocation ratio $\beta_1$ and the second focal length allocation ratio $\beta_2$. A value of the coefficient k can be controlled by properly setting values of the first focal length allocation ratio $\beta_1$ and the second focal length allocation ratio $\beta_2$, so that a value of the moving stroke L of the first turning element 1 can be controlled.

The following uses the optical lens 10 shown in FIG. 8 as an example to describe a derivation process of the relational expression $TTL_2-TTL_1=|f_{g02}-f_{g01}+k\cdot f_{g1}|$.

As shown in (1) in FIG. 8, when a to-be-photographed object is at infinity, the to-be-photographed object is imaged as m01 after passing through the first front lens group G01, an image distance is $V_{01}=f_{g01}$, then the image m01 is imaged as m1 after passing through the first rear lens group G1, and a conjugate image plane imaged after the image m1 passes through the second rear lens group G2 is IMA.

Under a condition of a paraxial optical path model, a gap between an image principal plane of the first front lens group G01 and an object principal plane of the first rear lens group G1 is defined as follows: $d_{011}=f_{g01}+f_{g1}-f_{g01}f_{g1}/f_{g011}$.

An object distance from the image m01 to the first rear lens group G1 is $U_1=d_{011}-V_{01}$. An image distance $V_1$ of the image m1 is calculated as follows according to a Gaussian formula:

$$V_1=U_1f_{g1}/(U_1-f_{g1})=f_{g1}(f_{g01}-f_{g011})/f_{g01}.$$

The total track length of the first optical system is as follows:

$$TTL_1=d_{011}+V_1+V_2-U_2=f_{g01}+2f_{g1}-f_{g1}(f_{g01}/f_{g011}+f_{g011}/f_{g01})+V_2-U_2.$$

Similarly, as shown in (2) in FIG. 8, the total track length of the second optical system is as follows:

$$TTL_2=f_{g02}+2f_{g1}-f_{g1}(f_{g02}/f_{g012}+f_{g021}/f_{g02})+V_2-U_2.$$

As shown in (1) and (2) in FIG. 8, when the first turning element 1 moves between the first position and the second position, positions of the image plane IMA of the optical lens 10 and the second rear lens group G2 remain unchanged. Therefore, an image distance $V_2$ and an object distance $U_2$ of the second rear lens group G2 in the first optical system (that is, G01+first turning element 1+G1+G2) are the same as those in the second optical system (that is, G02+first turning element 1+G1+G2), and a difference between $TTL_2$ and $TTL_1$ is equal to the moving stroke L of the first turning element 1 between the first position and the second position. Therefore, the following can be obtained:

$$L=TTL_2-TTL_1=f_{g02}-f_{g01}+f_{g1}[(\beta_1-1)^2/\beta_1-(\beta_2-1)^2/\beta_2].$$

In other words, $L=|f_{g02}-f_{g01}+f_{g1}[(\beta_1-1)^2/\beta_1-(\beta_2-1)^2/\beta_2]|$.

In some embodiments, coefficient $k=0$. The first focal length allocation ratio $\beta_1$ is equal to the second focal length allocation ratio $\beta_2$. In this way, the moving stroke of the first turning element 1 is $L=TTL_2-TTL_1=|f_{g02}-f_{g01}|$, and the moving stroke L of the first turning element 1 is related only to the effective focal length $f_{g01}$ of the first front lens group G01 and the effective focal length $f_{g02}$ of the second front lens group G02. A value of the moving stroke L of the first turning element 1 can be controlled by properly setting a difference between the effective focal length $f_{g01}$ of the first front lens group G01 and the effective focal length $f_{g02}$ of the second front lens group G02.

In some embodiments, the coefficient k is approximately equal to 0, that is, $0<k\leq0.005$. For example, k is equal to 0.005, 0.004, 0.003, 0.002, or 0.001. The first focal length allocation ratio $\beta_1$ is approximately equal to the second focal length allocation ratio $\beta_2$ (for example, a difference is within 0.005). For example, $\beta_1$ is 0.447, and $\beta_2$ is 0.448. In this way, the moving stroke of the first turning element 1 is $L=TTL_2-TTL_1\approx|f_{g02}-f_{g01}|$, and the moving stroke L of the first turning element 1 is related only to the effective focal length $f_{g01}$ of the first front lens group G01 and the effective focal length $f_{g02}$ of the second front lens group G02. A value of the moving stroke L of the first turning element 1 can be controlled by properly setting a difference between the effective focal length $f_{g01}$ of the first front lens group G01 and the effective focal length $f_{g02}$ of the second front lens group G02.

In some embodiments, the coefficient k satisfies: $0.28\leq k\leq0.46$. For example, the coefficient k may be 0.291, 0.375, 0.411, or 0.454. The first focal length allocation ratio $\beta_1$ and the second focal length allocation ratio $\beta_2$ are not equal and differ greatly (for example, a difference is greater than 0.005). For example, $\beta_1$ is 0.370, and $\beta_2$ is 0.453. In this way, the coefficient k can be prevented from being excessively large or excessively small, so that the moving stroke L of the first turning element 1 can be prevented from being excessively large or excessively small. If the moving stroke L of the first turning element 1 is excessively large, a volume of the actuator of the first turning element 1 is relatively large, which is not conducive to reducing space occupied by the camera module 100. If the moving stroke L of the first turning element 1 is excessively small, a precision requirement for an actuator of the first turning element 1 is relatively high, which is not conducive to reducing costs of the camera module 100. The coefficient k is set to $0.28 \leq k \leq 0.46$, so that space occupied by the camera module 100 can be reduced, and costs of the camera module 100 can be reduced.

In some embodiments, the effective focal length $f_{g01}$ of the first front lens group G01 and the effective focal length $f_{g02}$ of the second front lens group G02 satisfy: $4.5 \text{ mm} \leq |f_{g02}\text{-}f_{g01}| \leq 12.9 \text{ mm}$. For example, $f_{g02}\text{-}f_{g01}$ may be 4.609 mm, 7.409 mm, 8.021 mm, 12.795 mm, or 8.153 mm. In this way, $|f_{g02}\text{-}f_{g01}|$ can be prevented from being excessively large or excessively small. If $|f_{g02}\text{-}f_{g01}|$ is excessively large, the moving stroke L of the first turning element 1 is excessively large, which is not conducive to reducing space occupied by the camera module 100. If $|f_{g02}\text{-}f_{g01}|$ is excessively small, the moving stroke L of the first turning element 1 is excessively small, and a precision requirement for an actuator of the first turning element 1 is relatively high, which is not conducive to reducing costs of the camera module 100. $|f_{g02}\text{-}f_{g01}|$ is set to $7.2 \text{ mm} \leq |f_{g02}\text{-}f_{g01}| \leq 12.9 \text{ mm}$, so that space occupied by the camera module 100 can be reduced, and costs of the camera module 100 can be reduced.

In some embodiments, as shown in FIG. 8, $TTL_1$ and $TTL_2$ satisfy: $TTL_2\text{-}TTL_1 \geq 8.1 \text{ mm}$. In this way, $TTL_2\text{-}TTL_1$ can be prevented from being excessively small. If $TTL_2\text{-}TTL_1$ is excessively small, a difference between effective focal lengths of the first optical system (G01+first turning element 1+G1+G2) and the second optical system (G02+first turning element 1+G1+G2) is relatively small, which is not conducive to increasing a zoom ratio (or a zoom range) of the optical lens 10. $TTL_1$ and $TTL_2$ are set to $TTL_2\text{-}TTL_1 \geq 8.1 \text{ mm}$, so that the zoom ratio (or the zoom range) of the optical lens 10 is increased.

In some embodiments, as shown in FIG. 8, the effective focal length $f_{g02}$ of the second front lens group G02 is greater than the effective focal length $f_{g01}$ of the first front lens group G01. Compared with $f_{g02}=f_{g01}$ or $f_{g02}<f_{g01}$, setting $f_{g02}$ and $f_{g01}$ to $f_{g02}>f_{g01}$ can enable the optical lens 10 to obtain a relatively large zoom range when the first turning element 1 moves between the first position and the second position, thereby improving zoom performance of the optical lens 10.

In some embodiments, as shown in FIG. 6, when the first turning element 1 is at the first position, that is, the optical lens 10 is in the short-focus state, the effective focal length $f_{g01}$ of the first front lens group G01, the combined focal length $f_{g011}$ of the first front lens group G01 and the first rear lens group G1, and the first effective focal length $F_1$ satisfy: stroke compression ratio coefficient $\xi_1=[1\text{-}\beta_1^2]\alpha_1^2$, $\beta_1=f_{g011}/f_{g01}$, $\alpha_1=F_1/f_{g011}$, and $0<\xi_1\leq3$. For example, $\xi_1$ may be 2.25, 2.518, 2.263, 2.264, or 2.212.

The stroke compression ratio coefficient $\xi_1$ is set to $0<\xi_1\leq3$, so that a focusing stroke of the first rear lens group G1 can be reduced, thereby reducing a volume of a focus motor; and an excessively short focusing stroke of the first rear lens group G1 can also be avoided, thereby reducing a precision requirement for the focus motor, and reducing costs.

In some embodiments, as shown in FIG. 7, when the first turning element 1 is at the second position, that is, the optical lens 10 is in the long-focus state, the effective focal length $f_{g02}$ of the second front lens group G02, the combined focal length $f_{g021}$ of the second front lens group G02 and the first rear lens group G1, and the second effective focal length $F_2$ satisfy: stroke compression ratio coefficient $\xi_2=[1\text{-}\beta_2^2]\alpha_2^2$, $\beta_2=f_{g021}/f_{g02}$, $\alpha_2=F_2/f_{g021}$, and $0<\xi_2\leq3$. For example, $\xi_2$ may be 2.263, 2.363, 2.192, 2.064, or 2.212.

The stroke compression ratio coefficient $\xi_2$ is set to $0<\xi_2\leq3$, so that a focusing stroke of the first rear lens group G1 can be reduced, thereby reducing a volume of a focus motor; and an excessively short focusing stroke of the first rear lens group G1 can also be avoided, thereby reducing a precision requirement for the focus motor, and reducing costs.

To facilitate understanding of a correlation between the stroke compression ratio coefficient and the focusing stroke, the following describes a definition and a derivation process of the stroke compression ratio coefficient by using an example in which the optical lens 10 is in the short-focus state.

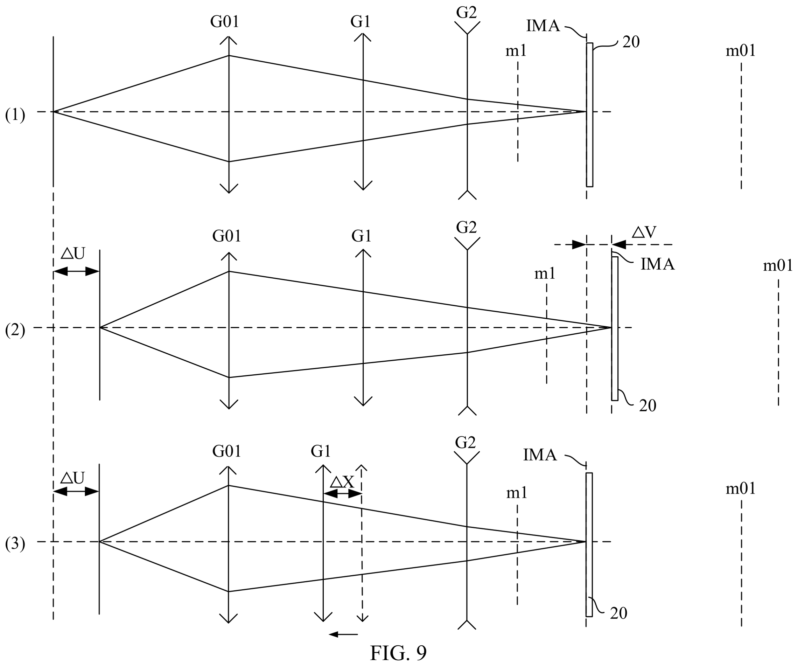

FIG. 9 is a principle diagram of focusing of the optical lens 10 in the short-focus state according to the first embodiment of this application. An optical path in FIG. 9 is described by using a path of two light rays emitted by an on-axis object point of a to-be-photographed object as an example.

It is assumed that an initial object distance of an object to be photographed by the optical lens 10 is U, and an initial image distance is V. As shown in (2) in FIG. 9, when positions of the first front lens group G01, the first rear lens group G1, and the second rear lens group G2 remain unchanged, and an object distance variation is $\triangle U$, that is, an absolute value of a difference between a target object distance and an initial object distance, a corresponding image distance variation is $\triangle V$. As shown in (3) in FIG. 9, in a focusing process of the optical lens 10, positions of the first front lens group G01 and the second rear lens group G2 remain unchanged, an object distance variation is $\triangle U$, and a moving distance (that is, a focusing stroke) of the first rear lens group G1 is $\triangle X$, so that the image plane IMA position remains unchanged.

$\xi_1$ is defined as follows: $\xi_1=\triangle V/\triangle X$ (Formula 2).

Based on a Newton formula, it can be learned that a relationship between the object distance, the image distance, and the effective focal length of the optical lens 10 satisfies:

$$1/U + 1/V = 1/F_1 \text{ (Formula 3).}$$

As shown in (1) and (2) in FIG. 9, when the to-be-photographed object moves rightward by $\triangle U$, the positions of the first front lens group G01, the first rear lens group G1, and the second rear lens group G2 remain unchanged, and the image plane IMA (that is, a focal plane) of the optical lens 10 moves rightward by $\triangle V$:

$$1/(U-\triangle U) + 1/(V+\triangle V) = 1/F_1.$$

$\triangle V/\triangle U = (V/U)^2 \approx (F_1/U)^2$. A condition of $(V/U)^2 \approx (F_1/U)^2$ is that an absolute value of the object distance of the to-be-photographed object is far greater than an absolute value of the focal length, that is, $|U| >> |F_1|$.

It may be obtained that the image plane IMA of the optical lens 10 moves rightward by

$$\triangle V = \triangle U(F_1/U)^2 \text{ (Formula 4).}$$

As shown in (2) in FIG. 9, when the to-be-photographed object moves rightward by $\triangle U$, an object distance from the to-be-photographed object to a principal plane of the first front lens group G01 is $U_0$, the positions of the first front lens group G0, the first rear lens group G1, and the second rear lens group G2 remain unchanged, and a distance by which the image m1 formed after the to-be-photographed object passes through the system including the first front lens group G01 and the first rear lens group G1 moves rightward is:

$$\triangle U(f_{g01}/U_{01})^2 = \triangle U(f_{g01}/U_0)^2(f_{g1}/U_1)^2 \text{ (Formula 5).}$$

$U_1$ represents a distance from the image m01 formed after the to-be-photographed object passes through the first front lens group G01 to a principal plane of the first rear lens group G1; and $U_{01}$ represents a distance from an object plane of the to-be-photographed object to a principal plane of a combined system of the first front lens group G01 and the first rear lens group G1. As shown in (3) in FIG. 9, when the to-be-photographed object moves rightward by $\triangle U$, positions of the first front lens group G01, the second rear lens group G2, and the image plane IMA of the optical system remain unchanged, and the first rear lens group G1 moves leftward by $\triangle X$.

The image m01 formed after the to-be-photographed object passes through the first front lens group G01 moves rightward by $\triangle U(f_{g01}/U_0)^2$.

A position of the image m1 formed after the image m1 passes through the first rear lens group G1 remains unchanged, that is:

$$[\triangle U(f_{g01}/U_0)^2 + \triangle X] \cdot (f_{g1}/U_1)^2 - \triangle X = 0 \text{ (Formula 6).}$$

When the object distance (absolute value) of the to-be-photographed object is far greater than the focal length (absolute value), it is considered that $U_0 \approx U_{01} \approx U$.

It can be obtained from Formula 2 to Formula 6 that $\xi_1 = \triangle V/\triangle X = [1-(f_{g011}/f_{g01})^2](F_1/f_{g011})^2 = [1-\beta_1^2]\alpha_1^2$.

It can be learned from the formula of $\xi_1$ that a value of $\xi_1$ is related to $f_{g011}$, $f_{g01}$, and $F_1$.

It can be learned from Formula 2 that the stroke compression ratio coefficient is an image distance variation caused by moving a focusing lens group by a unit distance. A larger stroke compression ratio coefficient indicates a larger image distance variation caused by moving the focusing lens group by the unit distance. In a focusing process of the optical lens 10, when the image distance variation is constant, a larger stroke compression ratio coefficient indicates a smaller focusing stroke $\triangle X$, and a smaller stroke compression ratio coefficient indicates a larger focusing stroke $\triangle X$. The stroke compression ratio coefficient physically means using a physical parameter to represent a ratio relationship between a focusing stroke of a solution in which the first rear lens group G1 is used as a focusing lens group (for example, the solution in FIG. 6 and FIG. 7, that is, an internal focusing solution) and a focusing stroke of a solution in which the first front lens group G01, the first rear lens group G1, and the second rear lens group G2 move as a whole for focusing. The solution in which the first rear lens group G1 is used as a focusing lens group has a shorter focusing stroke than the solution in which the first front lens group G01, the first rear lens group G1, and the second rear lens group G2 move as a whole for focusing.

Similarly, it can be learned that when the optical lens 10 is in the long-focus state, stroke compression ratio coefficient $\xi_2 = [1-\beta_2^2]\alpha_2^2$.

In some embodiments, as shown in FIG. 6, the effective focal length $f_{g01}$ of the first front lens group G01 and the combined focal length $f_{g011}$ of the first front lens group G01 and the first rear lens group G1 satisfy: $0<\beta_1\leq0.5$. For example, $\beta_1$ may be 0.364, 0.367, 0.370, or 0.447. $\beta_1=f_{g011}/f_{g01}$.

It can be learned from the relational expression $\xi_1=[1-\beta_1^2]\alpha_1^2$ that a value of the stroke compression ratio coefficient $\xi_1$ is inversely proportional to a value of $\beta_1$. By setting $\beta_1$ to $0<\beta_1\leq0.5$, $\beta_1$ can be prevented from being excessively large, so that the stroke compression ratio coefficient $\xi_1$ can be prevented from being excessively small, thereby reducing a focusing stroke of the first rear lens group G1, and reducing a volume of a focus motor.

In some embodiments, as shown in FIG. 7, the effective focal length $f_{g02}$ of the second front lens group G02 and the combined focal length $f_{g021}$ of the second front lens group G02 and the first rear lens group G1 satisfy: $0<\beta_2\leq0.5$. For example, $\beta_2$ may be 0.416, 0.439, 0.453, 0.464, or 0.448. $\beta_2=f_{g021}/f_{g02}$.

It can be learned from the relational expression $\xi_2=[1-\beta_2^2]\alpha_2^2$ that a value of the stroke compression ratio coefficient $\xi_2$ is inversely proportional to a value of $\beta_2$. By setting $\beta_2$ to $0<\beta_2\leq0.5$, $\beta_2$ can be prevented from being excessively large, so that the stroke compression ratio coefficient $\xi_2$ can be prevented from being excessively small, thereby reducing a focusing stroke of the first rear lens group G1, and reducing a volume of a focus motor.

In some embodiments, as shown in FIG. 6, the effective focal length $f_{g01}$ of the first front lens group G01 and the combined focal length $f_{g011}$ of the first front lens group G01 and the first rear lens group G1 satisfy: $0.75\leq1-\xi_1^2<1$, where $\beta_1=f_{g011}/f_{g01}$.

It can be learned from the relational expression $\xi_1=[1-\beta_1^2]\alpha_1^2$ that a value of the stroke compression ratio coefficient $\xi_1$ is directly proportional to a value of $1-\beta_1^2$. By setting $1-\beta_1^2$ to $0.75\leq1-\beta_1^2<1$, $1-\beta_1^2$ can be prevented from being excessively large or excessively small, so that the stroke compression ratio coefficient $\xi_1$ can be prevented from being excessively large or excessively small. This can reduce a focusing stroke of the first rear lens group G1, thereby reducing a volume of a focus motor. This can also avoid an excessively short focusing stroke of the first rear lens group G1, thereby reducing a precision requirement for the focus motor, and reducing costs.

In some embodiments, as shown in FIG. 7, the effective focal length $f_{g02}$ of the second front lens group G02 and the combined focal length $f_{g021}$ of the second front lens group G02 and the first rear lens group G1 satisfy: $0.75\leq1-\beta_2^2<1$, where $\beta_2=f_{go21}/f_{go2}$.

It can be learned from the relational expression $\xi_2=[1-\beta_2^2]\alpha_2^2$ that a value of the stroke compression ratio coefficient $\xi_2$ is directly proportional to a value of $1-\beta_2^2$. By setting $1-\beta_2^2$ to $0.75\leq1-\beta_2^2<1$, $1-\beta_2^2$ can be prevented from being excessively large or excessively small, so that the stroke compression ratio coefficient $\xi_2$ can be prevented from being excessively large or excessively small. This can reduce a focusing stroke of the first rear lens group G1, thereby reducing a volume of a focus motor. This can also avoid an excessively short focusing stroke of the first rear lens group G1, thereby reducing a precision requirement for the focus motor, and reducing costs.

In some embodiments, as shown in FIG. 6, the combined focal length $f_{g011}$ of the first front lens group G01 and the first rear lens group G1 and the first effective focal length $F_1$ satisfy: $0<\alpha_1\leq2$. For example, $\alpha_1$ may be 1.611, 1.706, 1.620, 1.620, or 1.662. $\alpha_1=F_1/f_{g011}$.

It can be learned from the relational expression $\xi_1=[1-\beta_1^2]\alpha_1^2$ that the stroke compression ratio coefficient $\xi_1$ is directly proportional to $\alpha_1$. By setting $\alpha_1$ to $0<\alpha_1\leq2$, $\alpha_1$ can be prevented from being excessively large, so that the stroke compression ratio coefficient $\xi_1$ can be prevented from being excessively large, thereby reducing a precision requirement for a focus motor, and reducing costs.

In some embodiments, as shown in FIG. 7, the combined focal length $f_{g021}$ of the second front lens group G02 and the first rear lens group G1 and the second effective focal length $F_2$ satisfy: $0<\alpha_2\leq2$. For example, $\alpha_2$ may be 1.655, 1.710, 1.661, 1.622, or 1.663. $\alpha_2=F_2/f_{g021}$.

It can be learned from the relational expression $\xi_2=[1-\beta_2^2]\alpha_2^2$ that the stroke compression ratio coefficient $\xi_2$ is directly proportional to $\alpha_2$. By setting $\alpha_2$ to $0<\alpha_2\leq2$, $\alpha_2$ can be prevented from being excessively large, so that the stroke compression ratio coefficient $\xi_2$ can be prevented from being excessively large, thereby reducing a precision requirement for a focus motor, and reducing costs.

In some embodiments, as shown in FIG. 6 and FIG. 7, focal powers of the first front lens group G01, the second front lens group G02, and the first rear lens group G1 all are positive, and a focal power of the second rear lens group G2 is negative.

By setting the focal powers of the first front lens group G01 and the second front lens group G02 to positive, the first front lens group G01 and the second front lens group G02 can focus a light beam, so that a light beam diameter is reduced, thereby reducing diameters of the first rear lens group G1 and the second rear lens group G2. The focal powers of the first rear lens group G1 and the second rear lens group G2 are matched in a positive-negative manner, so that some aberrations can be offset, thereby reducing an aberration of the optical lens 10, and ensuring imaging quality of the optical lens 10.

Certainly, the focal powers of the first rear lens group G1 and the second rear lens group G2 are exchanged, that is, the focal power of the first rear lens group G1 is negative, and the focal power of the second rear lens group G2 is positive.

In some embodiments, as shown in FIG. 6 and FIG. 7, the first front lens group G01 and the second front lens group G02 each include one positive lens. Specifically, the first front lens group G01 includes a positive lens L011, and the second front lens group G02 includes a positive lens L021.

The first rear lens group G1 includes a first lens L11, a second lens L12, and a third lens L13 in the direction from the object side to the image side, the first lens L11 and the third lens L13 each have a positive focal power, the second lens L12 has a negative focal power, and there is a gap between adjacent two of the first lens L11, the second lens L12, and the third lens L13.

The second rear lens group G2 includes a fourth lens L21 and a fifth lens L22 in the direction from the object side to the image side, the fourth lens L21 and the fifth lens L22 each have a negative focal power, and there is a gap between the fourth lens L21 and the fifth lens L22.

The focal powers of the lenses in the first lens group G1 are matched in a positive-negative-positive manner. This is more conducive to aberration correction of the optical lens 10. Because there is a gap between adjacent two of the first lens L11, the second lens L12, and the third lens L13, a quantity of lens surfaces in the first rear lens group G1 is increased, and a degree of freedom of design of the first rear lens group G1 is increased. This is conducive to aberration correction of the optical lens 10.

The focal powers of the lenses in the second rear lens group G2 are matched in a negative-negative manner. This is conducive to focal power balance of the optical lens 10. Because there is a gap between the fourth lens L21 and the fifth lens L22, a quantity of lens surfaces in the second rear lens group G2 is increased, and a degree of freedom of design of the second rear lens group G2 is increased. This is conducive to aberration correction of the optical lens 10.

Certainly, in addition to a negative focal power, the fourth lens L21 may alternatively have a positive focal power. In this way, the focal powers of the lenses in the second rear lens group G2 are matched in a positive-negative manner. This is conducive to positive-negative aberration offset, and is conducive to aberration correction of the optical lens 10.

In some embodiments, as shown in FIG. 6 and FIG. 7, the first turning element 1 is a prism, the first turning element 1 includes a first incident surface 11, a first emergent surface 12, and a first reflective surface 13, the first incident surface 11 is disposed facing a side on which the front lens group G0 is located, the first emergent surface 12 is disposed facing a side on which the first rear lens group G1 is located, the first reflective surface 13 is configured to reflect, to the first emergent surface 12, a light beam that enters the inside of the first turning element 1 from the first incident surface 11.

In some embodiments, as shown in FIG. 6 and FIG. 7, the first turning element 1 is a right-angle prism, an included angle between the first incident surface 11 and the first emergent surface 12 is a right angle, and an included angle between the first reflective surface 13 and the optical axis of the first rear lens group G1 is an acute angle, for example, 45°.

Certainly, in addition to a prism, the first turning element 1 may alternatively be a reflector.

In some embodiments, as shown in FIG. 6, the optical lens 10 further includes a first fixing barrel 41, the first rear lens group G1 is disposed in the first fixing barrel 41, and a spacer ring 51 is disposed between adjacent two of the first lens L11, the second lens L12, and the third lens L13; one end of the first fixing barrel 41 is provided with a limiting flange 411, and the other end is provided with a pressing ring 52; and the limiting flange 411 and the pressing ring 52 limit the first rear lens group G1 within the first fixing barrel 41.

In some embodiments, as shown in FIG. 6, a light shielding ring 53 is disposed at an edge of at least one of the first lens L11, the second lens L12, and the third lens L13, to eliminate stray light at an edge of the first lens group G1. The light shielding ring 53 may be disposed at an edge of the second lens L12.

In some embodiments, as shown in FIG. 6, the optical lens 10 further includes a second fixing barrel 42, the second rear lens group G2 is disposed in the second fixing barrel 42, and a spacer ring 51 is disposed between the fourth lens L21 and the fifth lens L22.

In some embodiments, as shown in FIG. 6, a light shielding ring 53 is disposed at an edge of at least one of the fourth lens L21 and the fifth lens L22, to eliminate stray light at an edge of the second rear lens group G2. For example, the light shielding ring 53 may be separately disposed at edges of the fourth lens L21 and the fifth lens L24.

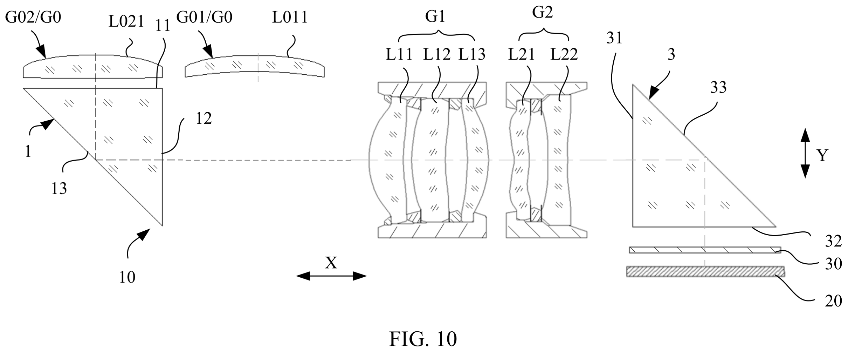

FIG. 10 is a diagram of a structure of an optical lens 10 in a long-focus state according to a second embodiment of this application. A main difference between the optical lens 10 shown in FIG. 10 and the optical lens 10 shown in FIG. 7 lies in that a second turning element 3 is added to the optical lens 10 in FIG. 10. Details are as follows:

As shown in FIG. 10, the optical lens 10 further includes a second turning element 3, the second turning element 3 is disposed on an image side of the second rear lens group G2, the second turning element 3 is a prism and has a prism incident surface 31, a prism emergent surface 32, and a prism reflective surface 33, the prism incident surface 31 is disposed facing a side on which the second rear lens group G2 is located, the prism emergent surface 32 is disposed facing a side on which the image plane of the optical lens 10 is located, the prism emergent surface 32 is parallel to an optical axis of the second rear lens group G2, and the prism reflective surface 33 is configured to reflect, to the prism emergent surface 32, a light beam that enters the inside of the second turning element 3 from the prism incident surface 31.

The second turning element 3 is disposed, so that an optical path of the optical lens 10 can be folded, to reduce a size of the optical lens 10 in the first direction X, thereby reducing space occupied by the optical lens 10 inside the electronic device. In addition, this helps control a size of the photosensitive surface (that is, the image plane) of the photosensitive element 20 in the first direction X, and the photosensitive surface of the photosensitive element 20 can be designed to be larger, thereby reducing space occupied by the photosensitive element 20 in the thickness direction Y of the electronic device.

In some embodiments, as shown in FIG. 10, the second turning element 3 is a right-angle prism, an included angle between the prism incident surface 31 and the prism emergent surface 32 is a right angle, and an included angle between the prism reflective surface 33 and the optical axis of the second rear lens group G2 is an acute angle, for example, 45°.

Certainly, in addition to a prism, the second turning element 3 may alternatively be a reflector.

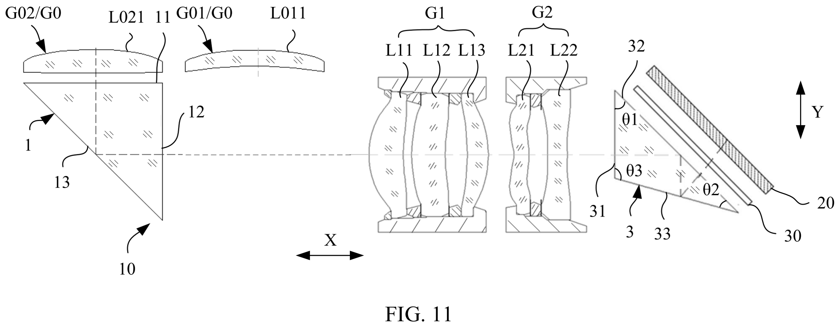

FIG. 11 is a diagram of a structure of an optical lens 10 in a long-focus state according to a third embodiment of this application. A main difference between the optical lens 10 shown in FIG. 11 and the optical lens 10 shown in FIG. 10 lies in that the prism emergent surface 32 of the second turning element 3 is obliquely disposed relative to the optical axis of the second rear lens group G2. Details are as follows:

As shown in FIG. 11, the second turning element 3 is a prism and has a prism incident surface 31 and a prism emergent surface 32, the prism incident surface 31 is disposed facing a side on which the second rear lens group G2 is located, the prism emergent surface 32 is disposed facing a side on which the image plane of the optical lens 10 is located, and the prism emergent surface 32 is obliquely disposed relative to an optical axis of the second rear lens group G2. For example, an included angle between the prism emergent surface 32 and the optical axis of the second rear lens group G2 may be 45°.

The prism emergent surface 32 is obliquely disposed relative to the optical axis of the second rear lens group G2. In this way, to receive an emergent light beam of the second turning element 3, the photosensitive element 3 also needs to be obliquely disposed relative to the optical axis of the second rear lens group G2. This can reduce a size of the photosensitive element 3 in a second direction Y (that is, the thickness direction of the electronic device), thereby making a structure of the camera module 100 more compact, and reducing a thickness of the electronic device.

In some embodiments, as shown in FIG. 11, the second turning element 3 is a secondary reflection prism, the second turning element 3 has a prism reflective surface 33, and the prism reflective surface 33 is connected between the prism incident surface 31 and the prism emergent surface 32. The prism emergent surface 32 is both a refractive surface and a reflective surface. A light beam that enters the inside of the second turning element 3 from the prism incident surface 31 is reflected twice by the prism emergent surface 32 and the prism reflective surface 33, and then is emitted by the prism emergent surface 32 to the second turning element 3.

As shown in FIG. 11, a first included angle $\theta 1$ between the prism emergent surface 32 and the prism incident surface 31 is an acute angle, for example, the first included angle is 45°; a second included angle $\theta 2$ between the prism emergent surface 32 and the prism reflective surface 33 is an acute angle, for example, the second included angle is 30°; and a third included angle $\theta 3$ between the prism incident surface 31 and the prism reflective surface 33 is an obtuse angle, for example, the third included angle is 105°.

Certainly, the second turning element 3 is not limited to a secondary reflection prism, and may alternatively be a tertiary reflection prism, a quadratic reflection prism, or the like. This is not specifically limited herein.

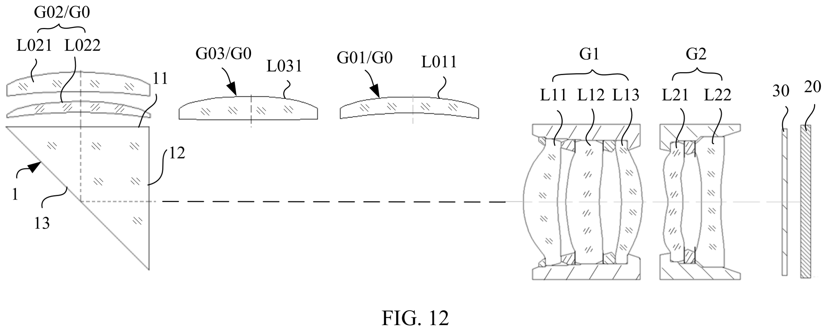

FIG. 12 is a diagram of a structure of an optical lens 10 in a long-focus state according to a fourth embodiment of this application. A main difference between the optical lens 10 shown in FIG. 12 and the optical lens 10 shown in FIG. 7 lies in that the front lens group G0 has different compositions. Details are as follows:

As shown in FIG. 12, the front lens group G0 further includes a third front lens group G03, and the third front lens group G03 is disposed between the first front lens group G01 and the second front lens group G02. The first turning element 1 further has a third position. When the first turning element 1 is at the third position, the first turning element 1 is located on an image side of the third front lens group G03, the optical lens 10 has a third effective focal length $F_3$, and $F_1<F_3<F_2$, that is, the optical lens 10 is in a medium-focus state. In this way, a zoom section of the optical lens 10 can be increased, thereby improving zoom performance of the optical lens 10.

In some embodiments, as shown in FIG. 12, the first front lens group G01 includes one positive lens (namely, a positive lens L011), the second front lens group G02 includes two positive lenses (namely, a positive lens L021 and a positive lens L022), the two positive lenses in the second front lens group G02 are spaced apart, and the third front lens group G03 includes one positive lens (namely, a positive lens L031).

Because the second front lens group G02 includes the two positive lenses that are spaced apart, a quantity of lens surfaces in the second front lens group G02 is increased, and a degree of freedom of design of the second front lens group G02 is increased. This is conducive to aberration correction of the optical lens 10.

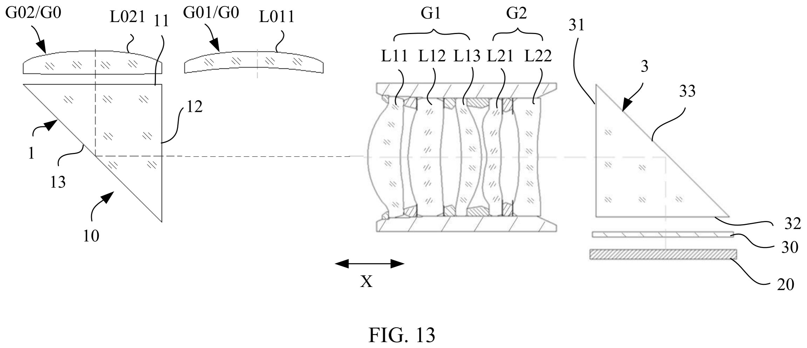

FIG. 13 is a diagram of a structure of an optical lens 10 in a long-focus state according to a fourth embodiment of this application. A main difference between the optical lens 10 shown in FIG. 13 and the optical lens 10 shown in FIG. 10 lies in that the optical lens 10 has different movable lens groups. Details are as follows:

As shown in FIG. 13, the second rear lens group G2 and the first rear lens group G1 are fixed relative to each other, to form a rear lens group G10; and the rear lens group G10 is a movable lens group, and may move relative to the front lens group G0 in the first direction X. In this way, when the optical lens 10 switches between focusing on a long shot and focusing on a close shot, the rear lens group G10 may move in the first direction X, to implement internal focusing of the optical lens 10. In addition, when the first turning element 1 moves between the first position and the second position, the rear lens group G10 may move in the first direction X. For example, as shown in FIG. 8, when the first turning element 1 moves from the first position to the second position, the rear lens group G10 moves in a direction away from the first turning element 1, to prevent the image plane IMA of the optical lens 10 from drifting, so that the image plane IMA position of the optical lens 10 remains unchanged.

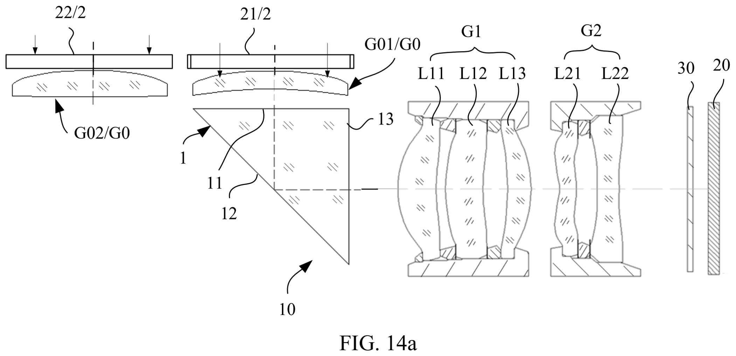

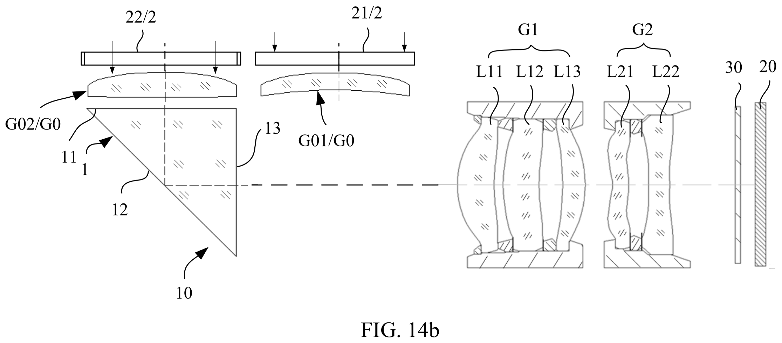

FIG. 14a is a diagram of a structure of an optical lens 10 in a short-focus state according to a fifth embodiment of this application, and FIG. 14b is a diagram of a structure of the optical lens 10 in a long-focus state according to the fifth embodiment of this application. A main difference between the optical lens 10 shown in FIG. 14a and FIG. 14b and the optical lens 10 shown in FIG. 6 and FIG. 7 lies in that a light shielding apparatus 2 is added to the optical lens 10 shown in FIG. 14a and FIG. 14b. Details are as follows:

As shown in FIG. 14a and FIG. 14b, a light shielding apparatus 2 is disposed on an object side of the first turning element 1. As shown in FIG. 14a, when the first turning element 1 is at the first position, the light shielding apparatus 2 is configured to shield a light beam (namely, a first light beam) emitted to the image side of the second front lens group G02. The first light beam may be an incident light beam of the second front lens group G02 (as shown in FIG. 14a), or may be an emergent light beam of the second front lens group G02, or may be a light beam between lenses of the second front lens group G02.

As shown in FIG. 14b, when the first turning element 1 is at the second position, the light shielding apparatus 2 is configured to shield a light beam (namely, a second light beam) emitted to the image side of the first front lens group G01. The second light beam may be an incident light beam of the first front lens group G01 (as shown in FIG. 14b), or may be an emergent light beam of the first front lens group G01, or may be a light beam between lenses of the first front lens group G01.

The light shielding apparatus 2 is disposed. In this way, as shown in FIG. 14a, when the first turning element 1 is at the first position, the light shielding apparatus 2 can prevent a light beam from being emitted from the second front lens group G02 to the inside of the optical lens 1, so that stray light is prevented from being generated to affect imaging quality of the optical lens 10 in the short-focus state. As shown in FIG. 14b, when the first turning element 1 is at the second position, the light shielding apparatus 2 may prevent a light beam from being emitted from the first front lens group G01 to the inside of the optical lens 1, so that stray light is prevented from being generated to affect imaging quality of the optical lens 10 in the long-focus state.

In some embodiments, as shown in FIG. 14a and FIG. 14b, the light shielding apparatus 2 includes a first variable aperture stop 21 and a second variable aperture stop 22, the first variable aperture stop 21 is disposed on an object side of the first front lens group G01, and the second variable aperture stop 22 is disposed on an object side of the second front lens group G02.

As shown in FIG. 14a, when the first turning element 1 is at the first position, the first variable aperture stop 21 is in an open state, and the second variable aperture stop 22 is in a closed state, to shield an incident light beam of the second front lens group G02. As shown in FIG. 14b, when the first turning element 1 is at the second position, the first variable aperture stop 21 is in a closed state, to shield an incident light beam of the first front lens group G01, and the second variable aperture stop 22 is in an open state.

In this way, the light shielding apparatus 2 can prevent the optical lens 10 from generating stray light. In addition, when the first turning element 1 is at the first position, the first variable aperture stop 21 may accurately control luminous flux of the optical lens 10 based on brightness of a to-be-photographed scene, to improve imaging quality of the optical lens 10 in the short-focus state. When the first turning element 1 is at the second position, the second variable aperture stop 22 may accurately control luminous flux of the optical lens 10 based on brightness of a to-be-photographed scene, to improve imaging quality of the optical lens 10 in the long-focus state.

In addition to the object side of the first front lens group G01, the first variable aperture stop 21 may alternatively be disposed on the image side of the first front lens group G01, or may be disposed between lenses of the first front lens group G01. In addition to the object side of the second front lens group G02, the second variable aperture stop 22 may alternatively be disposed on the image side of the second front lens group G02, or may be disposed between lenses of the second front lens group G02.

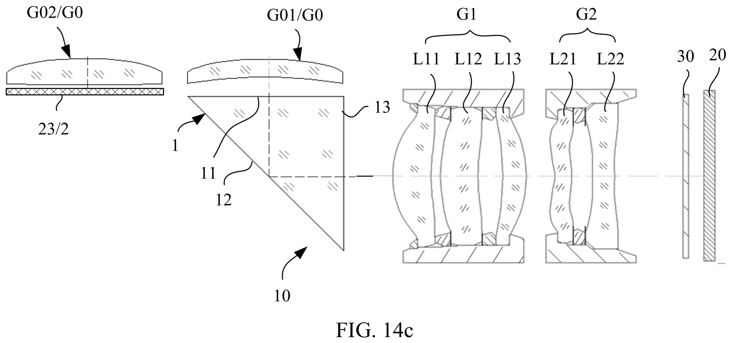

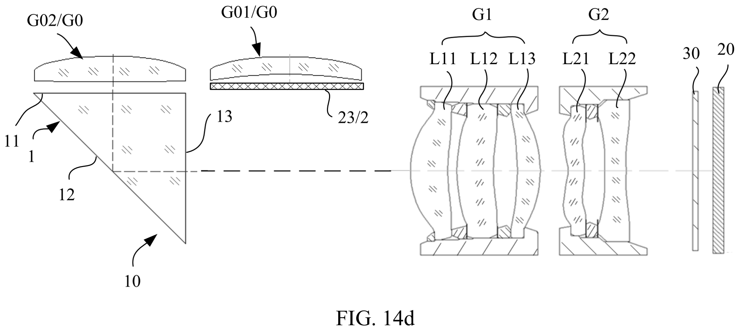

FIG. 14c is a diagram of a structure of an optical lens 10 in a short-focus state according to a sixth embodiment of this application, and FIG. 14d is a diagram of a structure of the optical lens 10 in a long-focus state according to the sixth embodiment of this application. A main difference between the optical lens 10 shown in FIG. 14c and FIG. 14d and the optical lens 10 shown in FIG. 14a and FIG. 14b lies in that the light shielding apparatus 2 has different structures. Details are as follows:

As shown in FIG. 14c and FIG. 14d, the light shielding apparatus 2 includes a shielding plate 23; and the shielding plate 23 is disposed on an image side of the front lens group G0, and may move relative to the front lens group G0. As shown in FIG. 14c, when the first turning element 1 is at the first position, the shielding plate 23 moves to the image side of the second front lens group G02, to shield an emergent light beam of the second front lens group G02. As shown in FIG. 14d, when the first turning element 1 is at the second position, the shielding plate 23 moves to the image side of the first front lens group G01, to shield an emergent light beam of the first front lens group G01.

The light shielding apparatus 2 is disposed as a movable shielding plate 23, and the shielding plate 23 may move to shield an emergent light beam of the first front lens group G01 or the second front lens group G02, so that the shielding plate 23 does not need to be separately disposed at the positions of the first front lens group G01 and the second front lens group G02, thereby simplifying a structure of the light shielding apparatus 2, and reducing costs of the optical lens 10.

In addition to the image side of the front lens group G0, the shielding plate 23 may alternatively be disposed on an object side of the front lens group G0. Specifically, the shielding plate 23 is disposed on the object side of the front lens group G0, and may move relative to the front lens group G0. When the first turning element 1 is at the first position, the shielding plate 23 moves to the object side of the second front lens group G02, to shield an incident light beam of the second front lens group G02. When the first turning element 1 is at the second position, the shielding plate 23 moves to the object side of the first front lens group G01, to shield an incident light beam of the first front lens group G01.

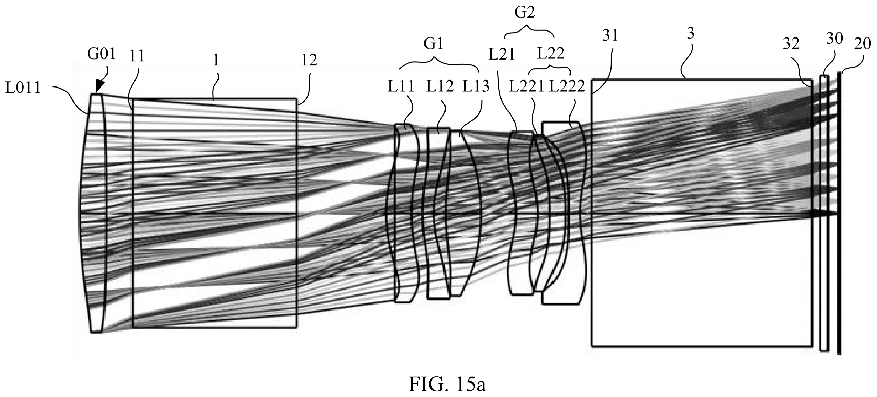

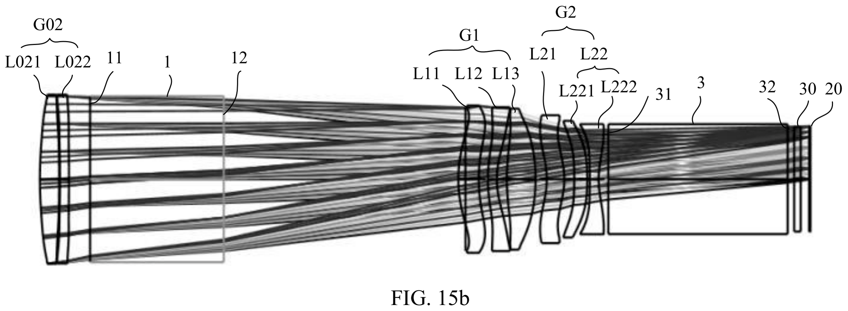

FIG. 15a is a diagram of a structure of an optical lens 10 in a short-focus state according to a seventh embodiment of this application, and FIG. 15b is a diagram of a structure of the optical lens 10 in a long-focus state according to the seventh embodiment of this application. Optical paths of the first turning element 1 and the second turning element 3 in FIG. 15a and FIG. 15b both are unfolded, and are replaced with parallel plates. A main difference between the optical lens 10 shown in FIG. 15a and FIG. 15b and the optical lens 10 shown in FIG. 10 lies in that the second rear lens group G2 has different compositions. Details are as follows:

As shown in FIG. 15a and FIG. 15b, the fifth lens L22 includes one positive lens L221 and one negative lens L222 that are spaced apart. A combined focal power of the positive lens L221 and the negative lens L222 is negative. This is equivalent to splitting the fifth lens L22 into the positive lens L221 and the negative lens L222, so that a quantity of lens surfaces in the second rear lens group G2 is increased, and a degree of freedom of design of the second rear lens group G2 is increased. This is conducive to aberration correction of the optical lens.

As shown in FIG. 15a and FIG. 15b, the positive lens L221 may be disposed between the fourth lens L21 and the negative lens L222, but this is not limited thereto. The negative lens L222 may be disposed between the positive lens L221 and the fourth lens L21.

In some embodiments, as shown in FIG. 15a and FIG. 15b, there is an air gap between the positive lens L221 and the negative lens L222. Certainly, a medium between the positive lens L221 and the negative lens L222 is not limited to air, and may alternatively be another medium, for example, nitrogen or an adhesive layer.

In some embodiments, as shown in FIG. 15a and FIG. 15b, the first front lens group G01 includes one positive lens L011, and the second front lens group G02 includes one positive lens L021 and one negative lens L022 in the direction from the object side to the image side. Focal powers of the lenses in the second front lens group G02 are matched in a positive-negative manner, so that positive-negative aberration offset can be performed, thereby improving imaging quality of the optical lens 10.

The following specifically describes the optical lens 10 shown in FIG. 15a and FIG. 15b with reference to a specific parameter and a simulation result.

Table 1.1 shows a main parameter of the optical lens 10 in the short-focus state according to the seventh embodiment of this application; Table 1.2 shows a main parameter of the optical lens 10 in the long-focus state according to the seventh embodiment of this application; Table 1.3 shows an aspheric coefficient of each surface of an optical element when the optical lens 10 is in the short-focus state according to the seventh embodiment of this application; and Table 1.4 shows an aspheric coefficient of each surface of an optical element when the optical lens 10 is in the long-focus state according to the seventh embodiment of this application.

Table 1.1 Main parameter of the optical lens 10 in the short-focus state according to the seventh embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STANDARD | | 0.00E+00 | 1.00E+10 | | | | 0.00E+00 |
| S1 | QED_TYPE | L011 | 2.38E+01 | 1.28E+00 | Resin | 1.5445 | 56 | 5.74E+00 |
| S2 | QED_TYPE | | -1.93E+02 | 1.25E+00 | | | | 5.74E+00 |

(continued)

| Surface number | Surface type | Optical element | Curvature radius | Thickness (INF) | Material | Refractive index | Abbe number | Light transmission radius |
|---|---|---|---|---|---|---|---|---|
| S3 | STANDARD | Prism 1 | 0.00E+00 | 7.85E+00 | Glass | 1.804 | 46.57 | 5.52E+00 |
| S4 | STANDARD | | 1.17E+18 | 4.69E+00 | | | | 4.88E+00 |
| S5 | STANDARD | | 0.00E+00 | -4.17E-01 | | | | 4.19E+00 |
| S6 | QED_TYPE | L11 | 7.51E+00 | 1.20E+00 | Resin | 1.5445 | 56 | 4.18E+00 |
| S9 | QED_TYPE | | 1.05E+01 | 5.30E-01 | | | | 4.29E+00 |
| S10 | QED_TYPE | L12 | 8.04E+00 | 5.27E-01 | Resin | 1.67 | 19.4 | 4.12E+00 |
| S11 | QED_TYPE | | 4.67E+00 | 5.90E-01 | | | | 3.99E+00 |
| S12 | QED_TYPE | L13 | 1.18E+01 | 1.69E+00 | Resin | 1.5445 | 56 | 3.99E+00 |
| S13 | QED_TYPE | | -9.25E+00 | 1.67E+00 | | | | 3.98E+00 |
| S14 | QED_TYPE | L21 | -4.19E+00 | 1.03E+00 | Resin | 1.5445 | 56 | 3.94E+00 |
| S15 | QED_TYPE | | -3.96E+00 | 5.83E-01 | | | | 3.81E+00 |
| S16 | QED_TYPE | L221 | -2.59E+01 | 7.60E-01 | Resin | 1.67 | 19.4 | 3.78E+00 |
| S17 | QED_TYPE | | -1.46E+01 | 1.51E-01 | | | | 3.70E+00 |
| S18 | QED_TYPE | L222 | -2.08E+02 | 5.27E-01 | Resin | 1.5445 | 56 | 3.75E+00 |
| S19 | QED_TYPE | | 5.19E+00 | 5.67E-01 | | | | 4.39E+00 |
| S20 | STANDARD | Prism2 | 0.00E+00 | 1.05E+01 | Glass | 1.804 | 46.57 | 4.60E+00 |
| S21 | STANDARD | | 0.00E+00 | 3.83E-01 | | | | 6.44E+00 |
| S22 | STANDARD | IRCF | 0.00E+00 | 3.83E-01 | Glass | 1.523 | 54.5 | 6.56E+00 |
| S23 | STANDARD | | 0.00E+00 | 4.93E-01 | | | | 6.64E+00 |
| S24 | STANDARD | IMA | 0.00E+00 | 0.00E+00 | | | | 6.83E+00 |

In the table, parameter values of the curvature radius, the thickness, and the light transmission radius all are in a unit of mm.

S1 represents an object side surface of the positive lens L011, and S2 represents an image side surface of the positive lens L011. PRISM1 represents the first turning element 1, and the first turning element 1 is a prism and has a light refraction function. S3 represents a first light incident surface 11 of the first turning element 1, and S4 represents a first light emergent surface 12 of the first turning element 1. S6 represents an object side surface of the first lens L11, and S9 represents an image side surface of the first lens L11. S10 represents an object side surface of the second lens L12, and S11 represents an image side surface of the second lens L12. S12 represents an object side surface of the third lens L13, and S13 represents an image side surface of the third lens L13. S14 represents an object side surface of the fourth lens L21, and S15 represents an image side surface of the fourth lens L21. S16 represents an object side surface of the positive lens L221, and S17 represents an image side surface of the positive lens L221. S18 represents an object side surface of the negative lens L222, and S19 represents an image side surface of the negative lens L222. PRISM2 represents the second turning element 3, and the second turning element 3 is a prism and has a light refraction function. S20 represents a prism incident surface 31 of the second turning element 3, and S21 represents a prism emergent surface 32 of the second turning element 3. IRCF represents a light filter, and the light filter is an infrared light filter. S22 is an object side surface of the light filter, and S23 is an image side surface of the light filter. IMA represents an image plane IMAGE, and the image plane IMAGE may be a photosensitive surface of a photosensitive element.

A value corresponding to a surface number $S_n$ in the "thickness" parameter column in the table means a distance, on an optical axis, between a surface numbered $S_n$ and a surface numbered $S_{n+1}$. A rule of a positive or negative sign before a thickness parameter is as follows: A vertex of the surface $S_n$ (an intersection with the optical axis) is used as a calculation origin, and a vertex of the surface $S_{n+1}$ is positive on the right and negative on the left.

The curvature radius in the table is a curvature radius of a surface with a corresponding surface number on the optical axis. A rule of a positive or negative sign before a curvature radius parameter is as follows: A vertex of the surface $S_n$ is used as a calculation origin, and a sphere center is positive on the right and negative on the left. If the curvature radius is 0.00E+00, it indicates that a surface corresponding to the parameter is a plane, and the curvature radius is infinite.

It should be noted that the rule of the positive or negative sign before the thickness parameter and the rule of the positive or negative sign before the curvature radius parameter in the table, and explanations of meanings of the value corresponding to the surface number $S_n$ in the "thickness" parameter column in the table are also applicable to the following tables.

Table 1.2 Main parameter of the optical lens 10 in the long-focus state according to the seventh embodiment of this application

| Surface number | Surface type | Optical element | Curvature radius | Thickness (INF) | Material | Refractive index | Abbe number | Light transmission radius |
|---|---|---|---|---|---|---|---|---|
| 0 | STAN DARD | | 0.00E+00 | 1.00E+10 | | | | 0.00E+00 |
| 1 | QED_ TYPE | L021 | 2.74E+01 | 1.13E+00 | Resin | 1.5445 | 56 | 4.79E+00 |
| 2 | QED_ TYPE | | -6.27E+01 | 4.79E-02 | | | | 4.79E+00 |
| 3 | QED_ TYPE | L022 | -9.07E+01 | 5.27E-01 | Resin | 1.67 | 19.4 | 4.78E+00 |
| 4 | QED_ TYPE | | -3.69E+02 | 1.24E+00 | | | | 4.77E+00 |
| 5 | STAN DARD | Prism1 | 0.00E+00 | 7.85E+00 | Glass | 1.804 | 46.57 | 4.71E+00 |
| 6 | STAN DARD | | 0.00E+00 | 1.42E+01 | | | | 4.52E+00 |
| 7 | STAN DARD | | 0.00E+00 | -4.17E-01 | | | | 4.07E+00 |
| 8 | QED_ TYPE | L11 | 7.51E+00 | 1.20E+00 | Resin | 1.5445 | 56 | 4.05E+00 |
| 9 | QED_ TYPE | | 1.05E+01 | 5.30E-01 | | | | 4.17E+00 |

(continued)

| Surface number | Surface type | Optical element | Curvature radius | Thickness (INF) | Material | Refractive index | Abbe number | Light transmission radius |
|---|---|---|---|---|---|---|---|---|
| 10 | QED_TYPE | L12 | 8.04E+00 | 5.27E-01 | Resin | 1.67 | 19.4 | 4.08E+00 |
| 11 | QED_TYPE | | 4.67E+00 | 5.90E-01 | | | | 3.99E+00 |
| 12 | QED_TYPE | L13 | 1.18E+01 | 1.69E+00 | Resin | 1.5445 | 56 | 4.00E+00 |
| 13 | QED_TYPE | | -9.25E+00 | 6.61E-01 | | | | 3.96E+00 |
| 14 | QED_TYPE | L21 | -4.19E+00 | 1.03E+00 | Resin | 1.5445 | 56 | 3.63E+00 |
| 15 | QED_TYPE | | -3.96E+00 | 5.83E-01 | | | | 3.36E+00 |
| 16 | QED_TYPE | L221 | -2.59E+01 | 7.60E-01 | Resin | 1.67 | 19.4 | 3.31E+00 |
| 17 | QED_TYPE | | -1.46E+01 | 1.51E-01 | | | | 3.30E+00 |
| 18 | QED_TYPE | L222 | -2.08E+02 | 5.27E-01 | Resin | 1.5445 | 56 | 3.10E+00 |
| 19 | QED_TYPE | | 5.19E+00 | 5.67E-01 | | | | 3.12E+00 |
| 20 | STANDARD | Prism2 | 0.00E+00 | 1.05E+01 | Glass | 1.804 | 46.57 | 3.12E+00 |
| 21 | STANDARD | | 0.00E+00 | 3.83E-01 | | | | 2.98E+00 |
| 22 | STANDARD | IRCF | 0.00E+00 | 3.83E-01 | Glass | 1.523 | 54.5 | 2.97E+00 |
| 23 | STANDARD | | 0.00E+00 | 4.93E-01 | | | | 2.97E+00 |
| 24 | STANDARD | IMA | 0.00E+00 | 0.00E+00 | | | | 3.02E+00 |

In the table, parameter values of the curvature radius, the thickness, and the light transmission radius all are in a unit of mm.

S1 represents an object side surface of the positive lens L021, and S2 represents an image side surface of the positive lens L021. S3 represents an object side surface of the negative lens L022, and S4 represents an image side surface of the negative lens L022. PRISM1 represents the first turning element 1, and the first turning element 1 is a prism and has a light refraction function. S5 represents a first light incident surface 11 of the first turning element 1, and S6 represents a first light emergent surface 12 of the first turning element 1. S8 represents an object side surface of the first lens L11, and S9 represents an image side surface of the first lens L11. S10 represents an object side surface of the second lens L12, and S11 represents an image side surface of the second lens L12. S12 represents an object side surface of the third lens L13, and S13 represents an image side surface of the third lens L13. S14 represents an object side surface of the fourth lens L21, and S15 represents an image side surface of the fourth lens L21. S16 represents an object side surface of the positive lens L221, and S17 represents an image side surface of the positive lens L221. S18 represents an object side surface of the negative lens L222, and S19 represents an image side surface of the negative lens L222. PRISM2 represents the second turning element 3, and the second turning element 3 is a prism and has a light refraction function. S20 represents a prism incident surface 31 of the second turning element 3, and S21 represents a prism emergent surface 32 of the second turning element 3. IRCF represents a light filter, and the light filter is an infrared light filter. S22 is an object side surface of the light filter, and S23 is an image side surface of the light filter. IMA represents an image plane IMAGE, and the image plane IMAGE may be a photosensitive surface of a photosensitive element.

In some embodiments, an aspheric surface in the optical lens 10 may be defined by using the following aspheric curve equation:

$$z = \frac{cr^2}{1 + \sqrt{1 - (1+K)\ c^2 r^2}} + \sum_{i=1}^{N} A_i r^{2i}.$$

Herein, z is a relative distance between a point that is on the aspheric surface and that is at a distance of r from an optical axis and an intersecting tangent plane tangent to the optical axis of the aspheric surface; r is a vertical distance between a point on an aspheric curve and the optical axis; c is a curvature; K is a cone coefficient; and $A_i$ is an $i$th-order aspheric coefficient. For details, refer to Table 1.3 and Table 1.4.

Table 1.3 Aspheric coefficient of each surface of the optical element when the optical lens 10 is in the short-focus state according to the seventh embodiment of this application

| Surface number | K | $A_0$ | $A_1$ | $A_2$ | $A_3$ | $A_4$ | $A_5$ | $A_6$ | $A_7$ |
|---|---|---|---|---|---|---|---|---|---|
| 0 | 0 | 0.00E+00 | 0.00E+00 | 0.00E+00 | 0.00E+00 | 0.00E+00 | 0.00E+00 | 0.00E+00 | 0.00E+00 |
| 1 | 0 | -1.46E-01 | -2.11E-02 | -6.01E-03 | -1.19E-03 | -6.27E-04 | 2.40E-05 | 0.00E+00 | 0.00E+00 |
| 2 | 0 | -1.35E-01 | -2.02E-02 | -5.21E-03 | -1.20E-03 | -4.50E-04 | 3.26E-05 | 0.00E+00 | 0.00E+00 |
| 3 | 0 | 0.00E+00 | 0.00E+00 | 0.00E+00 | 0.00E+00 | 0.00E+00 | 0.00E+00 | 0.00E+00 | 0.00E+00 |
| 4 | 0 | 0.00E+00 | 0.00E+00 | 0.00E+00 | 0.00E+00 | 0.00E+00 | 0.00E+00 | 0.00E+00 | 0.00E+00 |
| 5 | 0 | 0.00E+00 | 0.00E+00 | 0.00E+00 | 0.00E+00 | 0.00E+00 | 0.00E+00 | 0.00E+00 | 0.00E+00 |
| 6 | 0 | -6.75E-01 | -1.92E-01 | -1.66E-02 | 1.74E-04 | 2.49E-03 | 8.27E-04 | 4.59E-05 | 0.00E+00 |
| 7 | 0 | -8.52E-01 | -2.26E-01 | 5.60E-02 | -8.09E-03 | 2.23E-03 | -7.87E-04 | 6.33E-04 | 0.00E+00 |
| 8 | 0 | -9.85E-01 | 6.42E-02 | 3.34E-02 | -1.63E-02 | 4.40E-03 | -5.90E-04 | 4.77E-04 | 0.00E+00 |
| 9 | 0 | -1.55E+00 | 5.21E-02 | 4.76E-03 | -1.14E-02 | 6.64E-04 | 1.49E-05 | 3.38E-04 | 0.00E+00 |
| 10 | 0 | -5.30E-01 | 2.45E-02 | 4.09E-02 | 8.45E-03 | -2.28E-03 | 4.70E-04 | 2.80E-04 | 0.00E+00 |
| 11 | 0 | -1.17E-01 | 2.70E-02 | 1.83E-02 | 7.22E-03 | 1.11E-03 | 5.76E-04 | 2.29E-04 | 0.00E+00 |
| 12 | 0 | 2.50E+00 | -4.34E-02 | 5.18E-02 | 5.54E-03 | 5.90E-03 | 1.04E-03 | 1.01E-03 | 0.00E+00 |
| 13 | 0 | 2.55E+00 | -1.38E-02 | 3.88E-02 | -3.19E-03 | 1.76E-03 | -2.28E-03 | 6.37E-04 | 0.00E+00 |
| 14 | 0 | -6.57E-01 | 2.12E-01 | -1.11E-02 | -1.89E-04 | -1.35E-03 | -4.64E-03 | 4.03E-04 | 0.00E+00 |
| 15 | 0 | -7.20E-01 | 1.78E-01 | -1.16E-02 | 6.62E-03 | 3.28E-03 | -2.42E-03 | 3.89E-04 | 0.00E+00 |
| 16 | 0 | -1.18E+00 | 4.49E-03 | -3.04E-02 | -1.25E-02 | 2.00E-04 | -3.26E-03 | 5.11E-04 | 5.11E-04 |
| 17 | 0 | -2.54E+00 | 1.56E-01 | -4.93E-02 | 4.93E-03 | 1.75E-03 | 3.08E-05 | 8.61E-04 | 0.00E+00 |
| 18 | 0 | 0.00E+00 | 0.00E+00 | 0.00E+00 | 0.00E+00 | 0.00E+00 | 0.00E+00 | 0.00E+00 | 0.00E+00 |
| 19 | 0 | 0.00E+00 | 0.00E+00 | 0.00E+00 | 0.00E+00 | 0.00E+00 | 0.00E+00 | 0.00E+00 | 0.00E+00 |
| 20 | 0 | 0.00E+00 | 0.00E+00 | 0.00E+00 | 0.00E+00 | 0.00E+00 | 0.00E+00 | 0.00E+00 | 0.00E+00 |
| 21 | 0 | 0.00E+00 | 0.00E+00 | 0.00E+00 | 0.00E+00 | 0.00E+00 | 0.00E+00 | 0.00E+00 | 0.00E+00 |
| 22 | 0 | 0.00E+00 | 0.00E+00 | 0.00E+00 | 0.00E+00 | 0.00E+00 | 0.00E+00 | 0.00E+00 | 0.00E+00 |
| 23 | 0 | 0.00E+00 | 0.00E+00 | 0.00E+00 | 0.00E+00 | 0.00E+00 | 0.00E+00 | 0.00E+00 | 0.00E+00 |

Table 1.4 Aspheric coefficient of each surface of the optical element when the optical lens 10 is in the long-focus state according to the seventh embodiment of this application

| Surface number | K | $A_0$ | $A_1$ | $A_2$ | $A_3$ | $A_4$ | $A_5$ | $A_6$ | $A_7$ |
|---|---|---|---|---|---|---|---|---|---|
| 0 | 0 | 0.00E+00 | 0.00E+00 | 0.00E+00 | 0.00E+00 | 0.00E+00 | 0.00E+00 | 0.00E+00 | 0.00E+00 |
| 1 | 0 | -1.45E-01 | -1.12E-01 | -6.60E-02 | 6.52E-03 | 2.54E-02 | 1.75E-03 | 2.77E-03 | 0.00E+00 |
| 2 | 0 | -7.56E-02 | -6.40E-02 | -4.99E-02 | -6.21E-04 | 1.65E-02 | -4.51E-03 | 2.18E-03 | 0.00E+00 |
| 3 | 0 | 3.68E-02 | 1.03E-01 | 5.06E-02 | -1.42E-02 | -1.78E-02 | 5.71E-03 | -3.92E-03 | 0.00E+00 |
| 4 | 0 | -7.08E-02 | 2.10E-02 | -2.44E-02 | -5.90E-02 | -4.12E-02 | -1.96E-03 | -8.24E-03 | 0.00E+00 |
| 5 | 0 | 0.00E+00 | 0.00E+00 | 0.00E+00 | 0.00E+00 | 0.00E+00 | 0.00E+00 | 0.00E+00 | 0.00E+00 |
| 6 | 0 | 0.00E+00 | 0.00E+00 | 0.00E+00 | 0.00E+00 | 0.00E+00 | 0.00E+00 | 0.00E+00 | 0.00E+00 |
| 7 | 0 | 0.00E+00 | 0.00E+00 | 0.00E+00 | 0.00E+00 | 0.00E+00 | 0.00E+00 | 0.00E+00 | 0.00E+00 |
| 8 | 0 | -6.75E-01 | -1.92E-01 | -1.66E-02 | 1.74E-04 | 2.49E-03 | 8.27E-04 | 4.59E-05 | 0.00E+00 |
| 9 | 0 | -8.52E-01 | -2.26E-01 | 5.60E-02 | -8.09E-03 | 2.23E-03 | -7.87E-04 | 6.33E-04 | 0.00E+00 |
| 10 | 0 | -9.85E-01 | 6.42E-02 | 3.34E-02 | -1.63E-02 | 4.40E-03 | -5.90E-04 | 4.77E-04 | 0.00E+00 |
| 11 | 0 | -1.55E+00 | 5.21E-02 | 4.76E-03 | -1.14E-02 | 6.64E-04 | 1.49E-05 | 3.38E-04 | 0.00E+00 |
| 12 | 0 | -5.30E-01 | 2.45E-02 | 4.09E-02 | 8.45E-03 | -2.28E-03 | 4.70E-04 | 2.80E-04 | 0.00E+00 |
| 13 | 0 | -1.17E-01 | 2.70E-02 | 1.83E-02 | 7.22E-03 | 1.11E-03 | 5.76E-04 | 2.29E-04 | 0.00E+00 |
| 14 | 0 | 2.50E+00 | -4.34E-02 | 5.18E-02 | 5.54E-03 | 5.90E-03 | 1.04E-03 | 1.01E-03 | 0.00E+00 |
| 15 | 0 | 2.55E+00 | -1.38E-02 | 3.88E-02 | -3.19E-03 | 1.76E-03 | -2.28E-03 | 6.37E-04 | 0.00E+00 |
| 16 | 0 | -6.57E-01 | 2.12E-01 | -1.11E-02 | -1.89E-04 | -1.35E-03 | -4.64E-03 | 4.03E-04 | 0.00E+00 |
| 17 | 0 | -7.20E-01 | 1.78E-01 | -1.16E-02 | 6.62E-03 | 3.28E-03 | -2.42E-03 | 3.89E-04 | 0.00E+00 |
| 18 | 0 | -1.18E+00 | 4.49E-03 | -3.04E-02 | -1.25E-02 | 2.00E-04 | -3.26E-03 | 5.11E-04 | 0.00E+00 |
| 19 | 0 | -2.54E+00 | 1.56E-01 | -4.93E-02 | 4.93E-03 | 1.75E-03 | 3.08E-05 | 8.61E-04 | 0.00E+00 |
| 20 | 0 | 0.00E+00 | 0.00E+00 | 0.00E+00 | 0.00E+00 | 0.00E+00 | 0.00E+00 | 0.00E+00 | 0.00E+00 |
| 21 | 0 | 0.00E+00 | 0.00E+00 | 0.00E+00 | 0.00E+00 | 0.00E+00 | 0.00E+00 | 0.00E+00 | 0.00E+00 |
| 22 | 0 | 0.00E+00 | 0.00E+00 | 0.00E+00 | 0.00E+00 | 0.00E+00 | 0.00E+00 | 0.00E+00 | 0.00E+00 |
| 23 | 0 | 0.00E+00 | 0.00E+00 | 0.00E+00 | 0.00E+00 | 0.00E+00 | 0.00E+00 | 0.00E+00 | 0.00E+00 |
| 24 | 0 | 0.00E+00 | 0.00E+00 | 0.00E+00 | 0.00E+00 | 0.00E+00 | 0.00E+00 | 0.00E+00 | 0.00E+00 |
| 25 | 0 | 0.00E+00 | 0.00E+00 | 0.00E+00 | 0.00E+00 | 0.00E+00 | 0.00E+00 | 0.00E+00 | 0.00E+00 |

Table 1.5 shows a basic parameter of an optical path when the optical lens 10 is in the short-focus state according to the seventh embodiment of this application; Table 1.6 shows a basic parameter of an optical path when the optical lens 10 is in the long-focus state according to the seventh embodiment of this application; and Table 1.7 shows a related parameter and a value of ξ of the optical lens 10 according to the seventh embodiment of this application.

Table 1.5 Basic parameter of the optical path when the optical lens 10 is in the short-focus state according to the seventh embodiment of this application

| Parameter | ImgH | $F_1$ | F/# | $f_{L011}$ | $f_{L11}$ | $f_{L12}$ | $f_{L13}$ | $f_{21}$ | $f_{L221}$ | $f_{L222}$ |
|---|---|---|---|---|---|---|---|---|---|---|
| Value | 6.000 | 22.787 | 2.000 | 38.846 | 42.527 | -17.547 | 9.777 | 51.856 | 48.207 | -9.266 |
| Unit | mm | mm | mm | mm | mm | mm | mm | mm | mm | mm |

Table 1.6 Basic parameter of the optical path when the optical lens 10 is in the long-focus state according to the seventh embodiment of this application

| Parameter | ImgH | $F_2$ | F/# | $f_{L021}$ | $f_{L022}$ | $f_{L11}$ | $f_{L12}$ | $f_{L13}$ | $f_{L21}$ | $f_{L221}$ | $f_{L222}$ |
|---|---|---|---|---|---|---|---|---|---|---|---|
| Value | 3.000 | 29.947 | 3.080 | 35.015 | -177.934 | 42.527 | -17.547 | 9.777 | 51.856 | 48.207 | -9.266 |
| Unit | mm | mm | mm | mm | mm | mm | mm | mm | mm | mm | mm |

Table 1.7 Related parameter and value of $\xi$ of the optical lens 10 according to the seventh embodiment of this application, where an object distance is INFINITY (infinity)

| Short-focus state | $f_{g01}$ | $f_{g1}$ | $f_{g011}$ | $F_1$ | $f_{g2}$ | $\beta_1$ | $\alpha_1$ | $\xi_1$ | L | k |
|---|---|---|---|---|---|---|---|---|---|---|
| | 38.846 | 14.919 | 14.148 | 22.787 | -13.668 | 0.364 | 1.611 | 2.25 | | |
| Unit | mm | mm | mm | mm | mm | / | / | / | 8.956 | |
| Long-focus state | $f_{g02}$ | $f_{g1}$ | $f_{g021}$ | $F_2$ | $f_{g2}$ | $\beta_2$ | $\alpha_2$ | $\xi_2$ | | 0.291 |
| | 43.455 | 14.919 | 18.097 | 29.947 | -13.668 | 0.416 | 1.655 | 2.263 | | |
| Unit | mm | mm | mm | mm | mm | / | / | / | mm | / |

In Table 1.5 to Table 1.7, $F_1$ is a first effective focal length of the optical lens 10, and $F_2$ is a second effective focal length of the optical lens 10; $f_{L011}$ is a focal length of the positive lens L011, $f_{L021}$ is a focal length of the positive lens L021, $f_{L022}$ is a focal length of the negative lens L022, $f_{L11}$ is a focal length of the first lens L11, $f_{L12}$ is a focal length of the second lens L12, $f_{L13}$ is a focal length of the third lens L13, $f_{L21}$ is a focal length of the fourth lens L21, $f_{L221}$ is a focal length of the positive lens L221, and $f_{L222}$ is a focal length of the negative lens L222; $f_{g01}$ is an effective focal length of the first front lens group G01, $f_{g02}$ is an effective focal length of the second front lens group G02, $f_{g1}$ is an effective focal length of the first rear lens group G1, and $f_{g2}$ is an effective focal length of the second rear lens group G2; $f_{g011}$ is a combined focal length of the first front lens group G01 and the first rear lens group G1, and $f_{g021}$ is a combined focal length of the second front lens group G02 and the first rear lens group G1; $\beta_1$ is a first focal length allocation ratio, and $\beta_1 = f_{g011}/f_{g01}$; $\beta_2$ is a second focal length allocation ratio, and $\beta_2 = f_{g021}/f_{g02}$; $\alpha_1$ is a third focal length allocation ratio, and $\alpha_1 = F_1/f_{g011}$; $\alpha_2$ is a fourth focal length allocation ratio, and $\alpha_2 = F_2/f_{g021}$; $\xi_1$ is a stroke compression ratio coefficient of the first rear lens group G1 when the optical lens 10 is in the short-focus state, and $\xi_2$ is a stroke compression ratio coefficient of the first rear lens group G1 when the optical lens 10 is in the long-focus state; L is a moving stroke of the first turning element 1 between the first position and the second position; and coefficient $k = [(\beta_1-1)^2/\beta_1] - [(\beta_2-1)^2/\beta_2]$.

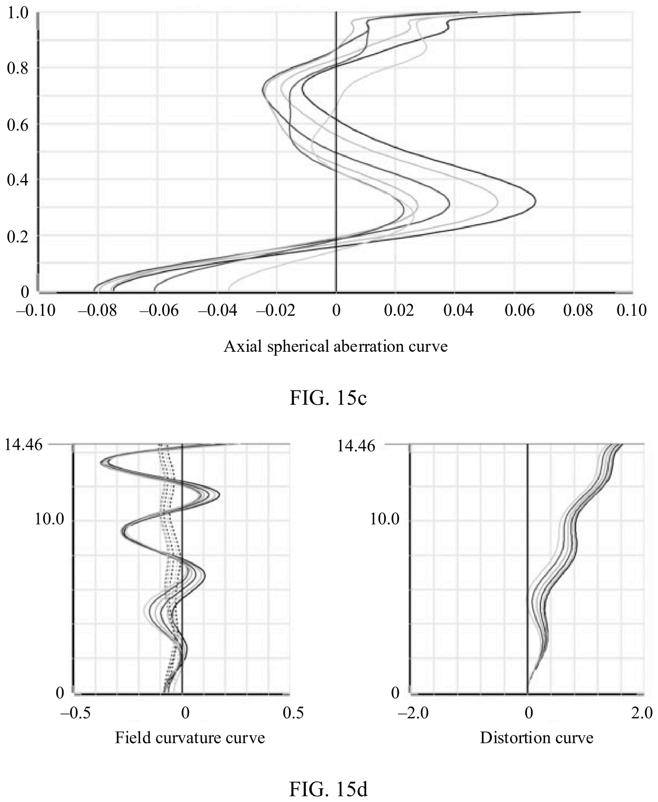

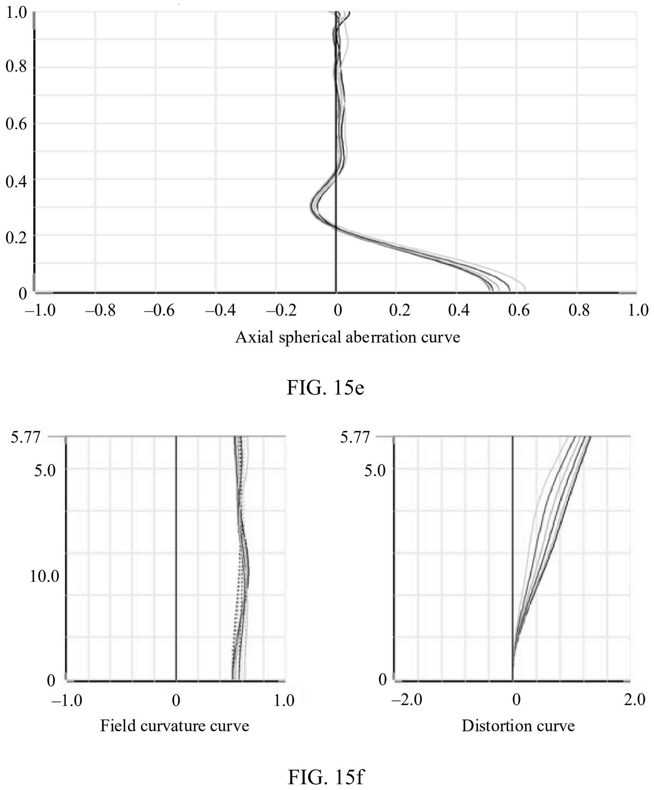

FIG. 15c shows an axial spherical aberration curve of the optical lens 10 in the short-focus state according to the seventh embodiment of this application, FIG. 15d shows a field curvature curve and a distortion curve of the optical lens 10 in the short-focus state according to the seventh embodiment of this application, FIG. 15e shows an axial spherical aberration curve of the optical lens 10 in the long-focus state according to the seventh embodiment of this application, and FIG. 15f shows a field curvature curve and a distortion curve of the optical lens 10 in the long-focus state according to the seventh embodiment of this application. FIG. 15c to FIG. 15f show axial spherical aberration curves, field curvature curves, and distortion curves corresponding to different system bands (including 650 nm, 610 nm, 555 nm, 510 nm, 470 nm, and 435 nm in the figures).

The axial spherical aberration curve in the figure shows a deviation of light of a corresponding wavelength emitted at a 0-degree field of view relative to an ideal image point after the light passes through the optical system, a horizontal coordinate is a deviation value in an optical axis direction, and a vertical coordinate is a normalized coordinate at a pupil. Deviation values in FIG. 15c and FIG. 15e both are relatively small, and correction of an axial spherical aberration of the optical lens is relatively good.

The field curvature curve in the figure shows a deviation of a convergence point of fine light beams in different fields of view from an ideal imaging plane, x is a light beam in a sagittal direction, y is a light beam in a meridian direction, a horizontal coordinate is a deviation value in an optical axis direction, and a vertical coordinate is a corresponding field of view. When a value of a field of view is excessively large, image quality of the field of view is relatively poor or a high-order aberration exists. As shown in FIG. 15d and FIG. 15f, field curvatures in the two directions are relatively small, and the system has a relatively good depth of focus.

The distortion curve in the figure indicates a relative offset between a convergence point (actual image height) of light beams in different fields of view and an ideal image height. The deviations shown in FIG. 15d and FIG. 15f are relatively small, so that it can be ensured that there is no obvious picture deformation.

Therefore, the optical lens 10 in the seventh embodiment of this application implements relatively low light aberration control by using a proper surface type, a proper gap design, and the like, to obtain clear image quality.

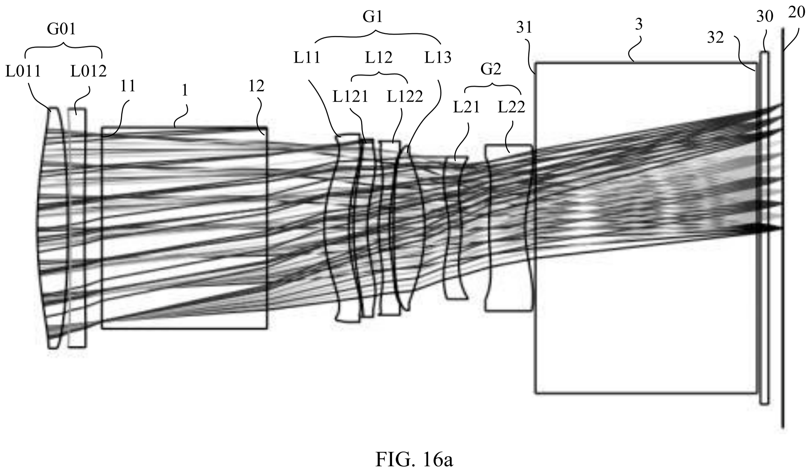

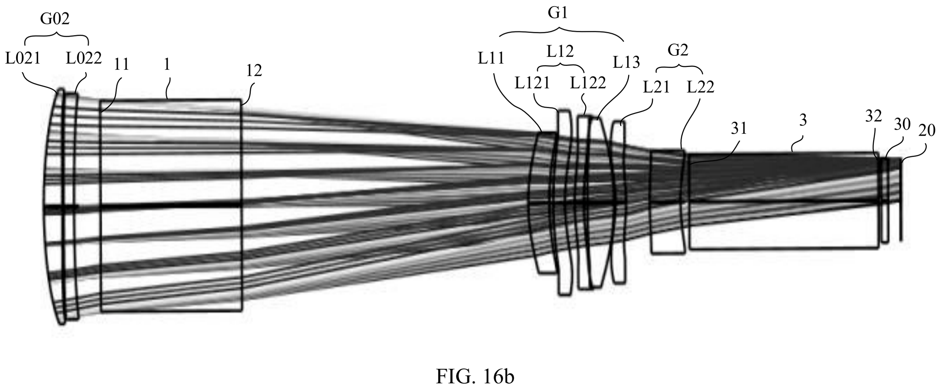

FIG. 16a is a diagram of a structure of an optical lens 10 in a short-focus state according to an eighth embodiment of this application, and FIG. 16b is a diagram of a structure of the optical lens 10 in a long-focus state according to the eighth embodiment of this application. Optical paths of the first turning element 1 and the second turning element 3 in FIG. 16a and FIG. 16b both are unfolded, and are replaced with parallel plates. A main difference between the optical lens 10 shown in FIG. 16a and FIG. 16b and the optical lens 10 shown in FIG. 10 lies in that the first rear lens group G1 has different compositions. Details are as follows:

As shown in FIG. 16a and FIG. 16b, the second lens L12 includes one positive lens L121 and one negative lens L122 that are spaced apart. A combined focal power of the positive lens L121 and the negative lens L122 is negative. This is equivalent to splitting the second lens L12 into the positive lens L121 and the negative lens L122, so that a quantity of lens surfaces in the first rear lens group G1 is increased, and a degree of freedom of design of the first rear lens group G1 is increased. This is conducive to aberration correction of the optical lens.

As shown in FIG. 16a and FIG. 16b, the positive lens L121 may be disposed between the first lens L11 and the negative lens L122, but this is not limited thereto. The positive lens L121 may be disposed between the third lens L13 and the negative lens L122.

In some embodiments, as shown in FIG. 16a and FIG. 16b, there is an air gap between the positive lens L121 and the negative lens L122. Certainly, a medium between the positive lens L121 and the negative lens L122 is not limited to air, and may alternatively be another medium, for example, nitrogen or an adhesive layer.

In some embodiments, as shown in FIG. 16a and FIG. 16b, the first front lens group G01 includes one positive lens L011 and one negative lens L012 in the direction from the object side to the image side, and the second front lens group G02 includes one positive lens L021 and one negative lens L022 in the direction from the object side to the image side. Focal powers of the lenses in the second front lens group G02 are matched in a positive-negative manner, so that positive-negative aberration offset can be performed, thereby improving imaging quality of the optical lens 10.

The following specifically describes the optical lens 10 shown in FIG. 16a and FIG. 16b with reference to a specific parameter and a simulation result.

Table 2.2 shows a main parameter of the optical lens 10 in the short-focus state according to the eighth embodiment of this application; Table 2.2 shows a main parameter of the optical lens 10 in the long-focus state according to the eighth embodiment of this application; Table 2.3 shows an aspheric coefficient of each surface of an optical element when the optical lens 10 is in the short-focus state according to the eighth embodiment of this application; and Table 2.4 shows an aspheric coefficient of each surface of an optical element when the optical lens 10 is in the long-focus state according to the eighth embodiment of this application.

Table 2.1 Main parameter of the optical lens 10 in the short-focus state according to the eighth embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STANDARD | | INF | INF | | | | |
| S1(STO) | QED_TYPE | L011 | 22.511 | 1.450 | Resin | 1.5441 | 55.976 | 5.74 |
| S2 | QED_TYPE | | -71.631 | 0.126 | | | | 5.79 |
| S3 | QED_TYPE | L012 | -259.745 | 0.670 | Resin | 1.6713 | 19.243 | 5.74 |
| S4 | QED_TYPE | | 349.220 | 0.818 | | | | 5.74 |
| S5 | STANDARD | PRISM1 | INF | 7.851 | Glass | 1.8034 | 45.490 | 4.50 |
| S6 | STANDARD | | INF | 2.711 | | | | 4.85 |
| S7 | QED_TYPE | L11 | 7.232 | 1.173 | Resin | 1.5441 | 55.976 | 4.53 |
| S8 | QED_TYPE | | 12.681 | 0.221 | | | | 4.25 |

(continued)

| Surface number | Surface type | Optical element | Curvature radius | Thickness (INF) | Material | Refractive index | Abbe number | Light transmission radius |
|---|---|---|---|---|---|---|---|---|
| S9 | QED_TYPE | L121 | 15.476 | 0.648 | Resin | 1.6607 | 20.365 | 4.28 |
| S10 | QED_TYPE | | 6.377 | 0.538 | | | | 3.91 |
| S11 | QED_TYPE | L122 | 7.164 | 0.512 | Resin | 1.6607 | 20.365 | 4.19 |
| S12 | QED_TYPE | | 9.907 | 0.206 | | | | 3.67 |
| S13 | QED_TYPE | L13 | 97.266 | 1.472 | Resin | 1.5348 | 55.664 | 3.95 |
| S14 | QED_TYPE | | -8.219 | 1.163 | | | | 3.59 |
| S15 | QED_TYPE | L21 | -3.899 | 0.580 | Resin | 1.5441 | 55.976 | 3.58 |
| S16 | QED_TYPE | | -5.313 | 1.316 | | | | 3.39 |
| S17 | QED_TYPE | L22 | 14.649 | 1.710 | Resin | 1.5441 | 55.976 | 3.43 |
| S18 | QED_TYPE | | 6.365 | 0.488 | | | | 4.00 |
| S19 | STANDARD | PRISM2 | INF | 10.531 | Glass | 1.8034 | 45.490 | 4.05 |
| S20 | STANDARD | | INF | 0.155 | | | | 7.96 |
| S21 | STANDARD | IRCF | INF | 0.383 | Glass | 1.5168 | 64.167 | 8.22 |
| S22 | STANDARD | | INF | 0.666 | | | | 8.49 |
| S23 | STANDARD | IMA | INF | 0.000 | | | | 9.65 |

In the table, parameter values of the curvature radius, the thickness, and the light transmission radius all are in a unit of mm. If the curvature radius is INF, it indicates that a surface corresponding to the parameter is a plane, and the curvature radius is infinite.

S1 represents an object side surface of the positive lens L011, and S2 represents an image side surface of the positive lens L011. S3 represents an object side surface of the negative lens L012, and S4 represents an image side surface of the negative lens L012. PRISM1 represents the first turning element 1, and the first turning element 1 is a prism and has a light refraction function. S5 represents a first light incident surface 11 of the first turning element 1, and S6 represents a first light emergent surface 12 of the first turning element 1. S7 represents an object side surface of the first lens L11, and S8 represents an image side surface of the first lens L11. S9 represents an object side surface of the positive lens L121, and S10 represents an image side surface of the positive lens L121. S11 represents an object side surface of the negative lens L122, and S12 represents an image side surface of the negative lens L122. S13 represents an object side surface of the third lens L13, and S14 represents an image side surface of the third lens L13. S15 represents an object side surface of the fourth lens L21, and S16 represents an image side surface of the fourth lens L21. S17 represents an object side surface of the fifth lens L22, and S18 represents an image side surface of the fifth lens L22. PRISM2 represents the second turning element 3, and the second turning element 3 is a prism and has a light refraction function. S19 represents a prism incident surface 31 of the second turning element 3, and S20 represents a prism emergent surface 32 of the second turning element 3. IRCF represents a light filter, and the light filter is an infrared light filter. S21 is an object side surface of the light filter, and S22 is an image side surface of the light filter. IMA represents an image plane IMAGE, and the image plane IMAGE may be a photosensitive surface of a photosensitive element.

Table 2.2 Main parameter of the optical lens 10 in the long-focus state according to the eighth embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STANDARD | | INF | INF | | | | |
| S1(STO) | QED_TYPE | L021 | 18.415 | 1.035 | Resin | 1.5441 | 55.976 | 4.98 |
| S2 | QED_TYPE | | 130.131 | 0.074 | | | | 4.79 |
| S3 | QED_TYPE | L022 | 127.428 | 0.577 | Resin | 1.6713 | 19.243 | 4.79 |
| S4 | QED_TYPE | | 81.637 | 1.475 | | | | 4.69 |
| S5 | STANDARD | PRISM 1 | INF | 7.851 | Glass | 1.8034 | 45.490 | 4.47 |
| S6 | STANDARD | | INF | 15.956 | | | | 4.09 |
| S7 | QED_TYPE | L11 | 7.232 | 1.173 | Resin | 1.5441 | 55.976 | 2.98 |
| S8 | QED_TYPE | | 12.681 | 0.221 | | | | 2.84 |
| S9 | QED_TYPE | L121 | 15.476 | 0.648 | Resin | 1.6607 | 20.365 | 2.83 |
| S10 | QED_TYPE | | 6.377 | 0.538 | | | | 3.91 |
| S11 | QED_TYPE | L122 | 7.164 | 0.512 | Resin | 1.6607 | 20.365 | 2.68 |
| S12 | QED_TYPE | | 9.907 | 0.206 | | | | 3.67 |
| S13 | QED_TYPE | L13 | 97.266 | 1.472 | Resin | 1.5348 | 55.664 | 2.65 |
| S14 | QED_TYPE | | -8.219 | 0.096 | | | | 3.59 |
| S15 | QED_TYPE | L21 | -3.899 | 0.580 | Resin | 1.5441 | 55.976 | 3.43 |
| S16 | QED_TYPE | | -5.313 | 1.316 | | | | 2.40 |
| S17 | QED_TYPE | L22 | 14.649 | 1.710 | Resin | 1.5441 | 55.976 | 2.18 |
| S18 | QED_TYPE | | 6.365 | 0.488 | | | | 2.03 |

(continued)

| Surface number | Surface type | Optical element | Curvature radius | Thickness (INF) | Material | Refractive index | Abbe number | Light transmission radius |
|---|---|---|---|---|---|---|---|---|
| S19 | STANDARD | PRISM 2 | INF | 10.531 | Glass | 1.8034 | 45.490 | 2.02 |
| S20 | STANDARD | | INF | 0.155 | | | | 1.79 |
| S21 | STANDARD | IRCF | INF | 0.383 | Glass | 1.5168 | 64.167 | 1.79 |
| S22 | STANDARD | | INF | 0.718 | | | | 1.78 |
| S23 | STANDARD | IMA | INF | 0.000 | | | | 1.75 |

In the table, parameter values of the curvature radius, the thickness, and the light transmission radius all are in a unit of mm. If the curvature radius is INF, it indicates that a surface corresponding to the parameter is a plane, and the curvature radius is infinite.

S1 represents an object side surface of the positive lens L021, and S2 represents an image side surface of the positive lens L021. S3 represents an object side surface of the negative lens L022, and S4 represents an image side surface of the negative lens L022. PRISM1 represents the first turning element 1, and the first turning element 1 is a prism and has a light refraction function. S5 represents a first light incident surface 11 of the first turning element 1, and S6 represents a first light emergent surface 12 of the first turning element 1. S7 represents an object side surface of the first lens L11, and S8 represents an image side surface of the first lens L11. S9 represents an object side surface of the positive lens L121, and S10 represents an image side surface of the positive lens L121. S11 represents an object side surface of the negative lens L122, and S12 represents an image side surface of the negative lens L122. S13 represents an object side surface of the third lens L13, and S14 represents an image side surface of the third lens L13. S15 represents an object side surface of the fourth lens L21, and S16 represents an image side surface of the fourth lens L21. S17 represents an object side surface of the fifth lens L22, and S18 represents an image side surface of the fifth lens L22. PRISM2 represents the second turning element 3, and the second turning element 3 is a prism and has a light refraction function. S19 represents a prism incident surface 31 of the second turning element 3, and S20 represents a prism emergent surface 32 of the second turning element 3. IRCF represents a light filter, and the light filter is an infrared light filter. S21 is an object side surface of the light filter, and S22 is an image side surface of the light filter. IMA represents an image plane IMAGE, and the image plane IMAGE may be a photosensitive surface of a photosensitive element.

Table 2.3 Aspheric coefficient of each surface of the optical element when the optical lens 10 is in the short-focus state according to the eighth embodiment of this application

| Surface number | K | Norm radius | $A_0$ | $A_1$ | $A_2$ | $A_3$ | $A_4$ | $A_5$ |
|---|---|---|---|---|---|---|---|---|
| S0 | 0.000 | 0.00 | 0.00E+00 | 0.00E+00 | 0.00E+00 | 0.00E+00 | 0.00E+00 | 0.00E+00 |
| S1 | -1.806 | 5.74 | -1.47E-01 | -2.07E-02 | -1.01E-02 | -3.61E-03 | -1.14E-03 | -4.87E-04 |
| S2 | 0.000 | 5.79 | -2.31E-01 | -1.20E-02 | -1.64E-02 | -1.77E-03 | -1.30E-03 | -1.22E-04 |
| S3 | 0.000 | 5.74 | -3.59E-02 | -1.48E-02 | 6.52E-04 | 1.26E-03 | 4.49E-04 | 4.65E-04 |
| S4 | 0.000 | 5.74 | 1.98E-02 | -2.28E-02 | 5.79E-03 | -3.03E-04 | 7.59E-04 | 2.30E-04 |
| S5 | 0.000 | 0.00 | 0.00E+00 | 0.00E+00 | 0.00E+00 | 0.00E+00 | 0.00E+00 | 0.00E+00 |
| S6 | 0.000 | 0.00 | 0.00E+00 | 0.00E+00 | 0.00E+00 | 0.00E+00 | 0.00E+00 | 0.00E+00 |
| S7 | -0.740 | 4.00 | -3.33E-01 | -9.85E-02 | -3.18E-03 | -1.54E-03 | 1.31E-03 | -2.37E-04 |
| S8 | 0.000 | 3.97 | 2.79E-02 | -1.42E-01 | 2.88E-02 | -1.12E-02 | 5.91E-03 | -3.13E-03 |
| S9 | 0.000 | 3.96 | -3.13E-02 | -5.60E-02 | 1.17E-02 | -1.29E-03 | 3.29E-03 | -1.66E-03 |
| S10 | 0.137 | 3.91 | -1.09E+00 | -3.62E-03 | 3.69E-03 | 1.83E-02 | -5.78E-03 | 4.32E-04 |

(continued)

| Surface number | K | Norm radius | $A_0$ | $A_1$ | $A_2$ | $A_3$ | $A_4$ | $A_5$ |
|---|---|---|---|---|---|---|---|---|
| S11 | 0.450 | 3.81 | -1.19E+00 | 1.14E-01 | 2.34E-02 | -2.89E-03 | -3.64E-03 | 1.24E-03 |
| S12 | 5.043 | 3.67 | -5.12E-01 | 5.20E-02 | 2.10E-02 | -1.68E-02 | 1.45E-04 | -8.91E-04 |
| S13 | 0.000 | 3.65 | 2.56E-01 | 4.58E-04 | 1.67E-02 | -4.04E-03 | 3.34E-03 | -1.61E-03 |
| S14 | 3.444 | 3.59 | 3.16E-01 | 5.41E-02 | 1.21E-02 | 4.40E-03 | 1.90E-03 | 3.09E-04 |
| S15 | -0.424 | 3.43 | 1.76E+00 | -1.76E-01 | 4.02E-02 | -8.67E-03 | 2.22E-03 | -5.63E-04 |
| S16 | 0.000 | 3.33 | 1.57E+00 | -1.51E-01 | 3.26E-02 | -6.30E-03 | 1.34E-03 | -3.12E-04 |
| S17 | 0.000 | 3.48 | -6.05E-01 | -1.36E-02 | 6.14E-04 | -3.23E-03 | 2.09E-04 | -3.94E-04 |
| S18 | 0.922 | 4.14 | -1.58E+00 | 5.38E-03 | -2.40E-02 | -3.39E-03 | -9.69E-04 | -4.70E-04 |
| S19 | 0.000 | 0.00 | 0.00E+00 | 0.00E+00 | 0.00E+00 | 0.00E+00 | 0.00E+00 | 0.00E+00 |
| S20 | 0.000 | 0.00 | 0.00E+00 | 0.00E+00 | 0.00E+00 | 0.00E+00 | 0.00E+00 | 0.00E+00 |
| S21 | 0.000 | 0.00 | 0.00E+00 | 0.00E+00 | 0.00E+00 | 0.00E+00 | 0.00E+00 | 0.00E+00 |
| S22 | 0.000 | 0.00 | 0.00E+00 | 0.00E+00 | 0.00E+00 | 0.00E+00 | 0.00E+00 | 0.00E+00 |
| S23 | 0.000 | 0.00 | 0.00E+00 | 0.00E+00 | 0.00E+00 | 0.00E+00 | 0.00E+00 | 0.00E+00 |

| Surface number | $A_6$ | $A_7$ | $A_8$ | $A_9$ | $A_{10}$ | $A_{11}$ | $A_{12}$ | $A_{13}$ |
|---|---|---|---|---|---|---|---|---|
| S0 | 0.00E+00 | 0.00E+00 | 0.00E+00 | 0.00E+00 | 0.00E+00 | 0.00E+00 | 0.00E+00 | 0.00E+00 |
| S1 | 3.74E-05 | -1.16E-05 | 1.20E-05 | 4.07E-07 | 4.57E-06 | 3.81E-06 | -4.13E-06 | 1.73E-06 |
| S2 | 2.58E-04 | -5.58E-05 | 4.04E-05 | -1.15E-05 | 1.36E-05 | -6.87E-06 | 1.38E-06 | 7.07E-07 |
| S3 | 1.35E-04 | 7.09E-05 | 2.11E-05 | 0.00E+00 | 0.00E+00 | 0.00E+00 | 0.00E+00 | 0.00E+00 |
| S4 | 5.22E-05 | 1.20E-04 | 1.94E-05 | 0.00E+00 | 0.00E+00 | 0.00E+00 | 0.00E+00 | 0.00E+00 |
| S5 | 0.00E+00 | 0.00E+00 | 0.00E+00 | 0.00E+00 | 0.00E+00 | 0.00E+00 | 0.00E+00 | 0.00E+00 |
| S6 | 0.00E+00 | 0.00E+00 | 0.00E+00 | 0.00E+00 | 0.00E+00 | 0.00E+00 | 0.00E+00 | 0.00E+00 |
| S7 | 1.12E-04 | -1.29E-04 | -1.17E-06 | -5.05E-05 | 9.06E-07 | -1.05E-05 | 5.44E-06 | 1.59E-06 |
| S8 | 1.95E-03 | -1.10E-03 | 4.76E-04 | -3.24E-04 | 1.44E-04 | -2.10E-04 | 6.34E-05 | 1.51E-05 |
| S9 | 1.87E-03 | -1.06E-03 | 7.03E-04 | -2.48E-04 | 2.14E-04 | -2.62E-04 | 6.83E-05 | -3.09E-06 |
| S10 | 2.97E-04 | -1.70E-04 | 3.97E-04 | 4.58E-05 | 9.42E-05 | -1.23E-04 | 5.76E-05 | -1.92E-05 |
| S11 | 1.10E-04 | -3.32E-04 | -9.77E-05 | 3.14E-04 | -7.60E-05 | -3.62E-05 | 2.79E-05 | -9.08E-06 |
| S12 | 9.51E-04 | 1.72E-04 | -5.86E-04 | 2.79E-04 | -1.46E-04 | -4.01E-05 | 4.35E-05 | -6.56E-06 |
| S13 | 8.79E-04 | 4.88E-04 | -3.54E-04 | 1.93E-04 | -8.36E-05 | -5.21E-05 | 3.16E-05 | -3.10E-06 |
| S14 | 2.44E-04 | 8.60E-05 | 5.46E-05 | 1.66E-05 | 5.39E-06 | 4.26E-06 | 1.23E-06 | -4.86E-07 |
| S15 | 1.31E-04 | -3.86E-05 | 2.11E-05 | -7.15E-06 | 5.26E-06 | -7.89E-07 | 3.90E-07 | 0.00E+00 |
| S16 | 1.07E-05 | -2.46E-06 | 1.62E-05 | 3.81E-06 | 5.21E-06 | 3.26E-06 | 0.00E+00 | 0.00E+00 |
| S17 | 8.61E-06 | -2.72E-05 | 1.48E-05 | 7.50E-06 | 1.12E-05 | 5.04E-06 | 8.61E-07 | 7.31E-07 |
| S18 | -3.06E-05 | -4.67E-05 | -7.95E-06 | -1.22E-05 | -4.65E-06 | -6.98E-06 | -8.97E-06 | -3.40E-06 |
| S19 | 0.00E+00 | 0.00E+00 | 0.00E+00 | 0.00E+00 | 0.00E+00 | 0.00E+00 | 0.00E+00 | 0.00E+00 |
| S20 | 0.00E+00 | 0.00E+00 | 0.00E+00 | 0.00E+00 | 0.00E+00 | 0.00E+00 | 0.00E+00 | 0.00E+00 |
| S21 | 0.00E+00 | 0.00E+00 | 0.00E+00 | 0.00E+00 | 0.00E+00 | 0.00E+00 | 0.00E+00 | 0.00E+00 |
| S22 | 0.00E+00 | 0.00E+00 | 0.00E+00 | 0.00E+00 | 0.00E+00 | 0.00E+00 | 0.00E+00 | 0.00E+00 |

(continued)

| Surface number | $A_6$ | $A_7$ | $A_8$ | $A_9$ | $A_{10}$ | $A_{11}$ | $A_{12}$ | $A_{13}$ |
|---|---|---|---|---|---|---|---|---|
| S23 | 0.00E+00 | 0.00E+00 | 0.00E+00 | 0.00E+00 | 0.00E+00 | 0.00E+00 | 0.00E+00 | 0.00E+00 |

Table 2.4 Aspheric coefficient of each surface of the optical element when the optical lens 10 is in the long-focus state according to the eighth embodiment of this application

| Surface number | K | Norm radius | $A_0$ | $A_1$ | $A_2$ | $A_3$ | $A_4$ | $A_5$ |
|---|---|---|---|---|---|---|---|---|
| S0 | 0.000 | 0.00 | 0.00E+00 | 0.00E+00 | 0.00E+00 | 0.00E+00 | 0.00E+00 | 0.00E+00 |
| S1 | 2.181 | 4.98 | 1.01E-01 | 3.02E-02 | 1.67E-03 | 5.23E-04 | 1.33E-04 | -1.24E-04 |
| S2 | 0.000 | 4.79 | -2.07E-02 | 5.88E-02 | -1.38E-02 | 7.47E-03 | -3.79E-03 | 1.94E-03 |
| S3 | 0.000 | 5.23 | 1.94E-03 | 4.21E-02 | -1.27E-02 | 4.41E-03 | -6.08E-03 | 2.44E-03 |
| S4 | 0.000 | 5.23 | 1.48E-01 | 1.39E-02 | 2.74E-03 | -3.58E-03 | -3.80E-03 | -1.60E-03 |
| S5 | 0.000 | 0.00 | 0.00E+00 | 0.00E+00 | 0.00E+00 | 0.00E+00 | 0.00E+00 | 0.00E+00 |
| S6 | 0.000 | 0.00 | 0.00E+00 | 0.00E+00 | 0.00E+00 | 0.00E+00 | 0.00E+00 | 0.00E+00 |
| S7 | -0.740 | 3.81 | -2.36E-01 | -7.17E-02 | -1.62E-03 | -1.73E-03 | 8.54E-04 | -1.94E-04 |
| S8 | 0.000 | 3.79 | 6.83E-02 | -1.19E-01 | 2.49E-02 | -1.01E-02 | 5.06E-03 | -2.84E-03 |
| S9 | 0.000 | 3.79 | -9.88E-03 | -4.86E-02 | 8.30E-03 | -2.43E-03 | 2.66E-03 | -1.96E-03 |
| S10 | 0.137 | 3.91 | -1.09E+00 | -3.62E-03 | 3.69E-03 | 1.83E-02 | -5.78E-03 | 4.32E-04 |
| S11 | 0.450 | 3.70 | -1.09E+00 | 9.04E-02 | 2.06E-02 | -8.81E-04 | -3.21E-03 | 8.82E-04 |
| S12 | 5.043 | 3.67 | -5.12E-01 | 5.20E-02 | 2.10E-02 | -1.68E-02 | 1.45E-04 | -8.91E-04 |
| S13 | 0.000 | 3.62 | 2.46E-01 | -1.30E-03 | 1.59E-02 | -4.18E-03 | 3.14E-03 | -1.68E-03 |
| S14 | 3.444 | 3.59 | 3.16E-01 | 5.41E-02 | 1.21E-02 | 4.40E-03 | 1.90E-03 | 3.09E-04 |
| S15 | -0.424 | 3.43 | 1.76E+00 | -1.76E-01 | 4.02E-02 | -8.67E-03 | 2.22E-03 | -5.63E-04 |
| S16 | 0.000 | 3.22 | 1.41E+00 | -1.34E-01 | 2.74E-02 | -5.09E-03 | 1.07E-03 | -1.99E-04 |
| S17 | 0.000 | 3.13 | -3.91E-01 | -7.58E-03 | 2.56E-03 | -1.39E-03 | 3.28E-04 | -1.10E-04 |
| S18 | 0.922 | 3.26 | -6.18E-01 | 1.46E-02 | -2.33E-03 | -2.21E-04 | 8.04E-05 | -3.00E-05 |
| S19 | 0.000 | 0.00 | 0.00E+00 | 0.00E+00 | 0.00E+00 | 0.00E+00 | 0.00E+00 | 0.00E+00 |
| S20 | 0.000 | 0.00 | 0.00E+00 | 0.00E+00 | 0.00E+00 | 0.00E+00 | 0.00E+00 | 0.00E+00 |
| S21 | 0.000 | 0.00 | 0.00E+00 | 0.00E+00 | 0.00E+00 | 0.00E+00 | 0.00E+00 | 0.00E+00 |
| S22 | 0.000 | 0.00 | 0.00E+00 | 0.00E+00 | 0.00E+00 | 0.00E+00 | 0.00E+00 | 0.00E+00 |
| S23 | 0.000 | 0.00 | 0.00E+00 | 0.00E+00 | 0.00E+00 | 0.00E+00 | 0.00E+00 | 0.00E+00 |
| Surface number | $A_6$ | $A_7$ | $A_8$ | $A_9$ | $A_{10}$ | $A_{11}$ | $A_{12}$ | $A_{13}$ |
| S0 | 0.00E+00 | 0.00E+00 | 0.00E+00 | 0.00E+00 | 0.00E+00 | 0.00E+00 | 0.00E+00 | 0.00E+00 |
| S1 | 3.25E-05 | -2.11E-05 | 7.78E-05 | 0.00E+00 | 0.00E+00 | 0.00E+00 | 0.00E+00 | 0.00E+00 |
| S2 | -1.31E-03 | 2.47E-04 | 5.94E-05 | -1.76E-06 | 0.00E+00 | 0.00E+00 | 0.00E+00 | 0.00E+00 |
| S3 | -1.23E-03 | 1.44E-03 | -7.75E-05 | 0.00E+00 | 0.00E+00 | 0.00E+00 | 0.00E+00 | 0.00E+00 |
| S4 | -1.42E-03 | -2.88E-04 | -2.29E-04 | 0.00E+00 | 0.00E+00 | 0.00E+00 | 0.00E+00 | 0.00E+00 |
| S5 | 0.00E+00 | 0.00E+00 | 0.00E+00 | 0.00E+00 | 0.00E+00 | 0.00E+00 | 0.00E+00 | 0.00E+00 |
| S6 | 0.00E+00 | 0.00E+00 | 0.00E+00 | 0.00E+00 | 0.00E+00 | 0.00E+00 | 0.00E+00 | 0.00E+00 |

(continued)

| Surface number | $A_6$ | $A_7$ | $A_8$ | $A_9$ | $A_{10}$ | $A_{11}$ | $A_{12}$ | $A_{13}$ |
|---|---|---|---|---|---|---|---|---|
| S7 | 1.33E-04 | -5.51E-05 | 3.48E-05 | -1.76E-05 | 9.50E-06 | -6.36E-06 | 3.02E-07 | 3.69E-07 |
| S8 | 1.64E-03 | -8.33E-04 | 3.96E-04 | -2.24E-04 | 2.17E-04 | -1.09E-04 | 7.47E-06 | 3.97E-06 |
| S9 | 1.57E-03 | -9.89E-04 | 4.33E-04 | -2.48E-04 | 2.76E-04 | -1.37E-04 | 2.31E-05 | -8.69E-07 |
| S10 | 2.97E-04 | -1.70E-04 | 3.97E-04 | 4.58E-05 | 9.42E-05 | -1.23E-04 | 5.76E-05 | -1.92E-05 |
| S11 | 2.69E-04 | -2.19E-04 | -2.42E-04 | 2.28E-04 | -1.93E-05 | -3.62E-05 | 1.93E-05 | -3.93E-06 |
| S12 | 9.51E-04 | 1.72E-04 | -5.86E-04 | 2.79E-04 | -1.46E-04 | -4.01E-05 | 4.35E-05 | -6.56E-06 |
| S13 | 6.98E-04 | 4.92E-04 | -3.30E-04 | 1.95E-04 | -5.77E-05 | -5.25E-05 | 2.61E-05 | -2.39E-06 |
| S14 | 2.44E-04 | 8.60E-05 | 5.46E-05 | 1.66E-05 | 5.39E-06 | 4.26E-06 | 1.23E-06 | -4.86E-07 |
| S15 | 1.31E-04 | -3.86E-05 | 2.11E-05 | -7.15E-06 | 5.26E-06 | -7.89E-07 | 3.90E-07 | 0.00E+00 |
| S16 | 5.53E-06 | -1.21E-05 | 5.17E-06 | -2.26E-06 | -6.07E-08 | 1.35E-06 | 0.00E+00 | 0.00E+00 |
| S17 | 2.36E-05 | -8.91E-06 | 4.44E-06 | -1.34E-06 | -6.72E-07 | 4.96E-07 | -1.69E-07 | 3.20E-08 |
| S18 | 9.99E-06 | -2.86E-06 | -1.10E-06 | 6.62E-07 | 1.52E-07 | -1.55E-07 | 3.42E-08 | -2.51E-09 |
| S19 | 0.00E+00 | 0.00E+00 | 0.00E+00 | 0.00E+00 | 0.00E+00 | 0.00E+00 | 0.00E+00 | 0.00E+00 |
| S20 | 0.00E+00 | 0.00E+00 | 0.00E+00 | 0.00E+00 | 0.00E+00 | 0.00E+00 | 0.00E+00 | 0.00E+00 |
| S21 | 0.00E+00 | 0.00E+00 | 0.00E+00 | 0.00E+00 | 0.00E+00 | 0.00E+00 | 0.00E+00 | 0.00E+00 |
| S22 | 0.00E+00 | 0.00E+00 | 0.00E+00 | 0.00E+00 | 0.00E+00 | 0.00E+00 | 0.00E+00 | 0.00E+00 |
| S23 | 0.00E+00 | 0.00E+00 | 0.00E+00 | 0.00E+00 | 0.00E+00 | 0.00E+00 | 0.00E+00 | 0.00E+00 |

Table 2.5 shows a basic parameter of an optical path when the optical lens 10 is in the short-focus state according to the eighth embodiment of this application; Table 2.6 shows a basic parameter of an optical path when the optical lens 10 is in the long-focus state according to the eighth embodiment of this application; and Table 2.7 shows a related parameter and a value of ξ of the optical lens 10 according to the eighth embodiment of this application.

Table 2.5 Basic parameter of the optical path when the optical lens 10 is in the short-focus state according to the eighth embodiment of this application

| Parameter | ImgH | $F_1$ | F/# | $f_{L011}$ | $f_{L012}$ | $f_{L11}$ | $f_{L121}$ | $f_{L122}$ | $f_{L13}$ | $f_{L21}$ | $f_{L22}$ |
|---|---|---|---|---|---|---|---|---|---|---|---|
| Value | 6.000 | 22.9531 | 2.42 | 31.547 | - 219.945 | 28.655 | - 16.769 | 36.161 | 14.189 | -31.394 | -22.240 |
| Unit | mm | mm | mm | mm | mm | mm | mm | mm | mm | mm | mm |

Table 2.6 Basic parameter of the optical path when the optical lens 10 is in the long-focus state according to the eighth embodiment of this application

| Parameter | ImgH | $F_2$ | F/# | $f_{L021}$ | $f_{L022}$ | $f_{L11}$ | $f_{L121}$ | $f_{L122}$ | $f_{L13}$ | $f_{L21}$ | $f_{L22}$ |
|---|---|---|---|---|---|---|---|---|---|---|---|
| Value | 3.000 | 33.0574 | 3.46 | 39.164 | - 337.319 | 28.655 | -16.769 | 36.161 | 14.189 | -31.394 | -22.240 |
| Unit | mm | mm | mm | mm | mm | mm | mm | mm | mm | mm | mm |

Table 2.7 Related parameter and value of ξ of the optical lens 10 according to the eighth embodiment of this application, where an object distance is INFINITY (infinity)

| Short-focus state | $f_{g01}$ | $f_{g1}$ | $f_{g011}$ | $F_1$ | $f_{g2}$ | $\beta_1$ | $\alpha_1$ | $\xi_1$ | L | k |
|---|---|---|---|---|---|---|---|---|---|---|
| | 36.632 | 14.659 | 13.454 | 22.953 | -11.893 | 0.367 | 1.706 | 2.518 | 12.906 | |
| Unit | mm | mm | mm | mm | mm | / | / | / | | |
| Long-focus state | $f_{g02}$ | $f_{g1}$ | $f_{g021}$ | $F_2$ | $f_{g2}$ | $\beta_2$ | $\alpha_2$ | $\xi_2$ | | 0.375 |
| | 44.041 | 14.659 | 19.327 | 33.057 | -11.893 | 0.439 | 1.710 | 2.362 | | |
| Unit | mm | mm | mm | mm | mm | / | / | / | mm | / |

In Table 2.5 to Table 2.7, $F_1$ is a first effective focal length of the optical lens 10, and $F_2$ is a second effective focal length of the optical lens 10; $f_{L011}$ is a focal length of the positive lens L011, $f_{L012}$ is a focal length of the negative lens L012, $f_{L021}$ is a focal length of the positive lens L021, $f_{L022}$ is a focal length of the negative lens L022, $f_{L11}$ is a focal length of the first lens L11, $f_{L12}$ is a focal length of the second lens L12, $f_{L13}$ is a focal length of the third lens L13, $f_{L21}$ is a focal length of the fourth lens L21, $f_{L221}$ is a focal length of the positive lens L221, and $f_{L222}$ is a focal length of the negative lens L222; $f_{g01}$ is an effective focal length of the first front lens group G01, $f_{g02}$ is an effective focal length of the second front lens group G02, $f_{g1}$ is an effective focal length of the first rear lens group G1, and $f_{g2}$ is an effective focal length of the second rear lens group G2; $f_{g011}$ is a combined focal length of the first front lens group G01 and the first rear lens group G1, and $f_{g021}$ is a combined focal length of the second front lens group G02 and the first rear lens group G1; $\beta_1$ is a first focal length allocation ratio, and $\beta_1 = f_{g011}/f_{g01}$; $\beta_2$ is a second focal length allocation ratio, and $\beta_2 = f_{g021}/f_{g02}$; $\alpha_1$ is a third focal length allocation ratio, and $\alpha_1 = F_1/f_{g011}$; $\alpha_2$ is a fourth focal length allocation ratio, and $\alpha_2 = F_2/f_{g021}$; $\xi_1$ is a stroke compression ratio coefficient of the first rear lens group G1 when the optical lens 10 is in the short-focus state, and $\xi_2$ is a stroke compression ratio coefficient of the first rear lens group G1 when the optical lens 10 is in the long-focus state; L is a moving stroke of the first turning element 1 between the first position and the second position; and coefficient $k=[(\beta_1-1)^2/\beta_1]-[(\beta_2-1)^2/\beta_2]$.

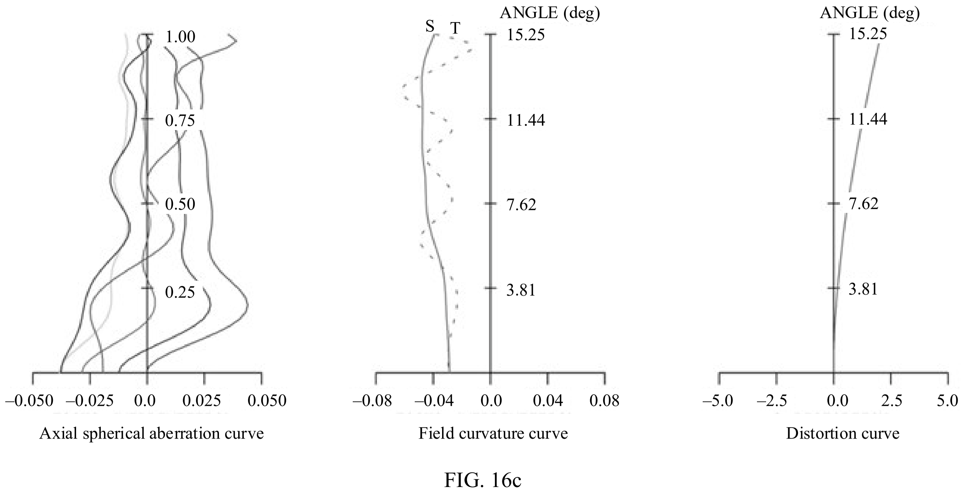

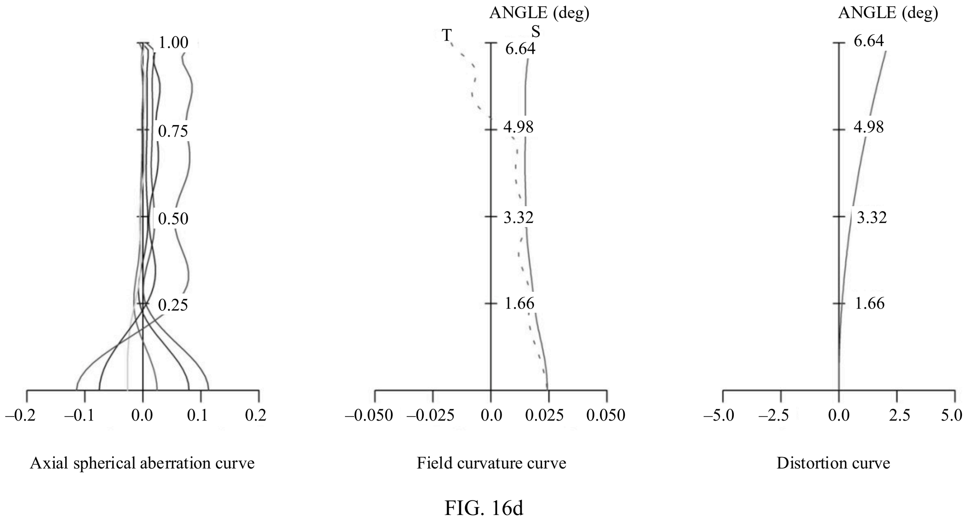

FIG. 16c shows an axial spherical aberration curve, a field curvature curve, and a distortion curve of the optical lens 10 in the short-focus state according to the eighth embodiment of this application, and FIG. 16d shows an axial spherical aberration curve, a field curvature curve, and a distortion curve of the optical lens 10 in the long-focus state according to the eighth embodiment of this application. FIG. 16c and FIG. 16d show axial spherical aberration curves, field curvature curves, and distortion curves corresponding to different system bands (including 650 nm, 610 nm, 555 nm, 510 nm, 470 nm, and 435 nm in the figures).

The axial spherical aberration curve in the figure shows a deviation of light of a corresponding wavelength emitted at a 0-degree field of view relative to an ideal image point after the light passes through the optical system, a horizontal coordinate is a deviation value in an optical axis direction, and a vertical coordinate is a normalized coordinate at a pupil. Deviation values in FIG. 16c and FIG. 16d both are relatively small, and correction of an axial spherical aberration of the optical lens is relatively good.

The field curvature curve in the figure shows a deviation of a convergence point of fine light beams in different fields of view from an ideal imaging plane, x is a light beam in a sagittal direction, y is a light beam in a meridian direction, a horizontal coordinate is a deviation value in an optical axis direction, and a vertical coordinate is a corresponding field of view. When a value of a field of view is excessively large, image quality of the field of view is relatively poor or a high-order aberration exists. As shown in FIG. 16c and FIG. 16d, field curvatures in the two directions are relatively small, and the system has a relatively good depth of focus.

The distortion curve in the figure indicates a relative offset between a convergence point (actual image height) of light beams in different fields of view and an ideal image height. The deviations shown in FIG. 16c and FIG. 16d are relatively small, so that it can be ensured that there is no obvious picture deformation.

Therefore, the optical lens 10 in the eighth embodiment of this application implements relatively low light aberration control by using a proper surface type, a proper gap design, and the like, to obtain clear image quality.

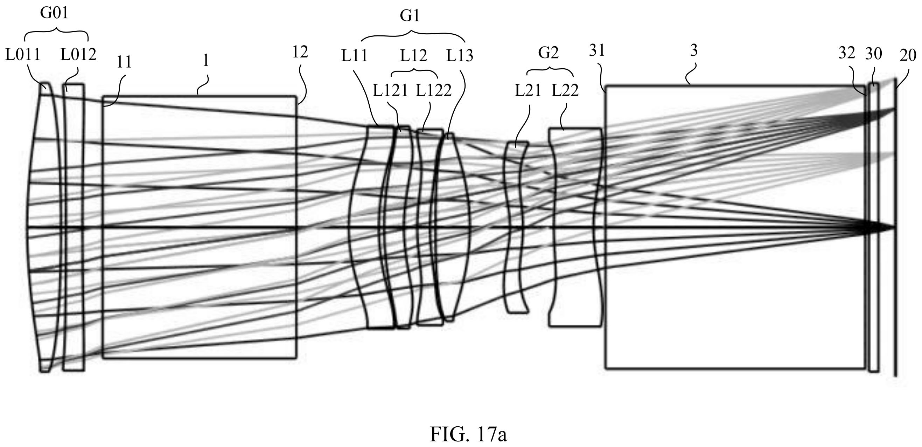

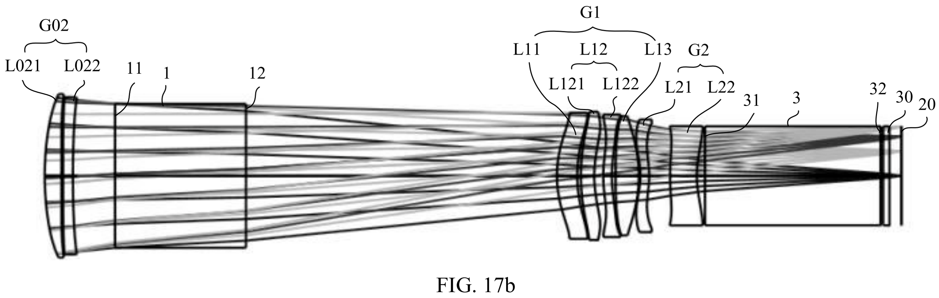

FIG. 17a is a diagram of a structure of an optical lens 10 in a short-focus state according to a ninth embodiment of this application, and FIG. 17b is a diagram of a structure of the optical lens 10 in a long-focus state according to the ninth embodiment of this application. Optical paths of the first turning element 1 and the second turning element 3 in FIG. 17a and FIG. 17b both are unfolded, and are replaced with parallel plates. A main difference between the optical lens 10 shown in FIG. 17a and FIG. 17b and the optical lens 10 shown in FIG. 15a and FIG. 15b lies in that the optical lens 10 has different specific parameters.

The following specifically describes the optical lens 10 shown in FIG. 17a and FIG. 17b with reference to a specific parameter and a simulation result.

Table 3.1 shows a main parameter of the optical lens 10 in the short-focus state according to the ninth embodiment of this application; Table 3.2 shows a main parameter of the optical lens 10 in the long-focus state according to the ninth embodiment of this application; Table 3.3 shows an aspheric coefficient of each surface of an optical element when the optical lens 10 is in the short-focus state according to the ninth embodiment of this application; and Table 3.4 shows an aspheric coefficient of each surface of an optical element when the optical lens 10 is in the long-focus state according to the ninth embodiment of this application.

Table 3.1 Main parameter of the optical lens 10 in the short-focus state according to the ninth embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STAN DARD | | INF | INF | | | | 0.00 |
| S1 | QED_ TYPE | L011 | 19.246 | 1.175 | Resin | 1.5441 | 55.976 | 4.92 |
| S2 | QED_ TYPE | | -65.003 | 0.172 | | | | 4.96 |
| S3 | QED_ TYPE | L012 | -199.124 | 0.573 | Resin | 1.6713 | 19.243 | 4.92 |
| S4 | QED_ TYPE | | 235.974 | 0.702 | | | | 4.92 |
| S5 | STAN DARD | PRISM1 | INF | 6.717 | Glass | 1.8034 | 45.490 | 4.55 |
| S6 | STAN DARD | | INF | 1.820 | | | | 3.91 |
| S7 | QED_ TYPE | L11 | 6.182 | 1.046 | Resin | 1.5441 | 55.976 | 3.48 |
| S8 | QED_ TYPE | | 9.337 | 0.183 | | | | 3.50 |
| S9 | QED_ TYPE | L121 | 11.768 | 0.683 | Resin | 1.6607 | 20.365 | 3.48 |
| S10 | QED_ TYPE | | 5.710 | 0.464 | | | | 3.34 |
| S11 | QED_ TYPE | L122 | 6.451 | 0.444 | Resin | 1.6607 | 20.365 | 3.38 |
| S12 | QED_ TYPE | | 8.414 | 0.190 | | | | 3.14 |
| S13 | QED_ TYPE | L13 | 216.344 | 1.193 | Resin | 1.5348 | 55.664 | 3.25 |
| S14 | QED_ TYPE | | -7.257 | 1.393 | | | | 3.07 |
| S15 | QED_ TYPE | L21 | -3.391 | 0.451 | Resin | 1.5441 | 55.976 | 2.93 |
| S16 | QED_ TYPE | | -4.373 | 1.071 | | | | 2.87 |
| S17 | QED_ TYPE | L22 | 11.638 | 1.374 | Resin | 1.5441 | 55.976 | 2.98 |
| S18 | QED_ TYPE | | 5.342 | 0.418 | | | | 3.53 |

(continued)

| Surface number | Surface type | Optical element | Curvature radius | Thickness (INF) | Material | Refractive index | Abbe number | Light transmission radius |
|---|---|---|---|---|---|---|---|---|
| S19 | STAN DARD | PRISM2 | INF | 9.011 | Glass | 1.8034 | 45.490 | 3.59 |
| S20 | STAN DARD | | INF | 0.132 | | | | 5.17 |
| S21 | STAN DARD | IRCF | INF | 0.328 | Glass | 1.5168 | 64.167 | 5.21 |
| S22 | STAN DARD | | INF | 0.583 | | | | 5.28 |
| S23 | STAN DARD | IMA | INF | 0.025 | | | | 5.47 |

In the table, parameter values of the curvature radius, the thickness, and the light transmission radius all are in a unit of mm. If the curvature radius is INF, it indicates that a surface corresponding to the parameter is a plane, and the curvature radius is infinite.

S1 represents an object side surface of the positive lens L011, and S2 represents an image side surface of the positive lens L011. S3 represents an object side surface of the negative lens L012, and S4 represents an image side surface of the negative lens L012. PRISM1 represents the first turning element 1, and the first turning element 1 is a prism and has a light refraction function. S5 represents a first light incident surface 11 of the first turning element 1, and S6 represents a first light emergent surface 12 of the first turning element 1. S7 represents an object side surface of the first lens L11, and S8 represents an image side surface of the first lens L11. S9 represents an object side surface of the positive lens L121, and S10 represents an image side surface of the positive lens L121. S11 represents an object side surface of the negative lens L122, and S12 represents an image side surface of the negative lens L122. S13 represents an object side surface of the third lens L13, and S14 represents an image side surface of the third lens L13. S15 represents an object side surface of the fourth lens L21, and S16 represents an image side surface of the fourth lens L21. S17 represents an object side surface of the fifth lens L22, and S18 represents an image side surface of the fifth lens L22. PRISM2 represents the second turning element 3, and the second turning element 3 is a prism and has a light refraction function. S19 represents a prism incident surface 31 of the second turning element 3, and S20 represents a prism emergent surface 32 of the second turning element 3. IRCF represents a light filter, and the light filter is an infrared light filter. S21 is an object side surface of the light filter, and S22 is an image side surface of the light filter. IMA represents an image plane IMAGE, and the image plane IMAGE may be a photosensitive surface of a photosensitive element.

Table 3.2 Main parameter of the optical lens 10 in the long-focus state according to the ninth embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STAND ARD | | INF | INF | | | | 0.00 |
| S1 | QED_T YPE | L021 | 16.099 | 0.858 | Resin | 1.5441 | 55.976 | 4.26 |
| S2 | QED_T YPE | | 98.830 | 0.079 | | | | 4.10 |
| S3 | QED_T YPE | L022 | 116.547 | 0.508 | Resin | 1.6713 | 19.243 | 4.10 |
| S4 | QED_T YPE | | 67.895 | 2.165 | | | | 4.01 |

(continued)

| Surface number | Surface type | Optical element | Curvature radius | Thickness (INF) | Material | Refractive index | Abbe number | Light transmission radius |
|---|---|---|---|---|---|---|---|---|
| S5 | STANDARD | PRISM1 | INF | 6.717 | Glass | 1.8034 | 45.490 | 3.75 |
| S6 | STANDARD | | INF | 15.958 | | | | 3.64 |
| S7 | QED_TYPE | L11 | 6.182 | 1.046 | Resin | 1.5441 | 55.976 | 3.32 |
| S8 | QED_TYPE | | 9.337 | 0.183 | | | | 3.30 |
| S9 | QED_TYPE | L121 | 11.768 | 0.683 | Resin | 1.6607 | 20.365 | 3.30 |
| S10 | QED_TYPE | | 5.710 | 0.464 | | | | 3.34 |
| S11 | QED_TYPE | L122 | 6.451 | 0.444 | Resin | 1.6607 | 20.365 | 3.21 |
| S12 | QED_TYPE | | 8.414 | 0.190 | | | | 3.14 |
| S13 | QED_TYPE | L13 | 216.344 | 1.193 | Resin | 1.5348 | 55.664 | 3.11 |
| S14 | QED_TYPE | | -7.257 | 0.082 | | | | 3.07 |
| S15 | QED_TYPE | L21 | -3.391 | 0.451 | Resin | 1.5441 | 55.976 | 2.93 |
| S16 | QED_TYPE | | -4.373 | 1.071 | | | | 2.75 |
| S17 | QED_TYPE | L22 | 11.638 | 1.374 | Resin | 1.5441 | 55.976 | 2.58 |
| S18 | QED_TYPE | | 5.342 | 0.418 | | | | 2.55 |
| S19 | STANDARD | PRISM2 | INF | 9.011 | Glass | 1.8034 | 45.490 | 2.55 |
| S20 | STANDARD | | INF | 0.132 | | | | 2.58 |
| S21 | STANDARD | IRCF | INF | 0.328 | Glass | 1.5168 | 64.167 | 2.58 |
| S22 | STANDARD | | INF | 0.605 | | | | 2.58 |
| S23 | STANDARD | IMA | INF | 0.003 | | | | 2.59 |

In the table, parameter values of the curvature radius, the thickness, and the light transmission radius all are in a unit of mm. If the curvature radius is INF, it indicates that a surface corresponding to the parameter is a plane, and the curvature radius is infinite.

S1 represents an object side surface of the positive lens L021, and S2 represents an image side surface of the positive lens L021. S3 represents an object side surface of the negative lens L022, and S4 represents an image side surface of the negative lens L022. PRISM1 represents the first turning element 1, and the first turning element 1 is a prism and has a light refraction function. S5 represents a first light incident surface 11 of the first turning element 1, and S6 represents a first light emergent surface 12 of the first turning element 1. S7 represents an object side surface of the first lens L11, and S8 represents an image side surface of the first lens L11. S9 represents an object side surface of the positive lens L121, and S10 represents an image side surface of the positive lens L121. S11 represents an object side surface of the negative lens L122, and S12 represents an image side surface of the negative lens L122. S13 represents an object side surface of the third lens L13, and S14 represents an image side surface of the third lens L13. S15 represents an object side surface of the fourth lens L21, and S16 represents an image side surface of the fourth lens L21. S17 represents an object side surface of the fifth lens L22, and S18 represents an image side surface of the fifth lens L22. PRISM2 represents the second turning element 3, and the second turning element 3 is a prism and has a light refraction function. S19 represents a prism incident surface 31 of the second turning element 3, and S20 represents a prism emergent surface 32 of the second turning element 3. IRCF represents a light filter, and the light filter is an infrared light filter. S21 is an object side surface of the light filter, and S22 is an image side surface of the light filter. IMA represents an image plane IMAGE, and the image plane IMAGE may be a photosensitive surface of a photosensitive element.

Table 3.3 Aspheric coefficient of each surface of the optical element when the optical lens 10 is in the short-focus state according to the ninth embodiment of this application

| Surface number | K | Norm radius | $A_0$ | $A_1$ | $A_2$ | $A_3$ | $A_4$ | $A_5$ |
|---|---|---|---|---|---|---|---|---|
| S0 | 0.000 | 0.000 | 0.00E+00 | 0.00E+00 | 0.00E+00 | 0.00E+00 | 0.00E+00 | 0.00E+00 |
| S1 | -2.318 | 4.915 | -1.31E-01 | -1.72E-02 | -9.37E-03 | -3.98E-03 | -1.36E-03 | -2.94E-04 |
| S2 | 0.000 | 4.956 | -2.05E-01 | -1.17E-02 | -1.43E-02 | -2.68E-03 | -1.05E-03 | 1.37E-04 |
| S3 | 0.000 | 4.475 | -1.41E-02 | -9.97E-03 | -7.76E-04 | 3.76E-04 | -5.70E-05 | 8.38E-05 |
| S4 | 0.000 | 4.475 | 1.74E-02 | -1.56E-02 | 1.93E-03 | -3.68E-05 | 1.43E-04 | -3.22E-06 |
| S5 | 0.000 | 0.000 | 0.00E+00 | 0.00E+00 | 0.00E+00 | 0.00E+00 | 0.00E+00 | 0.00E+00 |
| S6 | 0.000 | 0.000 | 0.00E+00 | 0.00E+00 | 0.00E+00 | 0.00E+00 | 0.00E+00 | 0.00E+00 |
| S7 | -0.542 | 3.501 | -3.05E-01 | -8.66E-02 | -2.93E-03 | -1.42E-03 | 9.15E-04 | -3.67E-04 |
| S8 | 0.000 | 3.435 | -2.47E-02 | -1.23E-01 | 2.35E-02 | -8.36E-03 | 4.24E-03 | -2.49E-03 |
| S9 | 0.000 | 3.419 | -3.08E-02 | -4.71E-02 | 9.60E-03 | -1.32E-04 | 2.88E-03 | -9.00E-04 |
| S10 | 0.185 | 3.342 | -9.15E-01 | -3.77E-03 | 4.82E-03 | 1.55E-02 | -5.06E-03 | 6.04E-04 |
| S11 | 0.441 | 3.262 | -1.04E+00 | 1.07E-01 | 1.81E-02 | -2.79E-03 | -3.27E-03 | 1.28E-03 |
| S12 | 5.030 | 3.138 | -4.29E-01 | 4.04E-02 | 1.90E-02 | -1.68E-02 | 2.40E-04 | -9.09E-04 |
| S13 | 0.000 | 3.116 | 2.82E-01 | -1.59E-02 | 1.93E-02 | -4.91E-03 | 3.53E-03 | -1.58E-03 |
| S14 | 3.437 | 3.072 | 2.76E-01 | 3.74E-02 | 7.72E-03 | 2.59E-03 | 1.59E-03 | 4.51E-05 |
| S15 | -0.430 | 2.933 | 1.51E+00 | -1.48E-01 | 3.42E-02 | -7.46E-03 | 2.00E-03 | -5.30E-04 |
| S16 | 0.000 | 2.864 | 1.36E+00 | -1.29E-01 | 2.85E-02 | -5.83E-03 | 1.34E-03 | -3.17E-04 |
| S17 | 0.000 | 2.972 | -5.60E-01 | -1.02E-02 | -8.20E-04 | -2.89E-03 | 1.47E-04 | -3.38E-04 |
| S18 | 0.894 | 3.523 | -1.39E+00 | 6.38E-03 | -2.26E-02 | -2.98E-03 | -1.04E-03 | -4.47E-04 |
| S19 | 0.000 | 0.000 | 0.00E+00 | 0.00E+00 | 0.00E+00 | 0.00E+00 | 0.00E+00 | 0.00E+00 |
| S20 | 0.000 | 0.000 | 0.00E+00 | 0.00E+00 | 0.00E+00 | 0.00E+00 | 0.00E+00 | 0.00E+00 |
| S21 | 0.000 | 0.000 | 0.00E+00 | 0.00E+00 | 0.00E+00 | 0.00E+00 | 0.00E+00 | 0.00E+00 |
| S22 | 0.000 | 0.000 | 0.00E+00 | 0.00E+00 | 0.00E+00 | 0.00E+00 | 0.00E+00 | 0.00E+00 |
| S23 | 0.000 | 0.000 | 0.00E+00 | 0.00E+00 | 0.00E+00 | 0.00E+00 | 0.00E+00 | 0.00E+00 |

| Surface number | $A_6$ | $A_7$ | $A_8$ | $A_9$ | $A_{10}$ | $A_{11}$ | A12 | A13 |
|---|---|---|---|---|---|---|---|---|
| S0 | 0.00E+00 | 0.00E+00 | 0.00E+00 | 0.00E+00 | 0.00E+00 | 0.00E+00 | 0.00E+00 | 0.00E+00 |
| S1 | -1.24E-06 | 7.39E-06 | 2.82E-06 | 2.43E-06 | 3.64E-06 | 2.66E-06 | -4.67E-06 | 1.36E-06 |

(continued)

| Surface number | $A_6$ | $A_7$ | $A_8$ | $A_9$ | $A_{10}$ | $A_{11}$ | A12 | A13 |
|---|---|---|---|---|---|---|---|---|
| S2 | 5.56E-05 | -2.51E-05 | 8.86E-06 | -5.29E-06 | 8.85E-06 | -7.12E-06 | -3.05E-08 | 9.75E-07 |
| S3 | 5.29E-06 | -1.84E-07 | 3.26E-07 | 0.00E+00 | 0.00E+00 | 0.00E+00 | 0.00E+00 | 0.00E+00 |
| S4 | -5.58E-06 | -1.73E-06 | 2.45E-06 | 0.00E+00 | 0.00E+00 | 0.00E+00 | 0.00E+00 | 0.00E+00 |
| S5 | 0.00E+00 | 0.00E+00 | 0.00E+00 | 0.00E+00 | 0.00E+00 | 0.00E+00 | 0.00E+00 | 0.00E+00 |
| S6 | 0.00E+00 | 0.00E+00 | 0.00E+00 | 0.00E+00 | 0.00E+00 | 0.00E+00 | 0.00E+00 | 0.00E+00 |
| S7 | -9.57E-07 | -1.48E-04 | 2.65E-06 | -4.61E-05 | 3.48E-06 | -4.38E-06 | 2.89E-06 | 1.41E-06 |
| S8 | 1.40E-03 | -9.12E-04 | 3.14E-04 | -2.66E-04 | 5.45E-05 | -1.51E-04 | 2.92E-05 | 3.18E-05 |
| S9 | 1.42E-03 | -7.48E-04 | 4.01E-04 | -1.71E-04 | 7.77E-05 | -1.76E-04 | 1.80E-05 | 1.62E-05 |
| S10 | 3.04E-04 | -1.01E-05 | 1.55E-04 | 7.56E-05 | 3.14E-05 | -6.02E-05 | 2.58E-05 | -2.47E-06 |
| S11 | 1.32E-04 | -2.94E-04 | -6.03E-05 | 2.50E-04 | -7.54E-05 | -2.07E-05 | 2.01E-05 | -2.85E-06 |
| S12 | 8.65E-04 | -2.16E-05 | -4.33E-04 | 1.88E-04 | -1.11E-04 | -1.91E-05 | 3.50E-05 | 1.12E-07 |
| S13 | 8.52E-04 | 3.37E-04 | -2.52E-04 | 1.13E-04 | -6.84E-05 | -3.68E-05 | 2.44E-05 | 1.88E-06 |
| S14 | 1.77E-04 | 7.72E-05 | 4.69E-05 | 8.32E-06 | 7.23E-07 | -4.23E-07 | 1.28E-06 | -1.16E-07 |
| S15 | 1.61E-04 | -5.23E-05 | 2.24E-05 | -1.19E-05 | 5.73E-06 | -1.53E-06 | 1.28E-06 | 0.00E+00 |
| S16 | 6.62E-05 | -2.50E-05 | 1.19E-05 | -4.17E-06 | 4.47E-06 | 2.81E-06 | 0.00E+00 | 0.00E+00 |
| S17 | -1.02E-06 | -3.84E-05 | 3.18E-06 | -5.38E-06 | 1.88E-06 | 2.11E-07 | 1.47E-06 | 1.09E-06 |
| S18 | -7.84E-05 | -5.15E-05 | -1.31E-05 | -1.32E-05 | -4.62E-06 | -3.68E-06 | -1.23E-06 | -2.32E-07 |
| S19 | 0.00E+00 | 0.00E+00 | 0.00E+00 | 0.00E+00 | 0.00E+00 | 0.00E+00 | 0.00E+00 | 0.00E+00 |
| S20 | 0.00E+00 | 0.00E+00 | 0.00E+00 | 0.00E+00 | 0.00E+00 | 0.00E+00 | 0.00E+00 | 0.00E+00 |
| S21 | 0.00E+00 | 0.00E+00 | 0.00E+00 | 0.00E+00 | 0.00E+00 | 0.00E+00 | 0.00E+00 | 0.00E+00 |
| S22 | 0.00E+00 | 0.00E+00 | 0.00E+00 | 0.00E+00 | 0.00E+00 | 0.00E+00 | 0.00E+00 | 0.00E+00 |
| S23 | 0.00E+00 | 0.00E+00 | 0.00E+00 | 0.00E+00 | 0.00E+00 | 0.00E+00 | 0.00E+00 | 0.00E+00 |

Table 3.4 Aspheric coefficient of each surface of the optical element when the optical lens 10 is in the long-focus state according to the ninth embodiment of this application

| Surface number | K | Norm radius | $A_0$ | $A_1$ | $A_2$ | $A_3$ | $A_4$ | $A_5$ |
|---|---|---|---|---|---|---|---|---|
| S0 | 0.000 | 0.00 | 0.00E+00 | 0.00E+00 | 0.00E+00 | 0.00E+00 | 0.00E+00 | 0.00E+00 |
| S1 | 2.094 | 4.26 | 0.084 | 2.53E-02 | -2.62E-04 | 9.57E-04 | -1.84E-04 | 1.26E-04 |
| S2 | 0.000 | 4.10 | -1.41E-02 | 4.88E-02 | -1.28E-02 | 6.56E-03 | -3.41E-03 | 1.90E-03 |
| S3 | 0.000 | 4.47 | 3.30E-03 | 3.47E-02 | -9.72E-03 | 3.32E-03 | -4.68E-03 | 1.54E-03 |
| S4 | 0.000 | 4.47 | 1.19E-01 | 1.15E-02 | 3.23E-03 | -2.60E-03 | -1.92E-03 | -9.12E-04 |
| S5 | 0.000 | 0.00 | 0.00E+00 | 0.00E+00 | 0.00E+00 | 0.00E+00 | 0.00E+00 | 0.00E+00 |
| S6 | 0.000 | 0.00 | 0.00E+00 | 0.00E+00 | 0.00E+00 | 0.00E+00 | 0.00E+00 | 0.00E+00 |
| S7 | -0.542 | 3.50 | -3.05E-01 | -8.66E-02 | -2.93E-03 | -1.42E-03 | 9.15E-04 | -3.67E-04 |
| S8 | 0.000 | 3.44 | -2.47E-02 | -1.23E-01 | 2.35E-02 | -8.36E-03 | 4.24E-03 | -2.49E-03 |
| S9 | 0.000 | 3.42 | -3.08E-02 | -4.71E-02 | 9.60E-03 | -1.32E-04 | 2.88E-03 | -9.00E-04 |
| S10 | 0.185 | 3.34 | -9.15E-01 | -3.77E-03 | 4.82E-03 | 1.55E-02 | -5.06E-03 | 6.04E-04 |
| S11 | 0.441 | 3.26 | -1.04E+00 | 1.07E-01 | 1.81E-02 | -2.79E-03 | -3.27E-03 | 1.28E-03 |
| S12 | 5.030 | 3.14 | -4.29E-01 | 4.04E-02 | 1.90E-02 | -1.68E-02 | 2.40E-04 | -9.09E-04 |

(continued)

| Surface number | K | Norm radius | $A_0$ | $A_1$ | $A_2$ | $A_3$ | $A_4$ | $A_5$ |
|---|---|---|---|---|---|---|---|---|
| S13 | 0.000 | 3.12 | 2.82E-01 | -1.59E-02 | 1.93E-02 | -4.91E-03 | 3.53E-03 | -1.58E-03 |
| S14 | 3.437 | 3.07 | 2.76E-01 | 3.74E-02 | 7.72E-03 | 2.59E-03 | 1.59E-03 | 4.51E-05 |
| S15 | -0.430 | 2.93 | 1.51E+00 | -1.48E-01 | 3.42E-02 | -7.46E-03 | 2.00E-03 | -5.30E-04 |
| S16 | 0.000 | 2.86 | 1.36E+00 | -1.29E-01 | 2.85E-02 | -5.83E-03 | 1.34E-03 | -3.17E-04 |
| S17 | 0.000 | 2.97 | -5.60E-01 | -1.02E-02 | -8.20E-04 | -2.89E-03 | 1.47E-04 | -3.38E-04 |
| S18 | 0.894 | 3.52 | -1.39E+00 | 6.38E-03 | -2.26E-02 | -2.98E-03 | -1.04E-03 | -4.47E-04 |
| S19 | 0.000 | 0.00 | 0.00E+00 | 0.00E+00 | 0.00E+00 | 0.00E+00 | 0.00E+00 | 0.00E+00 |
| S20 | 0.000 | 0.00 | 0.00E+00 | 0.00E+00 | 0.00E+00 | 0.00E+00 | 0.00E+00 | 0.00E+00 |
| S21 | 0.000 | 0.00 | 0.00E+00 | 0.00E+00 | 0.00E+00 | 0.00E+00 | 0.00E+00 | 0.00E+00 |
| S22 | 0.000 | 0.00 | 0.00E+00 | 0.00E+00 | 0.00E+00 | 0.00E+00 | 0.00E+00 | 0.00E+00 |
| S23 | 0.000 | 0.00 | 0.00E+00 | 0.00E+00 | 0.00E+00 | 0.00E+00 | 0.00E+00 | 0.00E+00 |

| Surface number | $A_6$ | $A_7$ | $A_8$ | $A_9$ | $A_{10}$ | $A_{11}$ | $A_{12}$ | $A_{13}$ |
|---|---|---|---|---|---|---|---|---|
| S0 | 0.00E+00 | 0.00E+00 | 0.00E+00 | 0.00E+00 | 0.00E+00 | 0.00E+00 | 0.00E+00 | 0.00E+00 |
| S1 | -7.28E-05 | 6.71E-05 | 2.96E-05 | 0.00E+00 | 0.00E+00 | 0.00E+00 | 0.00E+00 | 0.00E+00 |
| S2 | -1.24E-03 | 4.13E-04 | -3.06E-05 | -6.71E-07 | 0.00E+00 | 0.00E+00 | 0.00E+00 | 0.00E+00 |
| S3 | -1.37E-03 | 8.57E-04 | -2.75E-04 | 0.00E+00 | 0.00E+00 | 0.00E+00 | 0.00E+00 | 0.00E+00 |
| S4 | -6.86E-04 | -1.29E-04 | -7.37E-05 | 0.00E+00 | 0.00E+00 | 0.00E+00 | 0.00E+00 | 0.00E+00 |
| S5 | 0.00E+00 | 0.00E+00 | 0.00E+00 | 0.00E+00 | 0.00E+00 | 0.00E+00 | 0.00E+00 | 0.00E+00 |
| S6 | 0.00E+00 | 0.00E+00 | 0.00E+00 | 0.00E+00 | 0.00E+00 | 0.00E+00 | 0.00E+00 | 0.00E+00 |
| S7 | -9.57E-07 | -1.48E-04 | 2.65E-06 | -4.61E-05 | 3.48E-06 | -4.38E-06 | 2.89E-06 | 1.41E-06 |
| S8 | 1.40E-03 | -9.12E-04 | 3.14E-04 | -2.66E-04 | 5.45E-05 | -1.51E-04 | 2.92E-05 | 3.18E-05 |
| S9 | 1.42E-03 | -7.48E-04 | 4.01E-04 | -1.71E-04 | 7.77E-05 | -1.76E-04 | 1.80E-05 | 1.62E-05 |
| S10 | 3.04E-04 | -1.01E-05 | 1.55E-04 | 7.56E-05 | 3.14E-05 | -6.02E-05 | 2.58E-05 | -2.47E-06 |
| S11 | 1.32E-04 | -2.94E-04 | -6.03E-05 | 2.50E-04 | -7.54E-05 | -2.07E-05 | 2.01E-05 | -2.85E-06 |
| S12 | 8.65E-04 | -2.16E-05 | -4.33E-04 | 1.88E-04 | -1.11E-04 | -1.91E-05 | 3.50E-05 | 1.12E-07 |
| S13 | 8.52E-04 | 3.37E-04 | -2.52E-04 | 1.13E-04 | -6.84E-05 | -3.68E-05 | 2.44E-05 | 1.88E-06 |
| S14 | 1.77E-04 | 7.72E-05 | 4.69E-05 | 8.32E-06 | 7.23E-07 | -4.23E-07 | 1.28E-06 | -1.16E-07 |
| S15 | 1.61E-04 | -5.23E-05 | 2.24E-05 | -1.19E-05 | 5.73E-06 | -1.53E-06 | 1.28E-06 | 0.00E+00 |
| S16 | 6.62E-05 | -2.50E-05 | 1.19E-05 | -4.17E-06 | 4.47E-06 | 2.81E-06 | 0.00E+00 | 0.00E+00 |
| S17 | -1.02E-06 | -3.84E-05 | 3.18E-06 | -5.38E-06 | 1.88E-06 | 2.11E-07 | 1.47E-06 | 1.09E-06 |
| S18 | -7.84E-05 | -5.15E-05 | -1.31E-05 | -1.32E-05 | -4.62E-06 | -3.68E-06 | -1.23E-06 | -2.32E-07 |
| S19 | 0.00E+00 | 0.00E+00 | 0.00E+00 | 0.00E+00 | 0.00E+00 | 0.00E+00 | 0.00E+00 | 0.00E+00 |
| S20 | 0.00E+00 | 0.00E+00 | 0.00E+00 | 0.00E+00 | 0.00E+00 | 0.00E+00 | 0.00E+00 | 0.00E+00 |
| S21 | 0.00E+00 | 0.00E+00 | 0.00E+00 | 0.00E+00 | 0.00E+00 | 0.00E+00 | 0.00E+00 | 0.00E+00 |
| S22 | 0.00E+00 | 0.00E+00 | 0.00E+00 | 0.00E+00 | 0.00E+00 | 0.00E+00 | 0.00E+00 | 0.00E+00 |
| S23 | 0.00E+00 | 0.00E+00 | 0.00E+00 | 0.00E+00 | 0.00E+00 | 0.00E+00 | 0.00E+00 | 0.00E+00 |

Table 3.5 Basic parameter of the optical path when the optical lens 10 is in the short-focus state according to the ninth embodiment of this application

| Parameter | ImgH | $F_1$ | F/# | $f_{L011}$ | $f_{L012}$ | $f_{L1}$ | $f_{L121}$ | $f_{L122}$ | $f_{L13}$ | $f_{L21}$ | $f_{L22}$ |
|---|---|---|---|---|---|---|---|---|---|---|---|
| Value | 5.120 | 19.661 | 2.17 | 27.338 | -159.450 | 29.999 | -17.424 | 38.032 | 13.110 | -32.994 | -19.599 |
| Unit | mm | mm | mm | mm | mm | mm | mm | mm | mm | mm | mm |

Table 3.6 Basic parameter of the optical path when the optical lens 10 is in the long-focus state according to the ninth embodiment of this application

| Parameter | ImgH | $F_2$ | F/# | $f_{L021}$ | $f_{L022}$ | $f_{L11}$ | $f_{L121}$ | $f_{L122}$ | $f_{L13}$ | $f_{L21}$ | $f_{L22}$ |
|---|---|---|---|---|---|---|---|---|---|---|---|
| Value | 2.567 | 30.720 | 3.76 | 35.103 | -241.286 | 29.999 | -17.424 | 38.032 | 13.110 | -32.994 | -19.599 |
| Unit | mm | mm | mm | mm | mm | mm | mm | mm | mm | mm | mm |

Table 3.7 Related parameter and value of $\xi$ of the optical lens 10 according to the ninth embodiment of this application, where an object distance is INFINITY (infinity)

| Short-focus state | $f_{g01}$ | $f_{g1}$ | $f_{g011}$ | $F_1$ | $f_{g2}$ | $\beta_1$ | $\alpha_1$ | $\xi_1$ | L | k |
|---|---|---|---|---|---|---|---|---|---|---|
| | 32.768 | 13.864 | 12.139 | 19.661 | -11.346 | 0.370 | 1.620 | 2.263 | 13.719 | |
| Unit | mm | mm | mm | mm | mm | / | | / | | |
| Long-focus state | $f_{g02}$ | $f_{g1}$ | $f_{g021}$ | $F_2$ | $f_{g2}$ | $\beta_2$ | $\alpha_2$ | $\xi_2$ | | 0.411 |
| | 40.789 | 13.864 | 18.945 | 30.720 | -11.346 | 0.453 | 1.661 | 2.192 | | |
| Unit | mm | mm | mm | mm | mm | / | | / | mm | / |

In Table 3.5 to Table 3.7, $F_1$ is a first effective focal length of the optical lens 10, and $F_2$ is a second effective focal length of the optical lens 10; $f_{L011}$ is a focal length of the positive lens L011, $f_{L012}$ is a focal length of the negative lens L012, $f_{L021}$ is a focal length of the positive lens L021, $f_{L022}$ is a focal length of the negative lens L022, $f_{L11}$ is a focal length of the first lens L11, $f_{L12}$ is a focal length of the second lens L12, $f_{L13}$ is a focal length of the third lens L13, $f_{L21}$ is a focal length of the fourth lens L21, $f_{L221}$ is a focal length of the positive lens L221, and $f_{L222}$ is a focal length of the negative lens L222; $f_{g01}$ is an effective focal length of the first front lens group G01, $f_{g02}$ is an effective focal length of the second front lens group G02, $f_{g1}$ is an effective focal length of the first rear lens group G1, and $f_{g2}$ is an effective focal length of the second rear lens group G2; $f_{g011}$ is a combined focal length of the first front lens group G01 and the first rear lens group G1, and $f_{g021}$ is a combined focal length of the second front lens group G02 and the first rear lens group G1; $\beta_1$ is a first focal length allocation ratio, and $\beta_1=f_{g011}/f_{g01}$; $\beta_2$ is a second focal length allocation ratio, and $\beta_2=f_{g021}/f_{g02}$; $\alpha_1$ is a third focal length allocation ratio, and $\alpha_1=F_1/f_{g011}$; $\alpha_2$ is a fourth focal length allocation ratio, and $\alpha_2=F_2/f_{g021}$; $\xi_1$ is a stroke compression ratio coefficient of the first rear lens group G1 when the optical lens 10 is in the short-focus state, and $\xi_2$ is a stroke compression ratio coefficient of the first rear lens group G1 when the optical lens 10 is in the long-focus state; L is a moving stroke of the first turning element 1 between the first position and the second position; and coefficient $k=[(\beta_1-1)^2/\beta_1]-[(\beta_2-1)^2/\beta_2]$.

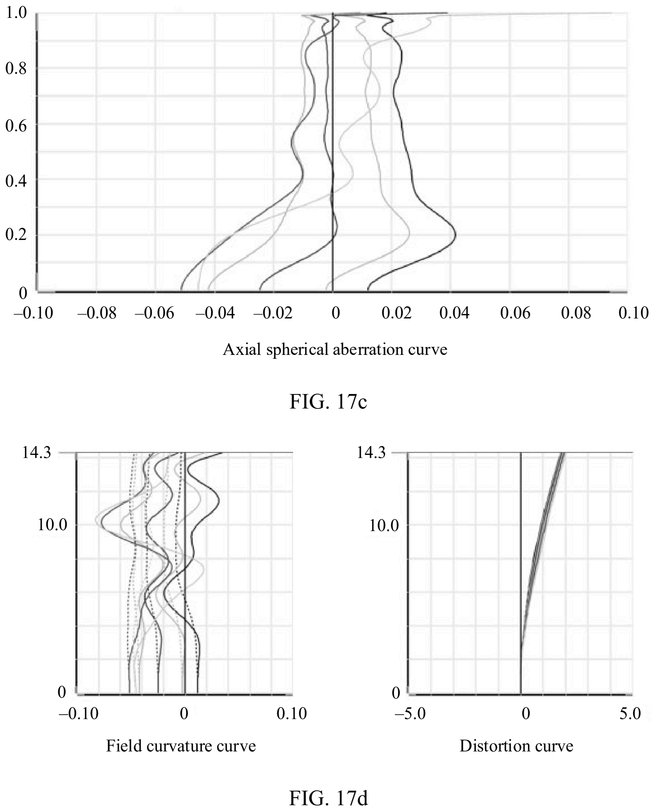

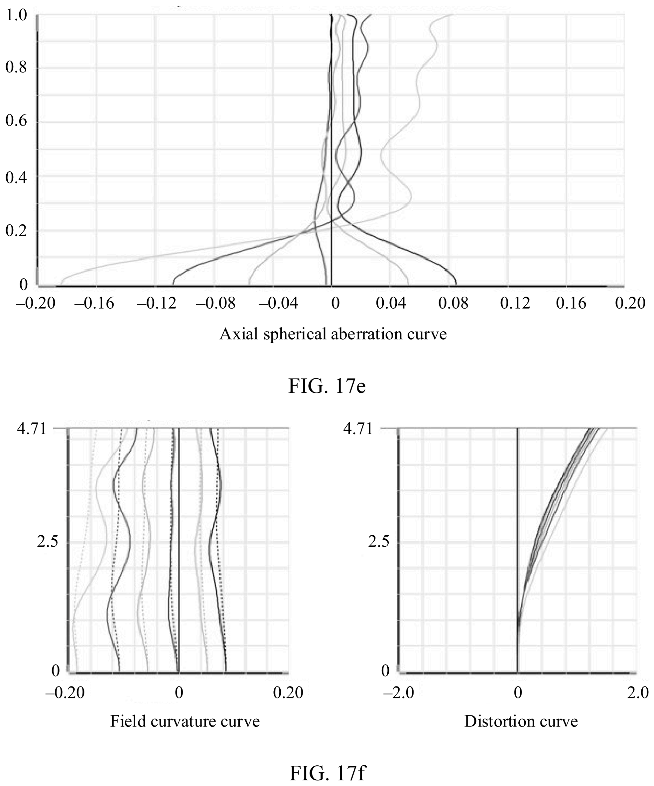

FIG. 17c shows an axial spherical aberration curve of the optical lens 10 in the short-focus state according to the ninth embodiment of this application, FIG. 17d shows a field curvature curve and a distortion curve of the optical lens 10 in the short-focus state according to the ninth embodiment of this application, FIG. 17e shows an axial spherical aberration curve of the optical lens 10 in the long-focus state according to the ninth embodiment of this application, and FIG. 17f shows a field curvature curve and a distortion curve of the optical lens 10 in the long-focus state according to the ninth embodiment of this application. FIG. 17c to FIG. 17f show axial spherical aberration curves, field curvature curves, and distortion curves corresponding to different system bands (including 650 nm, 610 nm, 555 nm, 510 nm, 470 nm, and 435 nm in the figures).

The axial spherical aberration curve in the figure shows a deviation of light of a corresponding wavelength emitted at a 0-degree field of view relative to an ideal image point after the light passes through the optical system, a horizontal coordinate is a deviation value in an optical axis direction, and a vertical coordinate is a normalized coordinate at a pupil. Deviation values in FIG. 17c and FIG. 17e both are relatively small, and correction of an axial spherical aberration of the optical lens is relatively good.

The field curvature curve in the figure shows a deviation of a convergence point of fine light beams in different fields of view from an ideal imaging plane, x is a light beam in a sagittal direction, y is a light beam in a meridian direction, a horizontal coordinate is a deviation value in an optical axis direction, and a vertical coordinate is a corresponding field of view. When a value of a field of view is excessively large, image quality of the field of view is relatively poor or a high-order aberration exists. As shown in FIG. 17d and FIG. 17f, field curvatures in the two directions are relatively small, and the system has a relatively good depth of focus.

The distortion curve in the figure indicates a relative offset between a convergence point (actual image height) of light beams in different fields of view and an ideal image height. The deviations shown in FIG. 17d and FIG. 17f are relatively small, so that it can be ensured that there is no obvious picture deformation.

Therefore, the optical lens 10 in the ninth embodiment of this application implements relatively low light aberration control by using a proper surface type, a proper gap design, and the like, to obtain clear image quality.

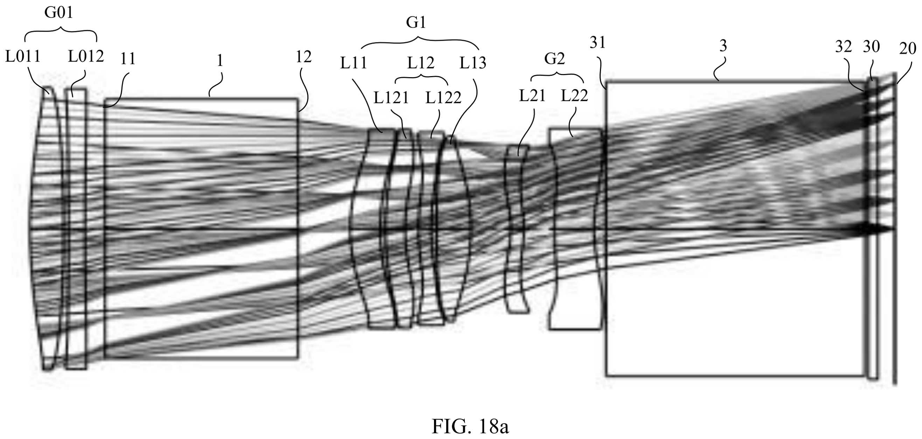

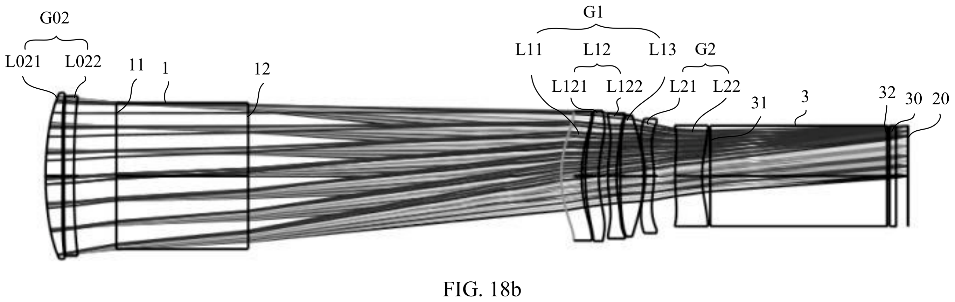

FIG. 18a is a diagram of a structure of an optical lens 10 in a short-focus state according to a tenth embodiment of this application, and FIG. 18b is a diagram of a structure of the optical lens 10 in a long-focus state according to the tenth embodiment of this application. Optical paths of the first turning element 1 and the second turning element 3 in FIG. 18a and FIG. 18b both are unfolded, and are replaced with parallel plates. A main difference between the optical lens 10 shown in FIG. 18a and FIG. 18b and the optical lens 10 shown in FIG. 15a and FIG. 15b lies in that the optical lens 10 has different specific parameters.

The following specifically describes the optical lens 10 shown in FIG. 18a and FIG. 18b with reference to a specific parameter and a simulation result.

Table 4.1 Main parameter of the optical lens 10 in the short-focus state according to the tenth embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STANDARD | | INF | INF | | | | 0.00E+00 |
| SI(STO) | QED_TYPE | L011 | 30.697 | 1.875 | Resin | 1.5441 | 55.976 | 7.84E+00 |
| S2 | QED_TYPE | | -103.675 | 0.275 | | | | 7.90E+00 |
| S3 | QED_TYPE | L012 | -317.587 | 0.915 | Resin | 1.6713 | 19.243 | 7.84E+00 |
| S4 | QED_TYPE | | 376.361 | 1.120 | | | | 7.84E+00 |
| S5 | STANDARD | PRISM 1 | INF | 10.714 | Glass | 1.8034 | 45.490 | 7.25E+00 |
| S6 | STANDARD | | INF | 2.903 | | | | 6.23E+00 |
| S7 | QED_TYPE | L11 | 9.859 | 1.668 | Resin | 1.5441 | 55.976 | 5.56E+00 |
| S8 | QED_TYPE | | 14.892 | 0.292 | | | | 5.57E+00 |
| S9 | QED_TYPE | L121 | 18.770 | 1.089 | Resin | 1.6607 | 20.365 | 5.56E+00 |
| S10 | QED_TYPE | | 9.106 | 0.740 | | | | 5.33E+00 |
| S11 | QED_TYPE | L122 | 10.289 | 0.708 | Resin | 1.6607 | 20.365 | 5.40E+00 |
| S12 | QED_TYPE | | 13.420 | 0.302 | | | | 5.00E+00 |

(continued)

| Surface number | Surface type | Optical element | Curvature radius | Thickness (INF) | Material | Refractive index | Abbe number | Light transmission radius |
|---|---|---|---|---|---|---|---|---|
| S13 | QED_TYPE | L13 | 345.052 | 1.902 | Resin | 1.5348 | 55.664 | 5.18E+00 |
| S14 | QED_TYPE | | -11.574 | 2.222 | | | | 4.90E+00 |
| S15 | QED_TYPE | L21 | -5.408 | 0.719 | Resin | 1.5441 | 55.976 | 4.68E+00 |
| S16 | QED_TYPE | | -6.975 | 1.709 | | | | 4.58E+00 |
| S17 | QED_TYPE | L22 | 18.562 | 2.191 | Resin | 1.5441 | 55.976 | 4.75E+00 |
| S18 | QED_TYPE | | 8.520 | 0.666 | | | | 5.63E+00 |
| S19 | STANDARD | PRISM2 | INF | 14.372 | Glass | 1.8034 | 45.490 | 5.73E+00 |
| S20 | STANDARD | | INF | 0.211 | | | | 8.24E+00 |
| S21 | STANDARD | IRCF | INF | 0.523 | Glass | 1.5168 | 64.167 | 8.31E+00 |
| S22 | STANDARD | | INF | 0.929 | | | | 8.42E+00 |
| S23 | STANDARD | IMA | INF | 0.000 | | | | 8.74E+00 |

In the table, parameter values of the curvature radius, the thickness, and the light transmission radius all are in a unit of mm. If the curvature radius is INF, it indicates that a surface corresponding to the parameter is a plane, and the curvature radius is infinite.

S1 represents an object side surface of the positive lens L011, and S2 represents an image side surface of the positive lens L011. S3 represents an object side surface of the negative lens L012, and S4 represents an image side surface of the negative lens L012. PRISM1 represents the first turning element 1, and the first turning element 1 is a prism and has a light refraction function. S5 represents a first light incident surface 11 of the first turning element 1, and S6 represents a first light emergent surface 12 of the first turning element 1. S7 represents an object side surface of the first lens L11, and S8 represents an image side surface of the first lens L11. S9 represents an object side surface of the positive lens L121, and S10 represents an image side surface of the positive lens L121. S11 represents an object side surface of the negative lens L122, and S12 represents an image side surface of the negative lens L122. S13 represents an object side surface of the third lens L13, and S14 represents an image side surface of the third lens L13. S15 represents an object side surface of the fourth lens L21, and S16 represents an image side surface of the fourth lens L21. S17 represents an object side surface of the fifth lens L22, and S18 represents an image side surface of the fifth lens L22. PRISM2 represents the second turning element 3, and the second turning element 3 is a prism and has a light refraction function. S19 represents a prism incident surface 31 of the second turning element 3, and S20 represents a prism emergent surface 32 of the second turning element 3. IRCF represents a light filter, and the light filter is an infrared light filter. S21 is an object side surface of the light filter, and S22 is an image side surface of the light filter. IMA represents an image plane IMAGE, and the image plane IMAGE may be a photosensitive surface of a photosensitive element.

Table 4.2 Main parameter of the optical lens 10 in the long-focus state according to the tenth embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STANDARD | | INF | INF | | | | 1.08E+07 |
| S1(STO) | QED_TYPE | L021 | 25.677 | 1.368 | Resin | 1.5441 | 55.976 | 6.79E+00 |
| S2 | QED_TYPE | | 157.626 | 0.126 | | | | 6.53E+00 |
| S3 | QED_TYPE | L022 | 185.884 | 0.810 | Resin | 1.6713 | 19.243 | 6.53E+00 |
| S4 | QED_TYPE | | 108.288 | 3.453 | | | | 6.40E+00 |
| S5 | STANDARD | PRISM 1 | INF | 10.714 | Glass | 1.8034 | 45.490 | 5.98E+00 |
| S6 | STANDARD | | INF | 25.452 | | | | 5.81E+00 |
| S7 | QED_TYPE | L11 | 9.859 | 1.668 | Resin | 1.5441 | 55.976 | 5.29E+00 |
| S8 | QED_TYPE | | 14.892 | 0.292 | | | | 5.27E+00 |
| S9 | QED_TYPE | L121 | 18.770 | 1.089 | Resin | 1.6607 | 20.365 | 5.26E+00 |
| S10 | QED_TYPE | | 9.106 | 0.740 | | | | 5.33E+00 |
| S11 | QED_TYPE | L122 | 10.289 | 0.708 | Resin | 1.6607 | 20.365 | 5.12E+00 |
| S12 | QED_TYPE | | 13.420 | 0.302 | | | | 5.00E+00 |
| S13 | QED_TYPE | L13 | 345.052 | 1.902 | Resin | 1.5348 | 55.664 | 4.96E+00 |
| S14 | QED_TYPE | | -11.574 | 0.131 | | | | 4.90E+00 |
| S15 | QED_TYPE | L21 | -5.408 | 0.719 | Resin | 1.5441 | 55.976 | 4.68E+00 |
| S16 | QED_TYPE | | -6.975 | 1.709 | | | | 4.39E+00 |
| S17 | QED_TYPE | L22 | 18.562 | 2.191 | Resin | 1.5441 | 55.976 | 4.12E+00 |
| S18 | QED_TYPE | | 8.520 | 0.666 | | | | 4.07E+00 |
| S19 | STANDARD | PRISM2 | INF | 14.372 | Glass | 1.8034 | 45.490 | 4.07E+00 |
| S20 | STANDARD | | INF | 0.211 | | | | 4.11E+00 |

(continued)

| Surface number | Surface type | Optical element | Curvature radius | Thickness (INF) | Material | Refractive index | Abbe number | Light transmission radius |
|---|---|---|---|---|---|---|---|---|
| S21 | STAN DARD | IRCF | INF | 0.523 | Glass | 1.5168 | 64.167 | 4.12E+00 |
| S22 | STAN DARD | | INF | 0.965 | | | | 4.12E+00 |
| S23 | STAN DARD | IMA | INF | 0.000 | | | | 4.12E+00 |

In the table, parameter values of the curvature radius, the thickness, and the light transmission radius all are in a unit of mm. If the curvature radius is INF, it indicates that a surface corresponding to the parameter is a plane, and the curvature radius is infinite.

S1 represents an object side surface of the positive lens L021, and S2 represents an image side surface of the positive lens L021. S3 represents an object side surface of the negative lens L022, and S4 represents an image side surface of the negative lens L022. PRISM1 represents the first turning element 1, and the first turning element 1 is a prism and has a light refraction function. S5 represents a first light incident surface 11 of the first turning element 1, and S6 represents a first light emergent surface 12 of the first turning element 1. S7 represents an object side surface of the first lens L11, and S8 represents an image side surface of the first lens L11. S9 represents an object side surface of the positive lens L121, and S10 represents an image side surface of the positive lens L121. S11 represents an object side surface of the negative lens L122, and S12 represents an image side surface of the negative lens L122. S13 represents an object side surface of the third lens L13, and S14 represents an image side surface of the third lens L13. S15 represents an object side surface of the fourth lens L21, and S16 represents an image side surface of the fourth lens L21. S17 represents an object side surface of the fifth lens L22, and S18 represents an image side surface of the fifth lens L22. PRISM2 represents the second turning element 3, and the second turning element 3 is a prism and has a light refraction function. S19 represents a prism incident surface 31 of the second turning element 3, and S20 represents a prism emergent surface 32 of the second turning element 3. IRCF represents a light filter, and the light filter is an infrared light filter. S21 is an object side surface of the light filter, and S22 is an image side surface of the light filter. IMA represents an image plane IMAGE, and the image plane IMAGE may be a photosensitive surface of a photosensitive element.

Table 4.3 Aspheric coefficient of each surface of an optical element when the optical lens 10 is in the short-focus state according to the tenth embodiment of this application

| Surface number | K | Norm radius | $A_0$ | $A_1$ | $A_2$ | $A_3$ | $A_4$ | $A_5$ |
|---|---|---|---|---|---|---|---|---|
| S0 | 0.000 | 0.00 | 0.000E+00 | 0.000E+00 | 0.000E+00 | 0.000E+00 | 0.000E+00 | 0.000E+00 |
| S1 | -2.318 | 7.84 | -2.094E-01 | -2.743E-02 | -1.494E-02 | -6.347E-03 | -2.170E-03 | -4.682E-04 |
| S2 | 0.000 | 7.90 | -3.264E-01 | -1.859E-02 | -2.274E-02 | -4.271E-03 | -1.677E-03 | 2.177E-04 |
| S3 | 0.000 | 7.14 | -2.254E-02 | -1.590E-02 | -1.238E-03 | 5.992E-04 | -9.086E-05 | 1.337E-04 |
| S4 | 0.000 | 7.14 | 2.775E-02 | -2.493E-02 | 3.072E-03 | -5.870E-05 | 2.285E-04 | -5.131E-06 |
| S5 | 0.000 | 0.00 | 0.000E+00 | 0.000E+00 | 0.000E+00 | 0.000E+00 | 0.000E+00 | 0.000E+00 |
| S6 | 0.000 | 0.00 | 0.000E+00 | 0.000E+00 | 0.000E+00 | 0.000E+00 | 0.000E+00 | 0.000E+00 |
| S7 | -0.542 | 5.58 | -4.866E-01 | -1.381E-01 | -4.680E-03 | -2.258E-03 | 1.459E-03 | -5.860E-04 |
| S8 | 0.000 | 5.48 | -3.936E-02 | -1.964E-01 | 3.747E-02 | -1.333E-02 | 6.763E-03 | -3.967E-03 |
| S9 | 0.000 | 5.45 | -4.912E-02 | -7.505E-02 | 1.531E-02 | -2.107E-04 | 4.590E-03 | -1.435E-03 |
| S10 | 0.185 | 5.33 | -1.460E+00 | -6.008E-03 | 7.684E-03 | 2.472E-02 | -8.066E-03 | 9.636E-04 |
| S11 | 0.441 | 5.20 | -1.661E+00 | 1.700E-01 | 2.883E-02 | -4.449E-03 | -5.222E-03 | 2.034E-03 |
| S12 | 5.030 | 5.00 | -6.839E-01 | 6.438E-02 | 3.038E-02 | -2.674E-02 | 3.823E-04 | -1.451E-03 |
| S13 | 0.000 | 4.97 | 4.502E-01 | -2.530E-02 | 3.076E-02 | -7.827E-03 | 5.637E-03 | -2.519E-03 |

(continued)

| Surface number | K | Norm radius | $A_0$ | $A_1$ | $A_2$ | $A_3$ | $A_4$ | $A_5$ |
|---|---|---|---|---|---|---|---|---|
| S14 | 3.437 | 4.90 | 4.403E-01 | 5.965E-02 | 1.231E-02 | 4.130E-03 | 2.528E-03 | 7.187E-05 |
| S15 | -0.430 | 4.68 | 2.401E+00 | -2.353E-01 | 5.461E-02 | -1.190E-02 | 3.185E-03 | -8.461E-04 |
| S16 | 0.000 | 4.57 | 2.174E+00 | -2.056E-01 | 4.548E-02 | -9.299E-03 | 2.145E-03 | -5.061E-04 |
| S17 | 0.000 | 4.74 | -8.928E-01 | -1.620E-02 | -1.308E-03 | -4.607E-03 | 2.345E-04 | -5.390E-04 |
| S18 | 0.894 | 5.62 | -2.215E+00 | 1.017E-02 | -3.610E-02 | -4.750E-03 | -1.652E-03 | -7.124E-04 |
| S19 | 0.000 | 0.00 | 0.000E+00 | 0.000E+00 | 0.000E+00 | 0.000E+00 | 0.000E+00 | 0.000E+00 |
| S20 | 0.000 | 0.00 | 0.000E+00 | 0.000E+00 | 0.000E+00 | 0.000E+00 | 0.000E+00 | 0.000E+00 |
| S21 | 0.000 | 0.00 | 0.000E+00 | 0.000E+00 | 0.000E+00 | 0.000E+00 | 0.000E+00 | 0.000E+00 |
| S22 | 0.000 | 0.00 | 0.000E+00 | 0.000E+00 | 0.000E+00 | 0.000E+00 | 0.000E+00 | 0.000E+00 |
| S23 | 0.000 | 0.00 | 0.000E+00 | 0.000E+00 | 0.000E+00 | 0.000E+00 | 0.000E+00 | 0.000E+00 |

| Surface number | A6 | A7 | A8 | A9 | A10 | A11 | A12 | A13 |
|---|---|---|---|---|---|---|---|---|
| S0 | 0.000E+00 | 0.000E+00 | 0.000E+00 | 0.000E+00 | 0.000E+00 | 0.000E+00 | 0.000E+00 | 0.000E+00 |
| S1 | -1.970E-06 | 1.179E-05 | 4.493E-06 | 3.869E-06 | 5.798E-06 | 4.247E-06 | -7.443E-06 | 2.170E-06 |
| S2 | 8.866E-05 | -4.000E-05 | 1.414E-05 | -8.429E-06 | 1.411E-05 | -1.135E-05 | -4.860E-08 | 1.555E-06 |
| S3 | 8.444E-06 | -2.930E-07 | 5.193E-07 | 0.000E+00 | 0.000E+00 | 0.000E+00 | 0.000E+00 | 0.000E+00 |
| S4 | -8.897E-06 | -2.751E-06 | 3.900E-06 | 0.000E+00 | 0.000E+00 | 0.000E+00 | 0.000E+00 | 0.000E+00 |
| S5 | 0.000E+00 | 0.000E+00 | 0.000E+00 | 0.000E+00 | 0.000E+00 | 0.000E+00 | 0.000E+00 | 0.000E+00 |
| S6 | 0.000E+00 | 0.000E+00 | 0.000E+00 | 0.000E+00 | 0.000E+00 | 0.000E+00 | 0.000E+00 | 0.000E+00 |
| S7 | -1.527E-06 | -2.365E-04 | 4.220E-06 | -7.349E-05 | 5.546E-06 | -6.992E-06 | 4.608E-06 | 2.252E-06 |
| S8 | 2.229E-03 | -1.454E-03 | 5.007E-04 | -4.245E-04 | 8.688E-05 | -2.408E-04 | 4.661E-05 | 5.069E-05 |
| S9 | 2.257E-03 | -1.192E-03 | 6.398E-04 | -2.723E-04 | 1.240E-04 | -2.804E-04 | 2.863E-05 | 2.583E-05 |
| S10 | 4.845E-04 | -1.604E-05 | 2.471E-04 | 1.205E-04 | 5.007E-05 | -9.599E-05 | 4.110E-05 | -3.944E-06 |
| S11 | 2.108E-04 | -4.693E-04 | -9.613E-05 | 3.992E-04 | -1.203E-04 | -3.306E-05 | 3.201E-05 | -4.551E-06 |
| S12 | 1.380E-03 | -3.438E-05 | -6.911E-04 | 2.995E-04 | -1.768E-04 | -3.053E-05 | 5.584E-05 | 1.781E-07 |
| S13 | 1.359E-03 | 5.375E-04 | -4.011E-04 | 1.809E-04 | -1.090E-04 | -5.870E-05 | 3.893E-05 | 2.998E-06 |
| S14 | 2.821E-04 | 1.231E-04 | 7.480E-05 | 1.327E-05 | 1.153E-06 | -6.743E-07 | 2.046E-06 | -1.846E-07 |
| S15 | 2.566E-04 | -8.341E-05 | 3.577E-05 | -1.892E-05 | 9.142E-06 | -2.446E-06 | 2.034E-06' | 0.000E+00 |
| S16 | 1.056E-04 | -3.985E-05 | 1.906E-05 | -6.653E-06 | 7.125E-06 | 4.477E-06 | 0.000E+00 | 0.000E+00 |
| S17 | -1.620E-06 | -6.123E-05 | 5.066E-06 | -8.576E-06 | 2.995E-06 | 3.364E-07 | 2.350E-06 | 1.743E-06 |
| S18 | -1.250E-04 | -8.217E-05 | -2.097E-05 | -2.098E-05 | -7.376E-06 | -5.862E-06 | -1.962E-06 | -3.701E-07 |
| S19 | 0.000E+00 | 0.000E+00 | 0.000E+00 | 0.000E+00 | 0.000E+00 | 0.000E+00 | 0.000E+00 | 0.000E+00 |
| S20 | 0.000E+00 | 0.000E+00 | 0.000E+00 | 0.000E+00 | 0.000E+00 | 0.000E+00 | 0.000E+00 | 0.000E+00 |
| S21 | 0.000E+00 | 0.000E+00 | 0.000E+00 | 0.000E+00 | 0.000E+00 | 0.000E+00 | 0.000E+00 | 0.000E+00 |
| S22 | 0.000E+00 | 0.000E+00 | 0.000E+00 | 0.000E+00 | 0.000E+00 | 0.000E+00 | 0.000E+00 | 0.000E+00 |
| S23 | 0.000E+00 | 0.000E+00 | 0.000E+00 | 0.000E+00 | 0.000E+00 | 0.000E+00 | 0.000E+00 | 0.000E+00 |

Table 4.4 Aspheric coefficient of each surface of an optical element when the optical lens 10 is in the long-focus state according to the tenth embodiment of this application

| Surface number | K | Norm radius | $A_0$ | $A_1$ | $A_2$ | $A_3$ | $A_4$ | As |
|---|---|---|---|---|---|---|---|---|
| S0 | 0.000 | 0.00 | 0.00E+00 | 0.00E+00 | 0.00E+00 | 0.00E+00 | 0.00E+00 | 0.00E+00 |
| S1 | 2.094 | 6.79 | 1.34E-01 | 4.03E-02 | -4.19E-04 | 1.53E-03 | -2.93E-04 | 2.01E-04 |
| S2 | 0.000 | 6.53 | -2.26E-02 | 7.78E-02 | -2.04E-02 | 1.05E-02 | -5.44E-03 | 3.02E-03 |
| S3 | 0.000 | 7.14 | 5.26E-03 | 5.54E-02 | -1.55E-02 | 5.29E-03 | -7.46E-03 | 2.45E-03 |
| S4 | 0.000 | 7.14 | 1.90E-01 | 1.83E-02 | 5.15E-03 | -4.15E-03 | -3.06E-03 | -1.45E-03 |
| S5 | 0.000 | 0.00 | 0.00E+00 | 0.00E+00 | 0.00E+00 | 0.00E+00 | 0.00E+00 | 0.00E+00 |
| S6 | 0.000 | 0.00 | 0.00E+00 | 0.00E+00 | 0.00E+00 | 0.00E+00 | 0.00E+00 | 0.00E+00 |
| S7 | -0.542 | 5.58 | -4.87E-01 | -1.38E-01 | -4.68E-03 | -2.26E-03 | 1.46E-03 | -5.86E-04 |
| S8 | 0.000 | 5.48 | -3.94E-02 | -1.96E-01 | 3.75E-02 | -1.33E-02 | 6.76E-03 | -3.97E-03 |
| S9 | 0.000 | 5.45 | -4.91E-02 | -7.50E-02 | 1.53E-02 | -2.11E-04 | 4.59E-03 | -1.44E-03 |
| S10 | 0.185 | 5.33 | -1.46E+00 | -6.01E-03 | 7.68E-03 | 2.47E-02 | -8.07E-03 | 9.64E-04 |
| S11 | 0.441 | 5.20 | -1.66E+00 | 1.70E-01 | 2.88E-02 | -4.45E-03 | -5.22E-03 | 2.03E-03 |
| S12 | 5.030 | 5.00 | -6.84E-01 | 6.44E-02 | 3.04E-02 | -2.67E-02 | 3.82E-04 | -1.45E-03 |
| S13 | 0.000 | 4.97 | 4.50E-01 | -2.53E-02 | 3.08E-02 | -7.83E-03 | 5.64E-03 | -2.52E-03 |
| S14 | 3.437 | 4.90 | 4.40E-01 | 5.96E-02 | 1.23E-02 | 4.13E-03 | 2.53E-03 | 7.19E-05 |
| S15 | -0.430 | 4.68 | 2.40E+00 | -2.35E-01 | 5.46E-02 | -1.19E-02 | 3.19E-03 | -8.46E-04 |
| S16 | 0.000 | 4.57 | 2.17E+00 | -2.06E-0 1 | 4.55E-02 | -9.30E-03 | 2.14E-03 | -5.06E-04 |
| S17 | 0.000 | 4.74 | -8.93E-01 | -1.62E-02 | -1.31E-03 | -4.61E-03 | 2.34E-04 | -5.39E-04 |
| S18 | 0.894 | 5.62 | -2.21E+00 | 1.02E-02 | -3.61E-02 | -4.75E-03 | -1.65E-03 | -7.12E-04 |
| S19 | 0.000 | 0.00 | 0.00E+00 | 0.00E+00 | 0.00E+00 | 0.00E+00 | 0.00E+00 | 0.00E+00 |
| S20 | 0.000 | 0.00 | 0.00E+00 | 0.00E+00 | 0.00E+00 | 0.00E+00 | 0.00E+00 | 0.00E+00 |
| S21 | 0.000 | 0.00 | 0.00E+00 | 0.00E+00 | 0.00E+00 | 0.00E+00 | 0.00E+00 | 0.00E+00 |
| S22 | 0.000 | 0.00 | 0.00E+00 | 0.00E+00 | 0.00E+00 | 0.00E+00 | 0.00E+00 | 0.00E+00 |
| S23 | 0.000 | 0.00 | 0.00E+00 | 0.00E+00 | 0.00E+00 | 0.00E+00 | 0.00E+00 | 0.00E+00 |

| Surface number | $A_6$ | $A_7$ | $A_8$ | $A_9$ | $A_{10}$ | $A_{11}$ | $A_{12}$ | A13 |
|---|---|---|---|---|---|---|---|---|
| S0 | 0.00E+00 | 0.00E+00 | 0.00E+00 | 0.00E+00 | 0.00E+00 | 0.00E+00 | 0.00E+00 | 0.00E+00 |
| S1 | -1.16E-04 | 1.07E-04 | 4.73E-05 | 0.00E+00 | 0.00E+00 | 0.00E+00 | 0.00E+00 | 0.00E+00 |
| S2 | -1.97E-03 | 6.59E-04 | -4.88E-05 | -1.07E-06 | 0.00E+00 | 0.00E+00 | 0.00E+00 | 0.00E+00 |
| S3 | -2.19E-03 | 1.37E-03 | -4.39E-04 | 0.00E+00 | 0.00E+00 | 0.00E+00 | 0.00E+00 | 0.00E+00 |
| S4 | -1.09E-03 | -2.06E-04 | -1.18E-04 | 0.00E+00 | 0.00E+00 | 0.00E+00 | 0.00E+00 | 0.00E+00 |
| S5 | 0.00E+00 | 0.00E+00 | 0.00E+00 | 0.00E+00 | 0.00E+00 | 0.00E+00 | 0.00E+00 | 0.00E+00 |
| S6 | 0.00E+00 | 0.00E+00 | 0.00E+00 | 0.00E+00 | 0.00E+00 | 0.00E+00 | 0.00E+00 | 0.00E+00 |
| S7 | -1.53E-06 | -2.37E-04 | 4.22E-06 | -7.35E-05 | 5.55E-06 | -6.99E-06 | 4.61E-06 | 2.25E-06 |
| S8 | 2.23E-03 | -1.45E-03 | 5.01E-04 | -4.24E-04 | 8.69E-05 | -2.41E-04 | 4.66E-05 | 5.07E-05 |
| S9 | 2.26E-03 | -1.19E-03 | 6.40E-04 | -2.72E-04 | 1.24E-04 | -2.80E-04 | 2.86E-05 | 2.58E-05 |
| S10 | 4.85E-04 | -1.60E-05 | 2.47E-04 | 1.21E-04 | 5.01E-05 | -9.60E-05 | 4.11E-05 | -3.94E-06 |

(continued)

| Surface number | A₆ | A₇ | A₈ | A₉ | A₁₀ | A₁₁ | A₁₂ | A13 |
|---|---|---|---|---|---|---|---|---|
| S11 | 2.11E-04 | -4.69E-04 | -9.61E-05 | 3.99E-04 | -1.20E-04 | -3.31E-05 | 3.20E-05 | -4.55E-06 |
| S12 | 1.38E-03 | -3.44E-05 | -6.91E-04 | 3.00E-04 | -1.77E-04 | -3.05E-05 | 5.58E-05 | 1.78E-07 |
| S13 | 1.36E-03 | 5.38E-04 | -4.01E-04 | 1.81E-04 | -1.09E-04 | -5.87E-05 | 3.89E-05 | 3.00E-06 |
| S14 | 2.82E-04 | 1.23E-04 | 7.48E-05 | 1.33E-05 | 1.15E-06 | -6.74E-07 | 2.05E-06 | -1.85E-07 |
| S15 | 2.57E-04 | -8.34E-05 | 3.58E-05 | -1.89E-05 | 9.14E-06 | -2.45E-06 | 2.03E-06 | 0.00E+00 |
| S16 | 1.06E-04 | -3.99E-05 | 1.91E-05 | -6.65E-06 | 7.12E-06 | 4.48E-06 | 0.00E+00 | 0.00E+00 |
| S17 | -1.62E-06 | -6.12E-05 | 5.07E-06 | -8.58E-06 | 2.99E-06 | 3.36E-07 | 2.35E-06 | 1.74E-06 |
| S18 | -1.25E-04 | -8.22E-05 | -2.10E-05 | -2.10E-05 | -7.38E-06 | -5.86E-06 | -1.96E-06 | -3.70E-07 |
| S19 | 0.00E+00 | 0.00E+00 | 0.00E+00 | 0.00E+00 | 0.00E+00 | 0.00E+00 | 0.00E+00 | 0.00E+00 |
| S20 | 0.00E+00 | 0.00E+00 | 0.00E+00 | 0.00E+00 | 0.00E+00 | 0.00E+00 | 0.00E+00 | 0.00E+00 |
| S21 | 0.00E+00 | 0.00E+00 | 0.00E+00 | 0.00E+00 | 0.00E+00 | 0.00E+00 | 0.00E+00 | 0.00E+00 |
| S22 | 0.00E+00 | 0.00E+00 | 0.00E+00 | 0.00E+00 | 0.00E+00 | 0.00E+00 | 0.00E+00 | 0.00E+00 |
| S23 | 0.00E+00 | 0.00E+00 | 0.00E+00 | 0.00E+00 | 0.00E+00 | 0.00E+00 | 0.00E+00 | 0.00E+00 |

Table 4.5 shows a basic parameter of an optical path when the optical lens 10 is in the short-focus state according to the tenth embodiment of this application; Table 4.6 shows a basic parameter of an optical path when the optical lens 10 is in the long-focus state according to the tenth embodiment of this application; and Table 4.7 shows a related parameter and a value of $\xi$ of the optical lens 10 according to the tenth embodiment of this application.

Table 4.5 Basic parameter of the optical path when the optical lens 10 is in the short-focus state according to the tenth embodiment of this application

| Parameter | ImgH | $F_1$ | F/# | $f_{L011}$ | $f_{L012}$ | $f_{L11}$ | $f_{L121}$ | $f_{L122}$ | $f_{L3}$ | $f_{L21}$ | $f_{L22}$ |
|---|---|---|---|---|---|---|---|---|---|---|---|
| Value | 8.166 | 31.361 | 2.17 | 43.608 | -254.310 | 47.854 | -27.790 | 60.659 | 20.910 | -52.622 | -31.260 |
| Unit | mm | mm | mm | mm | mm | mm | mm | mm | mm | mm | mm |

Table 4.6 Basic parameter of the optical path when the optical lens 10 is in the long-focus state according to the tenth embodiment of this application

| Parameter | ImgH | $F_2$ | F/# | $f_{L021}$ | $f_{L022}$ | $f_{L11}$ | $f_{L121}$ | $f_{L122}$ | $f_{L13}$ | $f_{L21}$ | $f_{L22}$ |
|---|---|---|---|---|---|---|---|---|---|---|---|
| Value | 4.094 | 49.002 | 3.76 | 55.995 | -384.832 | 47.854 | -27.790 | 60.659 | 20.910 | -52.622 | -31.260 |
| Unit | mm | mm | mm | mm | mm | mm | mm | mm | mm | mm | mm |

Table 4.7 Related parameter and value of $\xi$ of the optical lens 10 according to the tenth embodiment of this application, where an object distance is INFINITY (infinity)

| Short-focus state | $f_{g01}$ | $f_{g1}$ | $f_{g011}$ | $F_1$ | $f_{g2}$ | $\beta_1$ | $\alpha_1$ | $\xi_1$ | L | k |
|---|---|---|---|---|---|---|---|---|---|---|
| | 52.271 | 22.113 | 19.361 | 31.361 | -18.097 | 0.37 | 1.620 | 2.264 | 22.834 | |
| Unit | mm | mm | mm | mm | mm | / | / | / | | |
| Long-focus state | $f_{g02}$ | $f_{g1}$ | $f_{g021}$ | $F_2$ | $f_{g2}$ | $\beta_2$ | $\alpha_2$ | $\xi_2$ | | 0.454 |
| | 65.066 | 22.113 | 30.215 | 49.002 | -18.097 | 0.464 | 1.622 | 2.064 | | |
| Unit | mm | mm | mm | mm | mm | / | / | / | mm | / |

In Table 4.5 to Table 4.7, $F_1$ is a first effective focal length of the optical lens 10, and $F_2$ is a second effective focal length of the optical lens 10; $f_{L011}$ is a focal length of the positive lens L011, $f_{L012}$ is a focal length of the negative lens L012, $f_{L021}$ is a focal length of the positive lens L021, $f_{L022}$ is a focal length of the negative lens L022, $f_{L11}$ is a focal length of the first lens L11, $f_{L12}$ is a focal length of the second lens L12, $f_{L13}$ is a focal length of the third lens L13, $f_{L21}$ is a focal length of the fourth lens L21, $f_{L221}$ is a focal length of the positive lens L221, and $f_{L222}$ is a focal length of the negative lens L222; $f_{g01}$ is an effective focal length of the first front lens group G01, $f_{g02}$ is an effective focal length of the second front lens group G02, $f_{g1}$ is an effective focal length of the first rear lens group G1, and $f_{g2}$ is an effective focal length of the second rear lens group G2; $f_{g011}$ is a combined focal length of the first front lens group G01 and the first rear lens group G1, and $f_{g021}$ is a combined focal length of the second front lens group G02 and the first rear lens group G1; $\beta_1$ is a first focal length allocation ratio, and $\beta_1=f_{g011}/f_{g01}$; $\beta_2$ is a second focal length allocation ratio, and $\beta_2=f_{g021}/f_{g02}$; $\alpha_1$ is a third focal length allocation ratio, and $\alpha_1=F_1/f_{g011}$; $\alpha_2$ is a fourth focal length allocation ratio, and $\alpha_2=F_2/f_{g021}$; $\xi_1$ is a stroke compression ratio coefficient of the first rear lens group G1 when the optical lens 10 is in the short-focus state, and $\xi_2$ is a stroke compression ratio coefficient of the first rear lens group G1 when the optical lens 10 is in the long-focus state; L is a moving stroke of the first turning element 1 between the first position and the second position; and coefficient $k=[(\beta_1-1)^2/\beta_1]-[(\beta_2-1)^2/\beta_2]$.

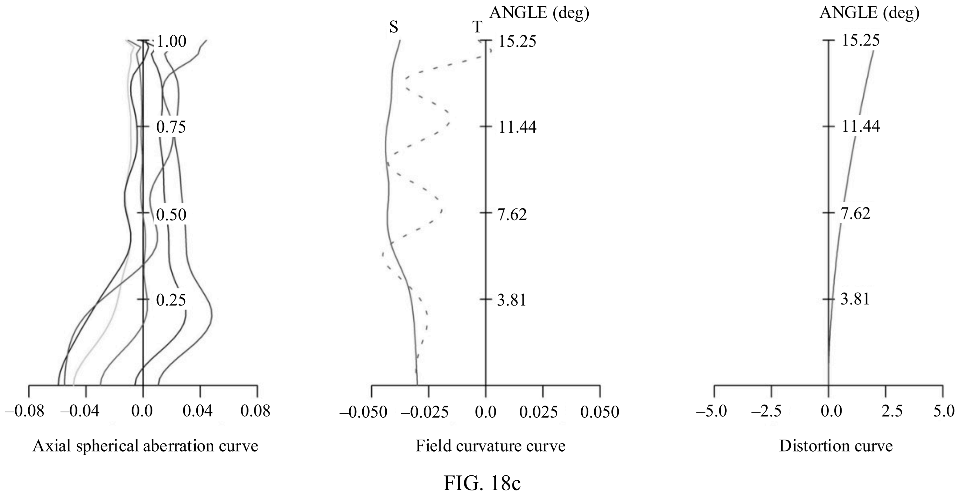

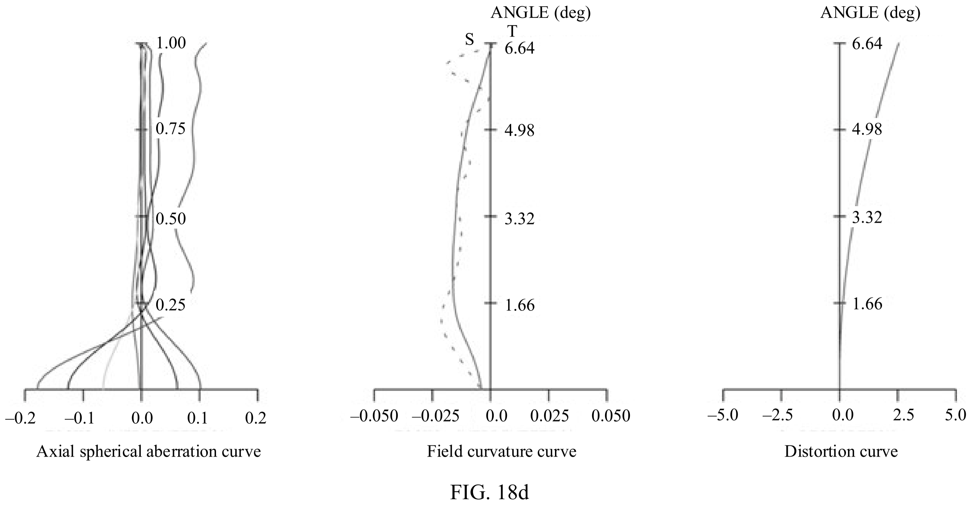

FIG. 18c shows an axial spherical aberration curve, a field curvature curve, and a distortion curve of the optical lens 10 in the short-focus state according to the tenth embodiment of this application, and FIG. 18d shows an axial spherical aberration curve, a field curvature curve, and a distortion curve of the optical lens 10 in the long-focus state according to the tenth embodiment of this application. FIG. 18c and FIG. 18d show axial spherical aberration curves, field curvature curves, and distortion curves corresponding to different system bands (including 650 nm, 610 nm, 555 nm, 510 nm, 470 nm, and 435 nm in the figures).

The axial spherical aberration curve in the figure shows a deviation of light of a corresponding wavelength emitted at a 0-degree field of view relative to an ideal image point after the light passes through the optical system, a horizontal coordinate is a deviation value in an optical axis direction, and a vertical coordinate is a normalized coordinate at a pupil. Deviation values in FIG. 18c and FIG. 18d both are relatively small, and correction of an axial spherical aberration of the optical lens is relatively good.

The field curvature curve in the figure shows a deviation of a convergence point of fine light beams in different fields of view from an ideal imaging plane, x is a light beam in a sagittal direction, y is a light beam in a meridian direction, a horizontal coordinate is a deviation value in an optical axis direction, and a vertical coordinate is a corresponding field of view. When a value of a field of view is excessively large, image quality of the field of view is relatively poor or a high-order aberration exists. As shown in FIG. 18c and FIG. 18d, field curvatures in the two directions are relatively small, and the system has a relatively good depth of focus.

The distortion curve in the figure indicates a relative offset between a convergence point (actual image height) of light beams in different fields of view and an ideal image height. The deviations shown in FIG. 18c and FIG. 18d are relatively small, so that it can be ensured that there is no obvious picture deformation.

Therefore, the optical lens 10 in the tenth embodiment of this application implements relatively low light aberration control by using a proper surface type, a proper gap design, and the like, to obtain clear image quality.

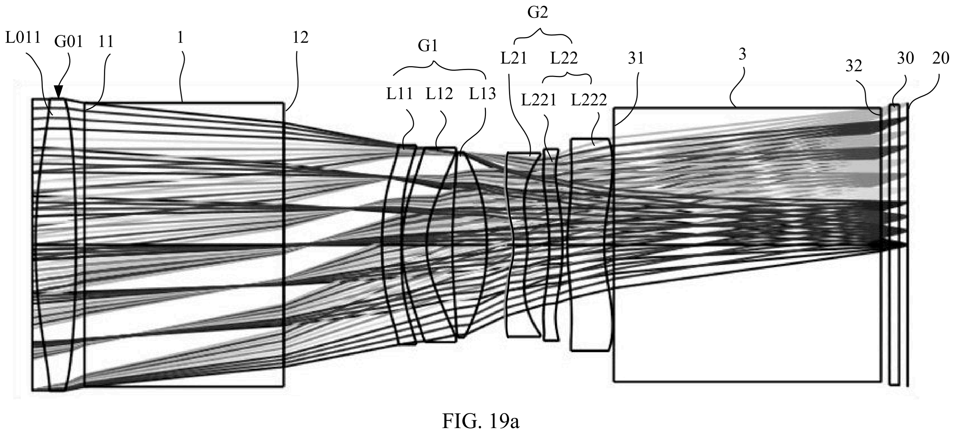

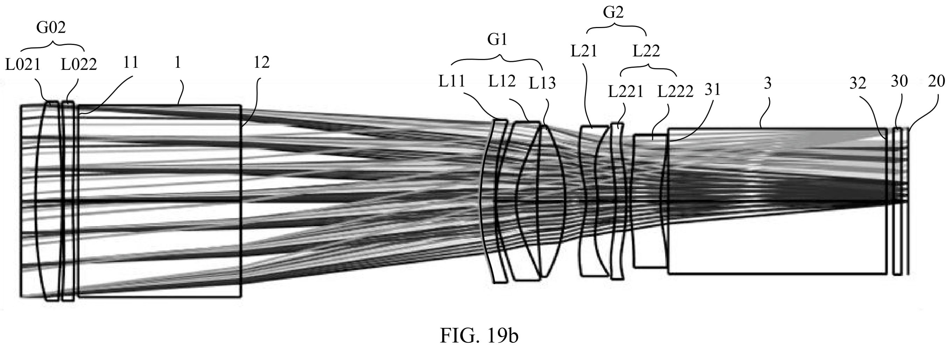

FIG. 19a is a diagram of a structure of an optical lens 10 in a short-focus state according to an eleventh embodiment of this application, and FIG. 19b is a diagram of a structure of the optical lens 10 in a long-focus state according to the eleventh embodiment of this application. Optical paths of the first turning element 1 and the second turning element 3 in FIG. 19a and FIG. 19b both are unfolded, and are replaced with parallel plates. A main difference between the optical lens 10 shown in FIG. 19a and FIG. 19b and the optical lens 10 shown in FIG. 15a and FIG. 15b lies in that each lens in the second rear lens group G2 has different focal power configurations. Details are as follows:

As shown in FIG. 19a and FIG. 19b, the fifth lens L22 includes two negative lenses that are spaced apart, namely, a negative lens L221 and a negative lens L222. This is equivalent to splitting the fifth lens L22 into the negative lens L221 and the negative lens L222, so that a quantity of lens surfaces in the second rear lens group G2 is increased, and a degree of freedom of design of the second rear lens group G2 is increased. This is conducive to aberration correction of the optical lens.

The following specifically describes the optical lens 10 shown in FIG. 19a and FIG. 19b with reference to a specific parameter and a simulation result.

Table 5.1 shows a main parameter of the optical lens 10 in the short-focus state according to the eleventh embodiment of this application; Table 5.2 shows a main parameter of the optical lens 10 in the long-focus state according to the eleventh embodiment of this application; Table 5.3 shows an aspheric coefficient of each surface of an optical element when the optical lens 10 is in the short-focus state according to the eleventh embodiment of this application; and Table 5.4 shows an aspheric coefficient of each surface of an optical element when the optical lens 10 is in the long-focus state according to the eleventh embodiment of this application.

Table 5.1 Main parameter of the optical lens 10 in the short-focus state according to the eleventh embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STANDARD | | INF | INF | | | | 0.00 |
| S1 | STANDARD | STO | INF | 0.129 | | | | 6.00 |
| S2 | STANDARD | L01 | 23.123 | 1.663 | Glass | 1.553 | 71.685 | 5.99 |
| S3 | QED_TYPE | | -63.699 | 0.355 | | | | 5.98 |
| S4 | QED_TYPE | PRISM1 | INF | 8.200 | Glass | 1.911 | 35.280 | 5.81 |
| S5 | STANDARD | | INF | 0.000 | | | | 5.00 |
| S6 | STANDARD | | INF | 4.040 | | | | 5.00 |
| S7 | STANDARD | L11 | 13.171 | 0.800 | Resin | 1.567 | 37.700 | 4.09 |
| S8 | QED_TYPE | | 42.720 | 0.030 | | | | 4.00 |
| S9 | QED_TYPE | L12 | 6.075 | 1.006 | Resin | 1.671 | 19.243 | 3.98 |
| S10 | QED_TYPE | | 3.955 | 1.065 | | | | 3.79 |
| S11 | QED_TYPE | L13 | 23.491 | 1.422 | Resin | 1.544 | 55.976 | 3.79 |
| S12 | QED_TYPE | | -8.673 | 1.083 | | | | 3.75 |
| S13 | QED_TYPE | L21 | -3.146 | 0.587 | Resin | 1.567 | 37.700 | 3.76 |
| S14 | QED_TYPE | | -4.198 | 0.902 | | | | 3.69 |
| S15 | QED_TYPE | L221 | -7.388 | 0.540 | Resin | 1.639 | 23.515 | 3.75 |
| S16 | QED_TYPE | | -8.123 | 0.199 | | | | 3.92 |
| S17 | QED_TYPE | L222 | 10.858 | 1.517 | Resin | 1.544 | 55.976 | 3.92 |
| S18 | QED_TYPE | | 6.820 | 0.392 | | | | 4.34 |
| S19 | QED_TYPE | PRISM2 | INF | 11.000 | Glass | 1.911 | 35.280 | 4.39 |
| S20 | STANDARD | | INF | 0.349 | | | | 5.61 |

EP 4 726 456 A1

(continued)

| Surface number | Surface type | Optical element | Curvature radius | Thickness (INF) | Material | Refractive index | Abbe number | Light transmission radius |
|---|---|---|---|---|---|---|---|---|
| S21 | STANDARD | IRCF | INF | 0.400 | Glass | 1.538 | 60.969 | 5.69 |
| S22 | STANDARD | | INF | 0.347 | | | | 5.74 |
| S23 | STANDARD | IMA | INF | 0.000 | | | | 5.82 |

In the table, parameter values of the curvature radius, the thickness, and the light transmission radius all are in a unit of mm.

STO represents a stop (STOP), limits a size of a light-passing aperture into which a light beam enters, and affects an amount of light entering the optical system. The STO is located in an object direction of the positive lens L01. S2 represents an object side surface of the positive lens L011, and S3 represents an image side surface of the positive lens L011. PRISM1 represents the first turning element 1, and the first turning element 1 is a prism and has a light refraction function. S4 represents a first light incident surface 11 of the first turning element 1, and S6 represents a first light emergent surface 12 of the first turning element 1. S7 represents an object side surface of the first lens L11, and S8 represents an image side surface of the first lens L11. S9 represents an object side surface of the second lens L12, and S10 represents an image side surface of the second lens L12. S11 represents an object side surface of the third lens L13, and S12 represents an image side surface of the third lens L13. S13 represents an object side surface of the fourth lens L21, and S14 represents an image side surface of the fourth lens L21. S15 represents an object side surface of the negative lens L221, and S16 represents an image side surface of the negative lens L221. S17 represents an object side surface of the negative lens L222, and S18 represents an image side surface of the negative lens L222. PRISM2 represents the second turning element 3, and the second turning element 3 is a prism and has a light refraction function. S19 represents a prism incident surface 31 of the second turning element 3, and S20 represents a prism emergent surface 32 of the second turning element 3. IRCF represents a light filter, and the light filter is an infrared light filter. S21 is an object side surface of the light filter, and S22 is an image side surface of the light filter. IMA represents an image plane IMAGE, and the image plane IMAGE may be a photosensitive surface of a photosensitive element.

Table 5.2 Main parameter of the optical lens 10 in the long-focus state according to the eleventh embodiment of this application

| Surface number | Surface type | Optical element | Curvature radius | Thickness (INF) | Material | Refractive index | Abbe number | Light transmission radius |
|---|---|---|---|---|---|---|---|---|
| S0 | STANDARD | | INF | INF | | | | INF |
| S1 | STANDARD | STO | INF | 0.728 | | | | 4.80 |
| S2 | QED_TYPE | L01 | 31.255 | 1.347 | Glass | 1.553 | 71.685 | 5.00 |
| S3 | QED_TYPE | | -38.603 | 0.060 | | | | 5.00 |
| S4 | QED_TYPE | L02 | 67.382 | 0.483 | Glass | 1.851 | 40.104 | 5.00 |
| S5 | QED_TYPE | | 44.429 | 0.264 | | | | 5.00 |
| S6 | STANDARD | PRISM1 | INF | 8.200 | Glass | 1.911 | 35.280 | 4.81 |
| S7 | STANDARD | | INF | 12.032 | | | | 4.59 |

51

(continued)

| Surface number | Surface type | Optical element | Curvature radius | Thickness (INF) | Material | Refractive index | Abbe number | Light transmission radius |
|---|---|---|---|---|---|---|---|---|
| S8 | STANDARD | L11 | 13.171 | 0.800 | Resin | 1.567 | 37.700 | 4.09 |
| S9 | QED_TYPE | | 42.720 | 0.030 | | | | 4.00 |
| S10 | QED_TYPE | L12 | 6.075 | 1.006 | Resin | 1.671 | 19.243 | 3.98 |
| S11 | QED_TYPE | | 3.955 | 1.065 | | | | 3.79 |
| S12 | QED_TYPE | L13 | 23.491 | 1.422 | Resin | 1.544 | 55.976 | 3.79 |
| S13 | QED_TYPE | | -8.673 | 1.061 | | | | 3.75 |
| S14 | QED_TYPE | L21 | -3.146 | 0.587 | Resin | 1.567 | 37.700 | 3.76 |
| S15 | QED_TYPE | | -4.198 | 0.902 | | | | 3.69 |
| S16 | QED_TYPE | L221 | -7.388 | 0.540 | Resin | 1.639 | 23.515 | 3.75 |
| S17 | QED_TYPE | | -8.123 | 0.199 | | | | 3.92 |
| S18 | QED_TYPE | L222 | 10.858 | 1.517 | Resin | 1.544 | 55.976 | 3.27 |
| S19 | QED_TYPE | | 6.820 | 0.392 | | | | 3.33 |
| S20 | QED_TYPE | PRISM2 | INF | 11.000 | Glass | 1.911 | 35.280 | 3.34 |
| S21 | STANDARD | | INF | 0.349 | | | | 3.65 |
| S22 | STANDARD | IRCF | INF | 0.400 | Glass | 1.538 | 60.969 | 3.67 |
| S23 | STANDARD | | INF | 0.347 | | | | 3.68 |
| S24 | STANDARD | IMA | INF | 0.000 | | | | 3.70 |

In the table, parameter values of the curvature radius, the thickness, and the light transmission radius all are in a unit of mm.

STO represents a stop (STOP), limits a size of a light-passing aperture into which a light beam enters, and affects an amount of light entering the optical system. The STO is located in an object direction of the positive lens L01. S2 represents an object side surface of the positive lens L021, and S3 represents an image side surface of the positive lens L021. S4 represents an object side surface of the negative lens L022, and S5 represents an image side surface of the negative lens L022. PRISM1 represents the first turning element 1, and the first turning element 1 is a prism and has a light refraction function. S6 represents a first light incident surface 11 of the first turning element 1, and S7 represents a first light emergent surface 12 of the first turning element 1. S8 represents an object side surface of the first lens L11, and S9 represents an image side surface of the first lens L11. S10 represents an object side surface of the second lens L12, and S11 represents an image side surface of the second lens L12. S12 represents an object side surface of the third lens L13, and S13 represents an image side surface of the third lens L13. S14 represents an object side surface of the fourth lens L21, and S15 represents an image side surface of the fourth lens L21. S16 represents an object side surface of the negative lens L221, and S17 represents an image side surface of the negative lens L221. S18 represents an object side surface of the negative lens L222, and S19 represents an image side surface of the negative lens L222. PRISM2 represents the second turning element 3, and the second turning element 3 is a prism and has a light refraction function. S20 represents a prism incident surface 31 of the second turning element 3, and S21 represents a prism emergent surface 32 of the second turning element 3. IRCF represents a light filter, and the light filter is an infrared light filter. S22 is an object side surface of the light filter, and S23 is an image side surface of the light filter. IMA represents an image plane IMAGE, and the image plane IMAGE may be a photosensitive surface of a photosensitive element.

Table 5.3 Aspheric coefficient of each surface of the optical element when the optical lens 10 is in the short-focus state according to the eleventh embodiment of this application

| Surface number | K | Norm radius | $A_0$ | $A_1$ | $A_2$ | $A_3$ | $A_4$ | $A_5$ |
|---|---|---|---|---|---|---|---|---|
| S0 | 0.000 | 0.00 | 0.000E+00 | 0.000E+00 | 0.000E+00 | 0.000E+00 | 0.000E+00 | 0.000E+00 |
| S1 | 0.000 | 0.00 | 0.000E+00 | 0.000E+00 | 0.000E+00 | 0.000E+00 | 0.000E+00 | 0.000E+00 |
| S2 | 0.000 | 5.99 | -1.645E-01 | -3.294E-02 | -8.926E-03 | -2.177E-03 | -6.047E-04 | -1.543E-04 |
| S3 | 0.000 | 5.98 | -1.389E-01 | -3.117E-02 | -7.950E-03 | -1.782E-03 | -4.431E-04 | -1.143E-04 |
| S4 | 0.000 | 0.00 | 0.000E+00 | 0.000E+00 | 0.000E+00 | 0.000E+00 | 0.000E+00 | 0.000E+00 |
| S5 | 0.000 | 0.00 | 0.000E+00 | 0.000E+00 | 0.000E+00 | 0.000E+00 | 0.000E+00 | 0.000E+00 |
| S6 | 0.000 | 0.00 | 0.000E+00 | 0.000E+00 | 0.000E+00 | 0.000E+00 | 0.000E+00 | 0.000E+00 |
| S7 | 0.000 | 4.09 | 1.175E-01 | -7.279E-02 | -1.102E-02 | 1.781E-03 | 9.135E-04 | 9.493E-05 |
| S8 | 0.000 | 4.00 | 5.015E-01 | -8.880E-02 | 6.003E-03 | 2.390E-03 | 1.232E-03 | 5.732E-04 |
| S9 | 0.000 | 3.98 | -5.481E-01 | 5.082E-04 | 1.086E-02 | 5.638E-04 | -7.080E-04 | 8.304E-04 |
| S10 | 0.000 | 3.79 | -1.424E+00 | -1.065E-0 | -4.102E-02 | -1.454E-02 | -7.623E-03 | -3.047E-03 |
| S11 | 0.000 | 3.79 | -1.169E-01 | 9.725E-03 | 1.037E-02 | 2.995E-03 | 1.742E-03 | -7.535E-04 |
| S12 | 0.000 | 3.75 | -7.029E-02 | 4.631E-03 | 3.351E-03 | 4.222E-04 | 2.198E-03 | -7.169E-04 |
| S13 | -1.000 | 3.76 | 2.313E+00 | -3.698E-01 | 8.582E-02 | -2.565E-02 | 8.527E-03 | -3.992E-03 |
| S14 | 0.000 | 3.69 | 2.954E+00 | -2.908E-01 | 9.254E-02 | -2.387E-02 | 7.486E-03 | -3.530E-03 |
| S15 | 0.000 | 3.75 | 8.790E-01 | -7.458E-02 | 1.600E-02 | -2.895E-02 | 7.827E-03 | -4.503E-03 |
| S16 | 0.000 | 3.92 | 8.611E-01 | 5.414E-03 | 4.520E-03 | -2.598E-02 | 1.241E-02 | -3.951E-03 |
| S17 | 0.000 | 4.25 | -8.171E-01 | 8.725E-02 | -5.216E-04 | -6.505E-03 | 4.863E-03 | -3.806E-03 |
| S18 | 0.000 | 4.83 | -2.133E+00 | 5.708E-02 | -3.679E-02 | -4.211E-04 | -1.461E-03 | -8.275E-04 |
| S19 | 0.000 | 0.00 | 0.000E+00 | 0.000E+00 | 0.000E+00 | 0.000E+00 | 0.000E+00 | 0.000E+00 |
| S20 | 0.000 | 0.00 | 0.000E+00 | 0.000E+00 | 0.000E+00 | 0.000E+00 | 0.000E+00 | 0.000E+00 |
| S21 | 0.000 | 0.00 | 0.000E+00 | 0.000E+00 | 0.000E+00 | 0.000E+00 | 0.000E+00 | 0.000E+00 |
| S22 | 0.000 | 0.00 | 0.000E+00 | 0.000E+00 | 0.000E+00 | 0.000E+00 | 0.000E+00 | 0.000E+00 |
| S23 | 0.000 | 0.00 | 0.000E+00 | 0.000E+00 | 0.000E+00 | 0.000E+00 | 0.000E+00 | 0.000E+00 |

| Surface number | $A_6$ | $A_7$ | $A_8$ | $A_9$ | $A_{10}$ | $A_{11}$ | $A_{12}$ | $A_{13}$ |
|---|---|---|---|---|---|---|---|---|
| S0 | 0.000E+00 | 0.000E+00 | 0.000E+00 | 0.000E+00 | 0.000E+00 | 0.000E+00 | 0.000E+00 | 0.000E+00 |
| S1 | 0.000E+00 | 0.000E+00 | 0.000E+00 | 0.000E+00 | 0.000E+00 | 0.000E+00 | 0.000E+00 | 0.000E+00 |
| S2 | -4.524E-05 | -1.265E-05 | -3.736E-06 | 2.721E-06 | -3.378E-06 | 0.000E+00 | 0.000E+00 | 0.000E+00 |
| S3 | -1.912E-05 | -1.131E-05 | 3.315E-06 | -1.225E-06 | -1.120E-06 | -2.687E-07 | 0.000E+00 | 0.000E+00 |
| S4 | 0.000E+00 | 0.000E+00 | 0.000E+00 | 0.000E+00 | 0.000E+00 | 0.000E+00 | 0.000E+00 | 0.000E+00 |
| S5 | 0.000E+00 | 0.000E+00 | 0.000E+00 | 0.000E+00 | 0.000E+00 | 0.000E+00 | 0.000E+00 | 0.000E+00 |
| S6 | 0.000E+00 | 0.000E+00 | 0.000E+00 | 0.000E+00 | 0.000E+00 | 0.000E+00 | 0.000E+00 | 0.000E+00 |
| S7 | -3.520E-04 | -2.460E-05 | 9.004E-05 | 4.472E-06 | 7.403E-06 | 1.311E-05 | -1.326E-05 | -6.059E-06 |
| S8 | -1.535E-03 | 3.171E-04 | 1.129E-04 | -6.052E-05 | 6.329E-05 | 3.506E-05 | -2.772E-05 | -6.686E-06 |
| S9 | -1.119E-03 | 3.175E-04 | 3.784E-05 | -1.230E-04 | 5.793E-05 | 3.354E-05 | -1.571E-05 | -1.771E-06 |
| S10 | -1.536E-03 | -3.872E-04 | -2.177E-04 | -2.712E-04 | -7.966E-05 | -3.296E-05 | -1.959E-05 | -6.037E-06 |
| S11 | -3.604E-05 | 4.572E-04 | 2.526E-04 | -6.125E-05 | -5.676E-05 | -1.409E-05 | -2.424E-06 | -6.731E-07 |
| S12 | 3.344E-05 | 1.618E-04 | 1.008E-04 | 3.010E-06 | 0.000E+00 | 0.000E+00 | 0.000E+00 | 0.000E+00 |
| S13 | 1.569E-03 | -2.706E-04 | -1.746E-05 | -5.820E-05 | 1.960E-05 | -1.085E-05 | -4.029E-06 | -2.684E-06 |
| S14 | 8.834E-04 | 7.313E-05 | -4.949E-05 | -5.362E-05 | -2.739E-07 | 0.000E+00 | 0.000E+00 | 0.000E+00 |
| S15 | -7.072E-04 | -4.211E-05 | 2.266E-04 | 4.809E-05 | 6.565E-05 | 7.354E-06 | 1.028E-05 | -7.880E-06 |
| S16 | 4.759E-04 | 8.719E-04 | 5.386E-04 | 1.185E-04 | -9.320E-05 | -8.504E-05 | -4.501E-05 | -2.970E-05 |
| S17 | 9.716E-04 | 2.308E-04 | 3.210E-04 | 1.825E-04 | -4.934E-05 | -2.159E-05 | -3.581E-05 | -1.582E-05 |
| S18 | -5.855E-05 | 2.174E-04 | 6.979E-05 | 1.093E-04 | -3.421E-05 | 2.414E-06 | -1.944E-05 | -7.683E-08 |
| S19 | 0.000E+00 | 0.000E+00 | 0.000E+00 | 0.000E+00 | 0.000E+00 | 0.000E+00 | 0.000E+00 | 0.000E+00 |
| S20 | 0.000E+00 | 0.000E+00 | 0.000E+00 | 0.000E+00 | 0.000E+00 | 0.000E+00 | 0.000E+00 | 0.000E+00 |
| S21 | 0.000E+00 | 0.000E+00 | 0.000E+00 | 0.000E+00 | 0.000E+00 | 0.000E+00 | 0.000E+00 | 0.000E+00 |
| S22 | 0.000E+00 | 0.000E+00 | 0.000E+00 | 0.000E+00 | 0.000E+00 | 0.000E+00 | 0.000E+00 | 0.000E+00 |
| S23 | 0.000E+00 | 0.000E+00 | 0.000E+00 | 0.000E+00 | 0.000E+00 | 0.000E+00 | 0.000E+00 | 0.000E+00 |

Table 5.4 Aspheric coefficient of each surface of the optical element when the optical lens 10 is in the long-focus state according to the eleventh embodiment of this application

| Surface number | K | Norm radius | $A_0$ | $A_1$ | $A_2$ | $A_3$ | $A_4$ | $A_5$ |
|---|---|---|---|---|---|---|---|---|
| S0 | 0.000 | 0.00 | 0.000E+00 | 0.000E+00 | 0.000E+00 | 0.000E+00 | 0.000E+00 | 0.000E+00 |
| S1 | 0.000 | 0.00 | 0.000E+00 | 0.000E+00 | 0.000E+00 | 0.000E+00 | 0.000E+00 | 0.000E+00 |
| S2 | 0.000 | 5.00 | 1.336E-01 | 4.130E-03 | 2.692E-03 | -5.268E-04 | 2.824E-05 | -2.082E-04 |
| S3 | 0.000 | 5.00 | 1.418E-01 | -5.710E-03 | 6.014E-03 | -5.967E-03 | -5.629E-04 | 8.209E-04 |
| S4 | 0.000 | 5.00 | -2.847E-01 | 2.621E-02 | -1.194E-03 | -3.619E-03 | -1.063E-03 | 1.798E-03 |
| S5 | 0.000 | 5.00 | -2.882E-01 | 3.398E-02 | -3.467E-03 | 3.309E-05 | -7.289E-04 | 1.105E-03 |
| S6 | 0.000 | 0.00 | 0.000E+00 | 0.000E+00 | 0.000E+00 | 0.000E+00 | 0.000E+00 | 0.000E+00 |
| S7 | 0.000 | 0.00 | 0.000E+00 | 0.000E+00 | 0.000E+00 | 0.000E+00 | 0.000E+00 | 0.000E+00 |
| S8 | 0.000 | 4.09 | 1.175E-01 | -7.279E-02 | -1.102E-02 | 1.781E-03 | 9.135E-04 | 9.493E-05 |
| S9 | 0.000 | 4.00 | 5.015E-01 | -8.880E-02 | 6.003E-03 | 2.390E-03 | 1.232E-03 | 5.732E-04 |
| S10 | 0.000 | 3.98 | -5.481E-01 | 5.082E-04 | 1.086E-02 | 5.638E-04 | -7.080E-04 | 8.304E-04 |
| S11 | 0.000 | 3.79 | -1.424E+00 | -1.065E-01 | -4.102E-02 | -1.454E-02 | -7.623E-03 | -3.047E-03 |
| S12 | 0.000 | 3.79 | -1.169E-01 | 9.725E-03 | 1.037E-02 | 2.995E-03 | 1.742E-03 | -7.535E-04 |
| S13 | 0.000 | 3.75 | -7.029E-02 | 4.631E-03 | 3.351E-03 | 4.222E-04 | 2.198E-03 | -7.169E-04 |
| S14 | -1.000 | 3.76 | 2.313E+00 | -3.698E-01 | 8.582E-02 | -2.565E-02 | 8.527E-03 | -3.992E-03 |
| S15 | 0.000 | 3.69 | 2.954E+00 | -2.908E-01 | 9.254E-02 | -2.387E-02 | 7.486E-03 | -3.530E-03 |
| S16 | 0.000 | 3.75 | 8.790E-01 | -7.458E-02 | 1.600E-02 | -2.895E-02 | 7.827E-03 | -4.503E-03 |
| S17 | 0.000 | 3.92 | 8.611E-01 | 5.414E-03 | 4.520E-03 | -2.598E-02 | 1.241E-02 | -3.951E-03 |
| S18 | 0.000 | 3.26 | -3.486E-01 | 1.480E-02 | 7.211E-03 | -4.737E-03 | 1.544E-03 | -2.701E-04 |
| S19 | 0.000 | 3.32 | -5.361E-01 | 2.086E-02 | -2.010E-03 | -8.773E-06 | -6.478E-05 | 7.970E-05 |
| S20 | 0.000 | 0.00 | 0.000E+00 | 0.000E+00 | 0.000E+00 | 0.000E+00 | 0.000E+00 | 0.000E+00 |
| S21 | 0.000 | 0.00 | 0.000E+00 | 0.000E+00 | 0.000E+00 | 0.000E+00 | 0.000E+00 | 0.000E+00 |
| S22 | 0.000 | 0.00 | 0.000E+00 | 0.000E+00 | 0.000E+00 | 0.000E+00 | 0.000E+00 | 0.000E+00 |
| S23 | 0.000 | 0.00 | 0.000E+00 | 0.000E+00 | 0.000E+00 | 0.000E+00 | 0.000E+00 | 0.000E+00 |
| S24 | 0.000 | 0.00 | 0.000E+00 | 0.000E+00 | 0.000E+00 | 0.000E+00 | 0.000E+00 | 0.000E+00 |

| Surface number | $A_6$ | $A_7$ | $A_8$ | $A_9$ | $A_{10}$ | $A_{11}$ | $A_{12}$ | $A_{13}$ |
|---|---|---|---|---|---|---|---|---|
| S0 | 0.000E+00 | 0.000E+00 | 0.000E+00 | 0.000E+00 | 0.000E+00 | 0.000E+00 | 0.000E+00 | 0.000E+00 |
| S1 | 0.000E+00 | 0.000E+00 | 0.000E+00 | 0.000E+00 | 0.000E+00 | 0.000E+00 | 0.000E+00 | 0.000E+00 |
| S2 | 3.240E-04 | -1.042E-04 | -4.159E-05 | 2.833E-05 | -3.919E-06 | -3.075E-08 | 0.000E+00 | 0.000E+00 |
| S3 | 1.417E-03 | -9.165E-04 | 1.004E-04 | 2.799E-05 | -3.899E-06 | -2.638E-07 | 0.000E+0 0 | 0.000E+0 0 |
| S4 | 5.345E-04 | -5.232E-04 | 6.012E-05 | 0.000E+0 0 | 0.000E+0 0 | 0.000E+0 0 | 0.000E+0 0 | 0.000E+0 0 |
| S5 | -1.827E-04 | 2.091E-05 | -4.383E-05 | 0.000E+0 0 | 0.000E+0 0 | 0.000E+0 0 | 0.000E+0 0 | 0.000E+0 0 |
| S6 | 0.000E+0 0 | 0.000E+0 0 | 0.000E+0 0 | 0.000E+0 0 | 0.000E+0 0 | 0.000E+0 0 | 0.000E+0 0 | 0.000E+0 0 |
| S7 | 0.000E+0 0 | 0.000E+0 0 | 0.000E+0 0 | 0.000E+0 0 | 0.000E+0 0 | 0.000E+0 0 | 0.000E+0 0 | 0.000E+0 0 |
| S8 | -3.520E-04 | -2.460E-05 | 9.004E-05 | 4.472E-06 | 7.403E-06 | 1.311E-05 | -1.326E-05 | -6.059E-06 |
| S9 | -1.535E-03 | 3.171E-04 | 1.129E-04 | -6.052E-05 | 6.329E-05 | 3.506E-05 | -2.772E-05 | -6.686E-06 |
| S10 | -1.119E-03 | 3.175E-04 | 3.784E-05 | -1.230E-04 | 5.793E-05 | 3.354E-05 | -1.571E-05 | -1.771E-06 |
| S11 | -1.536E-03 | -3.872E-04 | -2.177E-04 | -2.712E-04 | -7.966E-05 | -3.296E-05 | -1.959E-05 | -6.037E-06 |
| S12 | -3.604E-05 | 4.572E-04 | 2.526E-04 | -6.125E-05 | -5.676E-05 | -1.409E-05 | -2.424E-06 | -6.731E-07 |
| S13 | 3.344E-05 | 1.618E-04 | 1.008E-04 | 3.010E-06 | 0.000E+0 0 | 0.000E+0 0 | 0.000E+0 0 | 0.000E+0 0 |
| S14 | 1.569E-03 | -2.706E-04 | -1.746E-05 | -5.820E-05 | 1.960E-05 | -1.085E-05 | -4.029E-06 | -2.684E-06 |
| S15 | 8.834E-04 | 7.313E-05 | -4.949E-05 | -5.362E-05 | -2.739E-07 | 0.000E+0 0 | 0.000E+0 0 | 0.000E+0 0 |
| S16 | -7.072E-04 | -4.211E-05 | 2.266E-04 | 4.809E-05 | 6.565E-05 | 7.354E-06 | 1.028E-05 | -7.880E-06 |
| S17 | 4.759E-04 | 8.719E-04 | 5.386E-04 | 1.185E-04 | -9.320E-05 | -8.504E-05 | -4.501E-05 | -2.970E-05 |
| S18 | -2.272E-05 | 4.729E-05 | -1.977E-05 | 2.561E-06 | 1.101E-06 | -5.550E-07 | 9.473E-08 | -1.582E-05 |
| S19 | -5.023E-05 | 2.236E-05 | -7.124E-06 | 1.548E-06 | -2.130E-07 | 1.639E-08 | -5.231E-10 | -7.683E-08 |
| S20 | 0.000E+0 0 | 0.000E+0 0 | 0.000E+0 0 | 0.000E+0 0 | 0.000E+0 0 | 0.000E+0 0 | 0.000E+0 0 | 0.000E+0 0 |
| S21 | 0.000E+0 0 | 0.000E+0 0 | 0.000E+0 0 | 0.000E+0 0 | 0.000E+0 0 | 0.000E+0 0 | 0.000E+0 0 | 0.000E+0 0 |
| S22 | 0.000E+0 0 | 0.000E+0 0 | 0.000E+0 0 | 0.000E+0 0 | 0.000E+0 0 | 0.000E+0 0 | 0.000E+0 0 | 0.000E+0 0 |
| S23 | 0.000E+0 0 | 0.000E+0 0 | 0.000E+0 0 | 0.000E+0 0 | 0.000E+0 0 | 0.000E+0 0 | 0.000E+0 0 | 0.000E+0 0 |
| S24 | 0.000E+0 0 | 0.000E+0 0 | 0.000E+0 0 | 0.000E+0 0 | 0.000E+0 0 | 0.000E+0 0 | 0.000E+0 0 | 0.000E+0 0 |

Table 5.5 shows a basic parameter of an optical path when the optical lens 10 is in the short-focus state according to the eleventh embodiment of this application; Table 5.6 shows a basic parameter of an optical path when the optical lens 10 is in the long-focus state according to the eleventh embodiment of this application; and Table 5.7 shows a related parameter and a value of $\xi$ of the optical lens 10 according to the eleventh embodiment of this application.

Table 5.5 Basic parameter of the optical path when the optical lens 10 is in the short-focus state according to the eleventh embodiment of this application

| Parameter | ImgH | $F_1$ | F/# | $f_{L01}$ | $f_{L11}$ | $f_{L12}$ | $f_{L13}$ | $f_{L21}$ | $f_{L221}$ | $f_{L222}$ |
|---|---|---|---|---|---|---|---|---|---|---|
| Value | 5.80 | 22.859 | 1.92 | 30.793 | 33.088 | - 20.714 | 11.788 | - 27.630 | - 178.074 | - 38.736 |
| Unit | mm | mm | mm | mm | mm | mm | mm | mm | mm | mm |

Table 5.6 Basic parameter of the optical path when the optical lens 10 is in the long-focus state according to the eleventh embodiment of this application

| Parameter | ImgH | $F_2$ | F/# | $f_{L01}$ | $f_{L02}$ | $f_{L11}$ | $f_{L12}$ | $f_{L13}$ | $f_{L21}$ | $f_{L221}$ | $f_{L222}$ |
|---|---|---|---|---|---|---|---|---|---|---|---|
| Value | 3.67 | 28.999 | 3.02 | 31.350 | -154.001 | 33.088 | -20.714 | 11.788 | -27.630 | -178.074 | -38.736 |
| Unit | mm | mm | mm | mm | mm | mm | mm | mm | mm | mm | mm |

Table 5.7 Related parameter and value of ξ of the optical lens 10 according to the eleventh embodiment of this application, where an object distance is INFINITY (infinity)

| Short-focus state | $f_{g01}$ | $f_{g1}$ | $f_{g011}$ | $F_1$ | $f_{g2}$ | $\beta_1$ | $\alpha_1$ | $\xi_1$ | L | k |
|---|---|---|---|---|---|---|---|---|---|---|
| | 30.793 | 15.621 | 13.753 | 22.859 | -13.437 | 0.447 | 1.662 | 2.212 | 8.218 | |
| Unit | mm | mm | mm | mm | mm | / | / | / | | |
| Long-focus state | $f_{g02}$ | $f_{g1}$ | $f_{g021}$ | $F_2$ | $f_{g2}$ | $\beta_2$ | $\alpha_2$ | $\xi_2$ | | 0.004 |
| | 38.946 | 15.621 | 17.434 | 28.999 | -13.437 | 0.448 | 1.663 | 2.212 | | |
| Unit | mm | mm | mm | mm | mm | / | / | / | mm | / |

In Table 5.5 to Table 5.7, $F_1$ is a first effective focal length of the optical lens 10, and $F_2$ is a second effective focal length of the optical lens 10; $f_{L011}$ is a focal length of the positive lens L011, $f_{L021}$ is a focal length of the positive lens L021, $f_{L022}$ is a focal length of the negative lens L022, $f_{L11}$ is a focal length of the first lens L11, $f_{L12}$ is a focal length of the second lens L12, $f_{L13}$ is a focal length of the third lens L13, $f_{L21}$ is a focal length of the fourth lens L21, $f_{L221}$ is a focal length of the negative lens L221, and $f_{L222}$ is a focal length of the negative lens L222; $f_{g01}$ is an effective focal length of the first front lens group G01, $f_{g02}$ is an effective focal length of the second front lens group G02, $f_{g1}$ is an effective focal length of the first rear lens group G1, and $f_{g2}$ is an effective focal length of the second rear lens group G2; $f_{g011}$ is a combined focal length of the first front lens group G01 and the first rear lens group G1, and $f_{g021}$ is a combined focal length of the second front lens group G02 and the first rear lens group G1; $\beta_1$ is a first focal length allocation ratio; $\beta_2$ is a second focal length allocation ratio; $\alpha_1$ is a third focal length allocation ratio, and $\alpha_1=F_1/f_{g011}$; $\alpha_2$ is a fourth focal length allocation ratio, and $\alpha_2=F_2/f_{g021}$; $\xi_1$ is a stroke compression ratio coefficient of the first rear lens group G1 when the optical lens 10 is in the short-focus state, and $\xi_2$ is a stroke compression ratio coefficient of the first rear lens group G1 when the optical lens 10 is in the long-focus state; L is a moving stroke of the first turning element 1 between the first position and the second position; and coefficient $k=[(\beta_1-1)^2/\beta_1]-[(\beta_2-1)^2/\beta_2]$.

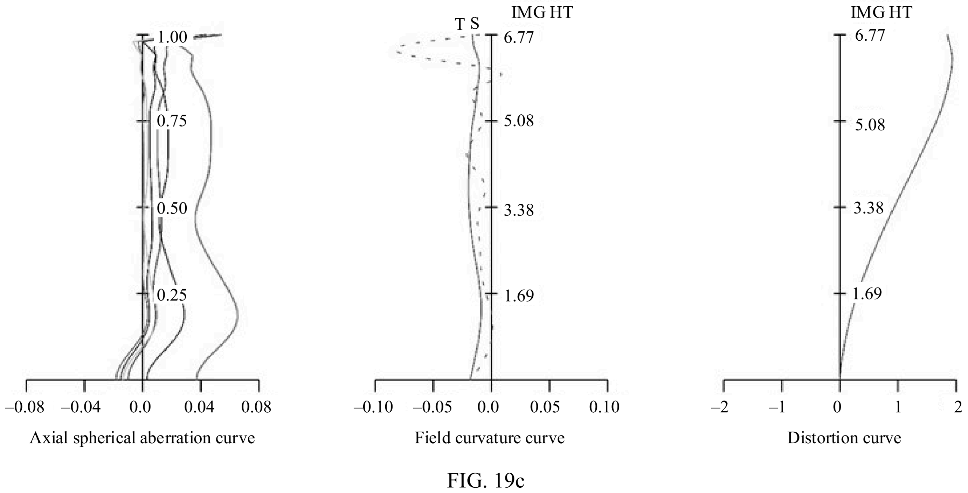

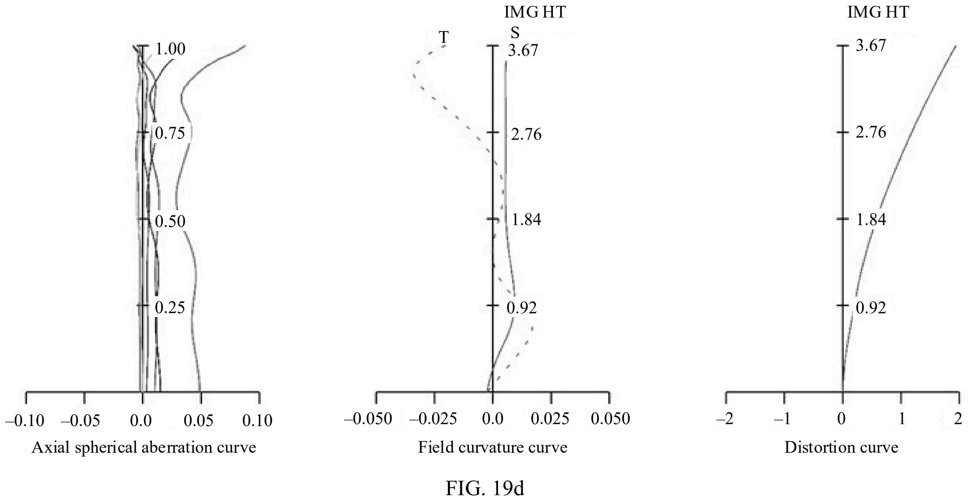

FIG. 19c shows an axial spherical aberration curve, a field curvature curve, and a distortion curve of the optical lens 10 in the short-focus state according to the eleventh embodiment of this application, and FIG. 19d shows an axial spherical aberration curve, a field curvature curve, and a distortion curve of the optical lens 10 in the long-focus state according to the eleventh embodiment of this application. FIG. 19c and FIG. 19d show axial spherical aberration curves, field curvature curves, and distortion curves corresponding to different system bands (including 650 nm, 610 nm, 555 nm, 510 nm, 470 nm, and 435 nm in the figures).

The axial spherical aberration curve in the figure shows a deviation of light of a corresponding wavelength emitted at a 0-degree field of view relative to an ideal image point after the light passes through the optical system, a horizontal coordinate is a deviation value in an optical axis direction, and a vertical coordinate is a normalized coordinate at a pupil. Deviation values in FIG. 19c and FIG. 19d both are relatively small, and correction of an axial spherical aberration of the optical lens is relatively good.

The field curvature curve in the figure shows a deviation of a convergence point of fine light beams in different fields of view from an ideal imaging plane, x is a light beam in a sagittal direction, y is a light beam in a meridian direction, a horizontal coordinate is a deviation value in an optical axis direction, and a vertical coordinate is a corresponding field of view. When a value of a field of view is excessively large, image quality of the field of view is relatively poor or a high-order aberration exists. As shown in FIG. 19c and FIG. 19d, field curvatures in the two directions are relatively small, and the system has a relatively good depth of focus.

The distortion curve in the figure indicates a relative offset between a convergence point (actual image height) of light beams in different fields of view and an ideal image height. The deviations shown in FIG. 19c and FIG. 19d are relatively small, so that it can be ensured that there is no obvious picture deformation.

Therefore, the optical lens 10 in the eleventh embodiment of this application implements relatively low light aberration control by using a proper surface type, a proper gap design, and the like, to obtain clear image quality.

Types of cross-sectional lines in the accompanying drawings of this application are intended to distinguish between different components, and should not be construed as a limitation on materials of the components. The accompanying drawings of this application are intended to show structural composition, and are not shown based on a proportion of an actual product.

Although this application is described with reference to some embodiments, it does not mean that a feature of this application is only limited to this implementation. On the contrary, a purpose of describing this application with reference to an implementation is to cover another option or modification that may be derived based on claims of this application. To provide an indepth understanding of this application, the following descriptions include a plurality of specific details. This application may be alternatively implemented without using these details. In addition, to avoid confusion or blurring a focus of this application, some specific details are omitted from the descriptions. It should be noted that embodiments in this application and features in embodiments may be mutually combined in the case of no conflict.

In embodiments of this application, terms "first", "second", "third", "fourth", and "fifth" are merely intended for a purpose of description, and shall not be understood as an indication or implication of relative importance or an implicit indication of a quantity of indicated technical features. Therefore, a feature limited by "first", "second", "third", "fourth", or "fifth" may explicitly or implicitly include one or more features.

In embodiments of this application, "and/or" describes only an association relationship between associated objects and indicates that three relationships may exist. For example, A and/or B may indicate the following three cases: Only A exists, both A and B exist, and only B exists. In addition, a character "/" in this specification generally indicates an "or" relationship between the associated objects.

In the descriptions of embodiments of this application, it should be noted that terms "mounting" and "connection" should be understood in a broad sense unless there is a clear stipulation and limitation. For example, "connection" may be a detachable connection, a nondetachable connection, a direct connection, or an indirect connection through an intermediate medium. Orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. In addition, "a plurality of" means at least two.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but not limited to", unless otherwise specifically emphasized in another manner.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

**Claims**

1. An optical lens, comprising a front lens group (G0), a first turning element (1), a first rear lens group (G1), and a second rear lens group (G2) arranged in a direction from an object side to an image side, wherein

   the front lens group (G0) comprises a first front lens group (G01) and a second front lens group (G02) arranged in a first direction (X), the first direction (X) is parallel to an optical axis of the first rear lens group (G1), and the first turning element (1) is capable of moving between a first position and a second position in the first direction (X); when the first turning element (1) is at the first position, the first turning element (1) is located on an image side of the first front lens group (G01), the first turning element (1) is configured to reflect an emergent light beam of the first front lens group (G01) to the first rear lens group (G1), and the optical lens has a first effective focal length $F_1$; and when the first turning element (1) is at the second position, the first turning element (1) is located on an image side of the second front lens group (G02), the first turning element (1) is configured to reflect an emergent light beam of the second front lens group (G02) to the first rear lens group (G1), the optical lens has a second effective focal length $F_2$, the second effective focal length $F_2$ is greater than the first effective focal length $F_1$, and a moving stroke L of the first turning element (1) between the first position and the second position satisfies: $L \leq 23$ mm.

2. The optical lens according to claim 1, wherein

   when the first turning element (1) is at the first position, a total track length of an optical system comprising the first front lens group (G01), the first turning element (1), the first rear lens group (G1), and the second rear lens group (G2) is $TTL_1$; when the first turning element (1) is at the second position, a total track length of an optical system comprising the second front lens group (G02), the first turning element (1), the first rear lens group (G1), and the second rear lens

group (G2) is $TTL_2$; and

when the first turning element (1) moves between the first position and the second position, an image plane position of the optical lens remains unchanged; and $TTL_1$ and $TTL_2$ satisfy: $TTL_2-TTL_1 \leq 23$ mm.

3. The optical lens according to claim 2, wherein

an effective focal length $f_{g01}$ of the first front lens group (G01), an effective focal length $f_{g02}$ of the second front lens group (G02), and an effective focal length $f_{g1}$ of the first rear lens group (G1) satisfy:

$$TTL_2-TTL_1=|f_{g02}-f_{g01}+k \cdot f_{g1}|,$$

wherein k satisfies: $0 \leq |k| < 1$.

4. The optical lens according to claim 3, wherein

the effective focal length $f_{g01}$ of the first front lens group (G01), the effective focal length $f_{g02}$ of the second front lens group (G02), a combined focal length $f_{g011}$ of the first front lens group (G01) and the first rear lens group (G1), and a combined focal length $f_{g021}$ of the second front lens group (G02) and the first rear lens group (G1) satisfy:

$$k=[(\beta_1-1)^2/\beta_1]-[(\beta_2-1)^2/\beta_2]; \ \beta_1=f_{g011}/f_{g01};$$

and $\beta_2=f_{g021}/f_{g02}$.

5. The optical lens according to claim 3 or 4, wherein

k satisfies: $0.28 \leq k \leq 0.46$; or $0 \leq k \leq 0.005$.

6. The optical lens according to any one of claims 2 to 5, wherein

$TTL_1$ and $TTL_2$ satisfy: $TTL_2-TTL_1 \geq 8.1$ mm.

7. The optical lens according to any one of claims 1 to 6, wherein

the effective focal length $f_{g01}$ of the first front lens group (G01) and the effective focal length $f_{g02}$ of the second front lens group (G02) satisfy:

$$4.5 \ mm \leq |f_{g02}-f_{g01}| \leq 12.9 \ mm.$$

8. The optical lens according to any one of claims 1 to 7, wherein

the effective focal length $f_{g02}$ of the second front lens group (G02) is greater than the effective focal length $f_{g01}$ of the first front lens group (G01).

9. The optical lens according to any one of claims 1 to 8, wherein

a light shielding apparatus (2) is disposed on an object side of the first turning element (1); when the first turning element (1) is at the first position, the light shielding apparatus (2) is configured to shield a light beam emitted to the image side of the second front lens group (G02); and when the first turning element (1) is at the second position, the light shielding apparatus (2) is configured to shield a light beam emitted to the image side of the first front lens group (G01).

10. The optical lens according to claim 9, wherein

the light shielding apparatus (2) comprises a first variable aperture stop (21) and a second variable aperture stop (22);

the first variable aperture stop (21) is disposed on an object side or the image side of the first front lens group (G01), or disposed between lenses of the first front lens group (G01); and

the second variable aperture stop (22) is disposed on an object side or the image side of the second front lens group (G02), or disposed between lenses of the second front lens group (G02).

11. The optical lens according to claim 9, wherein

the light shielding apparatus (2) comprises a shielding plate (23); and

the shielding plate (23) is disposed on an image side of the front lens group (G0) and is capable of moving relative to the front lens group (G0); when the first turning element (1) is at the first position, the shielding plate (23) moves to the image side of the second front lens group (G02); and when the first turning element (1) is at the second position, the shielding plate (23) moves to the image side of the first front lens group (G01); or

the shielding plate (23) is disposed on an object side of the front lens group (G0) and is capable of moving relative to the front lens group (G0); when the first turning element (1) is at the first position, the shielding plate (23) moves to an object side of the second front lens group (G02); and when the first turning element (1) is at the second position, the shielding plate (23) moves to an object side of the first front lens group (G01).

12. The optical lens according to any one of claims 1 to 11, wherein
the first rear lens group (G1) is a movable lens group and is capable of moving relative to the front lens group (G0) in the first direction (X), and the second rear lens group (G2) is a fixed lens group and is fixed relative to the front lens group (G0) in the first direction (X).

13. The optical lens according to claim 12, wherein

when the first turning element (1) is at the first position, the effective focal length $f_{g01}$ of the first front lens group (G01), the combined focal length $f_{g011}$ of the first front lens group (G01) and the first rear lens group (G1), and the first effective focal length $F_1$ satisfy: $\xi_1=[1-\beta_1^2]\alpha_1^2$, $\beta_1=f_{g011}/f_{g01}$, $\alpha_1=F_1/f_{g011}$, and $0<\xi_1\leq3$; and

when the first turning element (1) is at the second position, the effective focal length $f_{g02}$ of the second front lens group (G02), the combined focal length $f_{g021}$ of the second front lens group (G02) and the first rear lens group (G1), and the second effective focal length $F_2$ satisfy: $\xi_2=[1-\beta_2^2]\alpha_2^2$, $\beta_2=f_{g021}/f_{g02}$, $\alpha_2=F_2/f_{g021}$, and $0<\xi_2\leq3$.

14. The optical lens according to claim 12 or 13, wherein

the effective focal length $f_{g01}$ of the first front lens group (G01) and the combined focal length $f_{g011}$ of the first front lens group (G01) and the first rear lens group (G1) satisfy: $0<\beta_1\leq0.5$, wherein $\beta_1=f_{g011}/f_{g01}$; and

the effective focal length $f_{g02}$ of the second front lens group (G02) and the combined focal length $f_{g021}$ of the second front lens group (G02) and the first rear lens group (G1) satisfy: $0<\beta_2\leq0.5$, wherein $\beta_2=f_{g021}/f_{g02}$.

15. The optical lens according to claim 12 or 13, wherein

the effective focal length $f_{g01}$ of the first front lens group (G01) and the combined focal length $f_{g011}$ of the first front lens group (G01) and the first rear lens group (G1) satisfy: $0.75\leq1-\beta_1^2<1$, wherein $\beta_1=f_{g011}/f_{g01}$; and

the effective focal length $f_{g02}$ of the second front lens group (G02) and the combined focal length $f_{g021}$ of the second front lens group (G02) and the first rear lens group (G1) satisfy: $0.75\leq1-\beta_2^2<1$, wherein $\beta_2=f_{g021}/f_{g02}$.

16. The optical lens according to any one of claims 12 to 15, wherein

the combined focal length $f_{g011}$ of the first front lens group (G01) and the first rear lens group (G1) and the first effective focal length $F_1$ satisfy: $0<\alpha_1\leq2$, wherein $\alpha_1=F_1/f_{g011}$; and

the combined focal length $f_{g021}$ of the second front lens group (G02) and the first rear lens group (G1) and the second effective focal length $F_2$ satisfy: $0<\alpha_2\leq2$, wherein $\alpha_2=F_2/f_{g021}$.

17. The optical lens according to any one of claims 1 to 16, wherein
focal powers of the first front lens group (G01), the second front lens group (G02), and the first rear lens group (G1) all are positive, and a focal power of the second rear lens group (G2) is negative.

18. The optical lens according to claim 17, wherein

the first front lens group (G01) and the second front lens group (G02) each comprise at least one positive lens; the first rear lens group (G1) comprises a first lens (L11), a second lens (L12), and a third lens (L13) in the direction from the object side to the image side, the first lens (L11) and the third lens (L13) each have a positive focal power, the second lens (L12) has a negative focal power, and there is a gap between adjacent two of the first lens (L11), the second lens (L12), and the third lens (L13); and

the second rear lens group (G2) comprises a fourth lens (L21) and a fifth lens (L22) in the direction from the object side to the image side, the fourth lens (L21) has a negative focal power or a positive focal power, the fifth lens (L22) has a negative focal power, and there is a gap between the fourth lens (L21) and the fifth lens (L22).

19. The optical lens according to claim 18, wherein
the second lens (L12) comprises one positive lens and one negative lens that are spaced apart.

20. The optical lens according to claim 18 or 19, wherein
the fifth lens (L22) comprises one positive lens and one negative lens that are spaced apart; or the fifth lens (L22) comprises two negative lenses that are spaced apart.

21. The optical lens according to any one of claims 1 to 20, wherein
the optical lens further comprises a second turning element (3) disposed on an image side of the second rear lens group (G2), the second turning element (3) is a prism and has a prism incident surface (31) and a prism emergent surface (32), the prism incident surface (31) is disposed facing a side on which the second rear lens group (G2) is located, the prism emergent surface (32) is disposed facing a side of an image plane of the optical lens, and the prism emergent surface (32) is obliquely disposed relative to an optical axis of the second rear lens group (G2).

22. A camera module, comprising a photosensitive element (20) and the optical lens (10) according to any one of claims 1 to 21, wherein the photosensitive element (20) is disposed on an image side of the optical lens (10).

23. An electronic device, comprising a housing and the camera module (100) according to claim 22, wherein the camera module (100) is mounted on the housing (200).

Image principal plane

FIG. 1a

Object principal plane

FIG. 1b

Object plane    Object principal plane    Image principal plane    Image plane

H    H'

Object distance U    Image distance V

## FIG. 1c

01

0111    0113    02    03

011

0122    O

0123    0112

012

0121

X    Y

## FIG. 2a

FIG. 2b

FIG. 3

FIG. 4

EP 4 726 456 A1

FIG. 5

FIG. 6

FIG. 7

FIG. 8

FIG. 9

EP 4 726 456 A1

FIG. 10

EP 4 726 456 A1

FIG. 11

FIG. 12

FIG. 13

FIG. 14a

FIG. 14b

FIG. 14c

EP 4 726 456 A1

FIG. 14d

FIG. 15a

FIG. 15b

Axial spherical aberration curve

FIG. 15c

Field curvature curve

Distortion curve

FIG. 15d

Axial spherical aberration curve

FIG. 15e

Field curvature curve

Distortion curve

FIG. 15f

FIG. 16a

FIG. 16b

Axial spherical aberration curve

Field curvature curve

Distortion curve

FIG. 16c

EP 4 726 456 A1

Axial spherical aberration curve

Field curvature curve

Distortion curve

FIG. 16d

FIG. 17a

FIG. 17b

EP 4 726 456 A1

Axial spherical aberration curve

FIG. 17c

Field curvature curve

Distortion curve

FIG. 17d

Axial spherical aberration curve

FIG. 17e

Field curvature curve

Distortion curve

FIG. 17f

FIG. 18a

EP 4 726 456 A1

FIG. 18b

EP 4 726 456 A1

Axial spherical aberration curve

Field curvature curve

Distortion curve

FIG. 18c

FIG. 18d

FIG. 19a

EP 4 726 456 A1

FIG. 19b

EP 4 726 456 A1

Axial spherical aberration curve

Field curvature curve

Distortion curve

T S

IMG HT

IMG HT

1.00

0.75

0.50

0.25

6.77

5.08

3.38

1.69

6.77

5.08

3.38

1.69

−0.08    −0.04    0.0    0.04    0.08

−0.10    −0.05    0.0    0.05    0.10

−2    −1    0    1    2

FIG. 19c

IMG HT
S
T
3.67

2.76

1.84

0.92

1.00

0.75

0.50

0.25

−0.10  −0.05    0.0    0.05    0.10

Axial spherical aberration curve

−0.050  −0.025   0.0   0.025   0.050

Field curvature curve

IMG HT
3.67

2.76

1.84

0.92

−2    −1    0    1    2

Distortion curve

FIG. 19d

## INTERNATIONAL SEARCH REPORT

| International application No. |
|---|
| **PCT/CN2024/116140** |

**A. CLASSIFICATION OF SUBJECT MATTER**

G02B13/16(2006.01)i; G02B17/00(2006.01)i; G02B15/00(2006.01)i; H04N23/00(2023.01)i

According to International Patent Classification (IPC) or to both national classification and IPC

**B. FIELDS SEARCHED**

Minimum documentation searched (classification system followed by classification symbols)

IPC: G02B13/-、G02B17/-、G02B15/-、H04N23/-

Documentation searched other than minimum documentation to the extent that such documents are included in the fields searched

Electronic data base consulted during the international search (name of data base and, where practicable, search terms used)

CNABS, CNTXT, ENTXTC, USTXTC, VEN, CNKI, Web of science: 华为技术有限公司, 叶海水, 王伟, 王恒, 唐玮, 镜, lens+, 折转, 折光, 反射, 反光, 折叠, 棱镜, 转折, reflect, prism?, fold+, 移动, 平移, 滑移, 运动, 滑动, 切换, mov+, shift+, 变焦, 长焦, 短焦, 调焦, 对焦, 焦距, 远景, 近景, 对焦, focus+, switch+, 两, 二, 双, 三, 多, dual+, two, multi+, 成像, 图像, 相机, 摄像, 拍照, 拍摄, imag+, camera?, 总长, TTL

**C. DOCUMENTS CONSIDERED TO BE RELEVANT**

| Category* | Citation of document, with indication, where appropriate, of the relevant passages | Relevant to claim No. |
|---|---|---|
| X | TW 200734676 A (CHUAN LIANG INDUSTRIAL CO., LTD.) 16 September 2007 (2007-09-16) page 5, paragraph 1 to page 11, paragraph 2, and figures 1-4 | 1-2, 6-12, 17-20, 22-23 |
| Y | TW 200734676 A (CHUAN LIANG INDUSTRIAL CO., LTD.) 16 September 2007 (2007-09-16) page 5, paragraph 1 to page 11, paragraph 2, and figures 1-4 | 21 |
| Y | CN 111399181 A (ZHEJIANG SUNNY OPTICS CO., LTD.) 10 July 2020 (2020-07-10) description, paragraphs [0066]-[0077], and figure 1 | 21 |
| A | CN 101021611 A (PANASONIC CORP.) 22 August 2007 (2007-08-22) entire document | 1-23 |
| A | CN 112130290 A (ZHEJIANG SUNNY OPTICS CO., LTD.) 25 December 2020 (2020-12-25) entire document | 1-23 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 October 2024** | **24 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/116140**

| C. | DOCUMENTS CONSIDERED TO BE RELEVANT | |
|---|---|---|
| Category* | Citation of document, with indication, where appropriate, of the relevant passages | Relevant to claim No. |
| A | CN 113671676 A (NINGBO SUNNY OPTICAL TECHNOLOGY CO., LTD.) 19 November 2021 (2021-11-19)<br>entire document | 1-23 |
| A | CN 201749247 U (FUJIFILM CORP. et al.) 16 February 2011 (2011-02-16)<br>entire document | 1-23 |
| A | JP 2006126348 A (NIKON CORP.) 18 May 2006 (2006-05-18)<br>entire document | 1-23 |
| A | JP 2008051928 A (KONICA MINOLTA OPTO. INC.) 06 March 2008 (2008-03-06)<br>entire document | 1-23 |
| A | US 2005041300 A1 (ARC DESIGN, INC.) 24 February 2005 (2005-02-24)<br>entire document | 1-23 |
| A | US 2020096745 A1 (SINTAI OPTICAL (SHENZHEN) CO., LTD.; ASIA OPTICAL CO., INC.) 26 March 2020 (2020-03-26)<br>entire document | 1-23 |
| A | WO 2022088651 A1 (HUAWEI TECHNOLOGIES CO., LTD.) 05 May 2022 (2022-05-05)<br>entire document | 1-23 |

Form PCT/ISA/210 (second sheet) (July 2022)

INTERNATIONAL SEARCH REPORT
Information on patent family members

International application No.

**PCT/CN2024/116140**

| Patent document cited in search report | | | Publication date (day/month/year) | Patent family member(s) | | | Publication date (day/month/year) |
|---|---|---|---|---|---|---|---|
| TW | 200734676 | A | 16 September 2007 | TWI | 294524 | B | 11 March 2008 |
| CN | 111399181 | A | 10 July 2020 | US | 2021333516 | A1 | 28 October 2021 |
| CN | 101021611 | A | 22 August 2007 | US | 2008130133 | A1 | 05 June 2008 |
| | | | | US | 7626766 | B2 | 01 December 2009 |
| | | | | JP | 2007212963 | A | 23 August 2007 |
| | | | | JP | 4822512 | B2 | 24 November 2011 |
| | | | | US | 2009262426 | A1 | 22 October 2009 |
| | | | | US | 7791801 | B2 | 07 September 2010 |
| | | | | US | 2007188631 | A1 | 16 August 2007 |
| | | | | US | 7307797 | B2 | 11 December 2007 |
| CN | 112130290 | A | 25 December 2020 | | None | | |
| CN | 113671676 | A | 19 November 2021 | | None | | |
| CN | 201749247 | U | 16 February 2011 | US | 2011044673 | A1 | 24 February 2011 |
| | | | | JP | 2011043679 | A | 03 March 2011 |
| | | | | TWM | 398127 | U | 11 February 2011 |
| JP | 2006126348 | A | 18 May 2006 | | None | | |
| JP | 2008051928 | A | 06 March 2008 | | None | | |
| US | 2005041300 | A1 | 24 February 2005 | TW | 200508771 | A | 01 March 2005 |
| | | | | TWI | 244572 | B | 01 December 2005 |
| | | | | US | 6924948 | B2 | 02 August 2005 |
| US | 2020096745 | A1 | 26 March 2020 | | None | | |
| WO | 2022088651 | A1 | 05 May 2022 | | None | | |

Form PCT/ISA/210 (patent family annex) (July 2022)

**REFERENCES CITED IN THE DESCRIPTION**

**Patent documents cited in the description**

- CN 202410224770

- CN 202410875013